(19) Europäisches Patentamt / European Patent Office / Office européen des brevets

(11) **EP 4 079 459 A1**

(12) **EUROPEAN PATENT APPLICATION**
published in accordance with Art. 153(4) EPC

(43) Date of publication:
**26.10.2022 Bulletin 2022/43**

(21) Application number: **20903565.8**

(22) Date of filing: **03.12.2020**

(51) International Patent Classification (IPC):
**B25J 3/00** (2006.01)        **B25J 13/02** (2006.01)
**H04Q 9/00** (2006.01)        **G06F 3/01** (2006.01)

(52) Cooperative Patent Classification (CPC):
**B25J 3/00; B25J 13/02; G06F 3/01; H04Q 9/00**

(86) International application number:
**PCT/JP2020/044985**

(87) International publication number:
**WO 2021/124902 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2019   JP 2019227550**

(71) Applicant: **Sony Group Corporation**
**Tokyo 108-0075 (JP)**

(72) Inventor: **TSUKAGOSHI, Ikuo**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE AND METHOD**

(57)    The present disclosure relates to an information processing device and method capable of performing remote control with higher accuracy.

With respect to a plurality of observation points of a device serving as an interface, haptic data including at least one piece of kinesthetic data including information on a kinesthetic sensation detected at the observation points, tactile data including information on a tactile sensation detected at the observation points, and force data including information on a magnitude of force applied to the observation points is transmitted. The present disclosure can be applied to, for example, an information processing device, a control device, an electronic apparatus, an information processing method, a program, or the like.

Fig. 6

## Description

[Technical Field]

The present disclosure relates to an information processing device and method, and in particular, to an information processing device and method capable of performing remote control with higher accuracy.

[Background Art]

Conventionally, systems for performing remote control by transmitting kinesthetic data, tactile data, or the like have been conceived (refer to NPL 1 and NPL 2, for example). In recent years, more accurate remote control has been required with the improvement of information processing technology.

[Citation List]

[Non Patent Literature]

[NPL 1]
"Definition and Representation of Haptic-Tactile Essence For Broadcast Production Applications," SMPTE ST2100-1, 2017
[NPL 2]
P. Hinterseer, S. Hirche, S. Chaudhuri, E. Steinbach, M. Buss, "Perception-based data reduction and transmission of haptic data in telepresence and teleaction systems," IEEE Transactions on Signal Processing

[Summary]

[Technical Problem]

However, only information of a single observation point was transmitted in conventional cases. Therefore, it was difficult to sufficiently improve the accuracy of remote control, and only simple operation could be reproduced on a remote side.

In view of such circumstances, the present disclosure enables more accurate remote control.

[Solution to Problem]

An information processing device of one aspect of the present technology is an information processing device including a transmission unit that transmits haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface.

An information processing method of one aspect of the present technology is an information processing method including transmitting haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface.

An information processing device of another aspect of the present technology is an information processing device including a reception unit that receives haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface, and a driving unit that drives a plurality of driven points of a device serving as an interface on the basis of the haptic data received by the reception unit.

An information processing method of another aspect of the present technology is an information processing method including receiving haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface, and driving a plurality of driven points of a device serving as an interface on the basis of the received haptic data.

In the information processing device and method of one aspect of the present technology, with respect to a plurality of observation points of a device serving as an interface, haptic data including at least one piece of kinesthetic data including information on a kinesthetic sensation detected at the observation points, tactile data including information on a tactile sensation detected at the observation points, and force data including information on a magnitude of force applied to the observation points is transmitted.

In the information processing device and method of another aspect of the present technology, with respect to a plurality of observation points of a device serving as an interface, haptic data including at least one piece of kinesthetic data including information on kinesthetic sensation detected at the observation points, tactile data including information on a tactile sensation detected at the observation points, and force data including information on a magnitude of force applied to the observation points is received, and a plurality of driven points of a device serving as an interface are driven on the basis of the received haptic data.

[Brief Description of Drawings]

[Fig. 1]

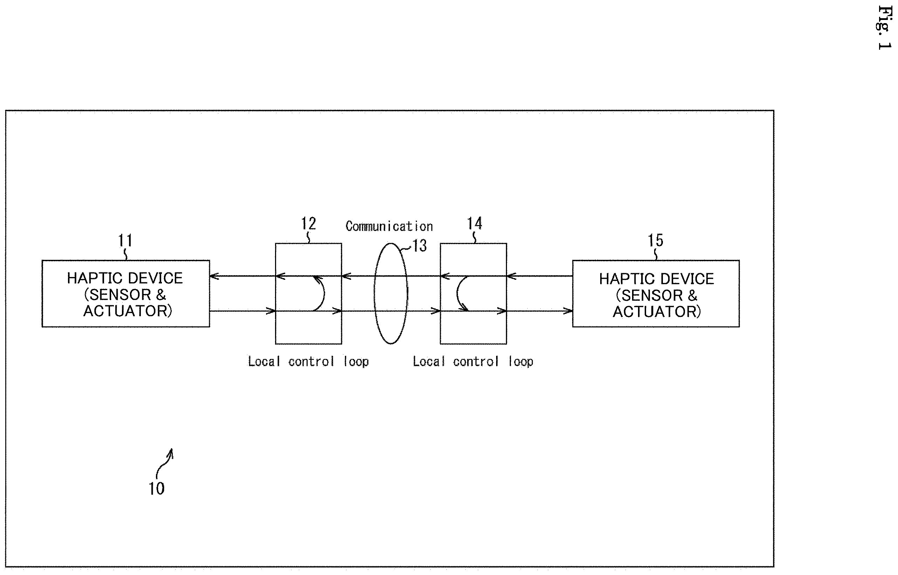

Fig. 1 is a diagram illustrating an overview of a haptic system.
[Fig. 2]

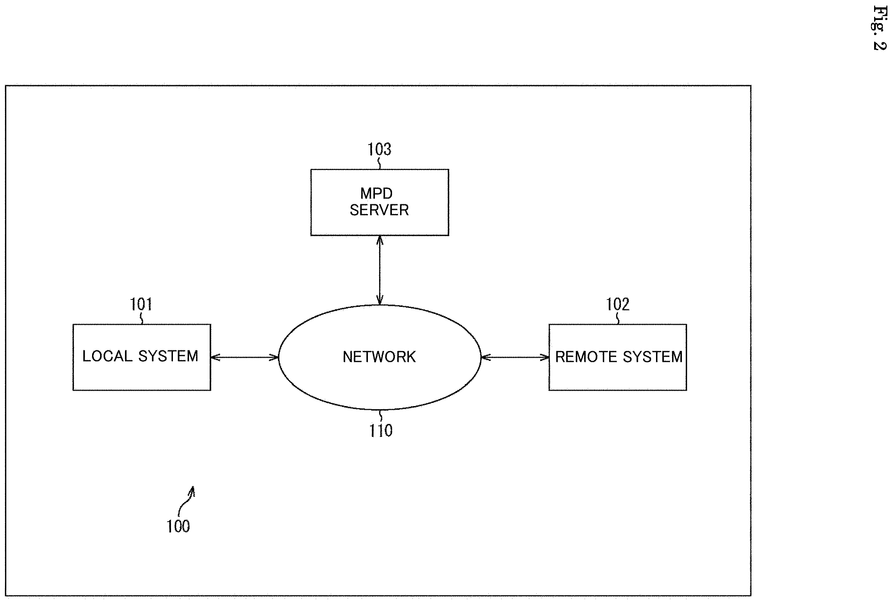

Fig. 2 is a diagram illustrating an example of a remote control system.
[Fig. 3]

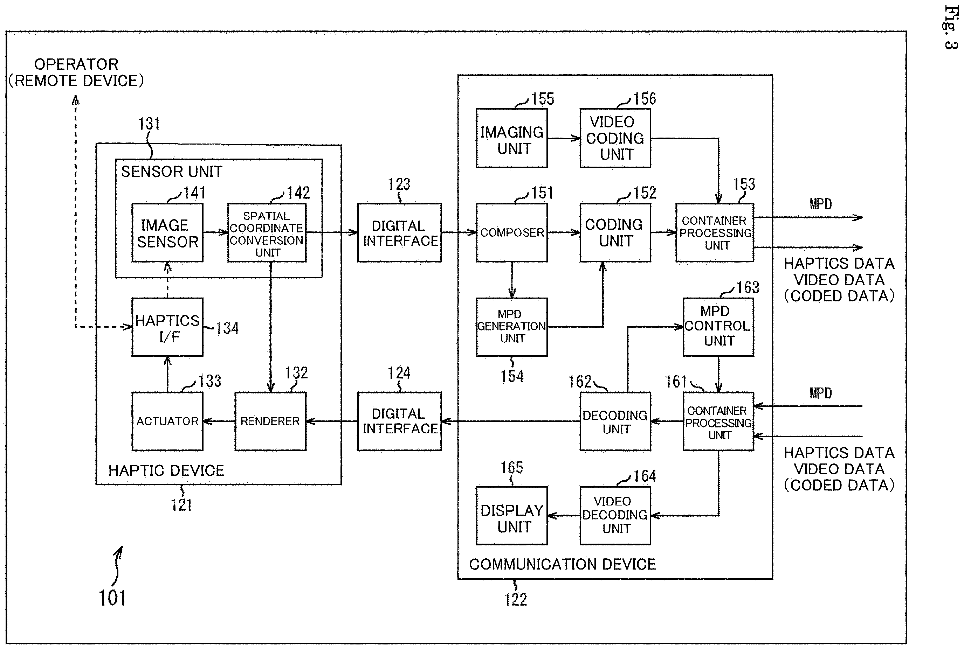

Fig. 3 is a block diagram showing a main configuration example of a local system.
[Fig. 4]

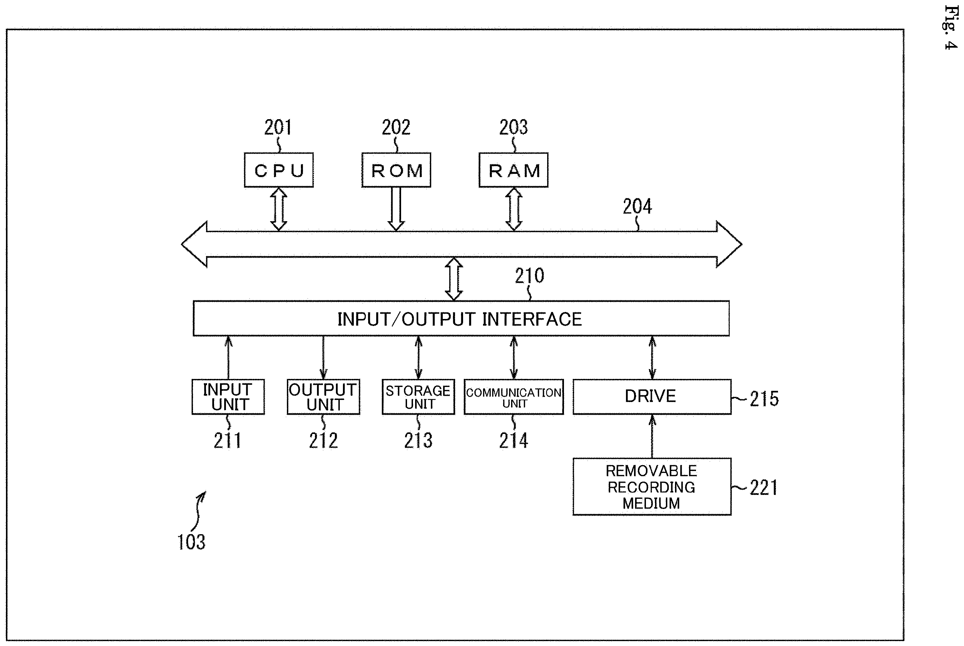

Fig. 4 is a block diagram showing a main configuration example of an MPD system.
[Fig. 5]

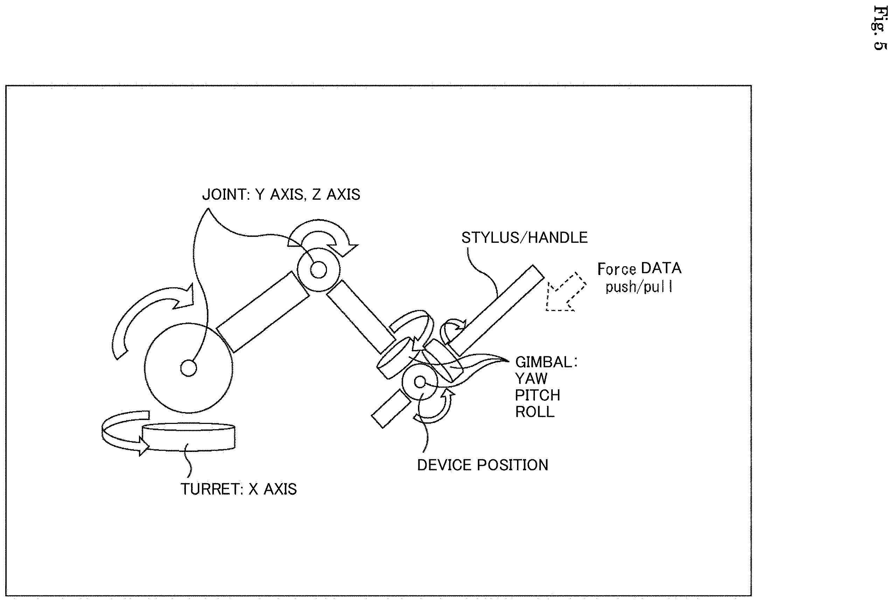

Fig. 5 is a diagram illustrating an example of a haptic interface.
[Fig. 6]

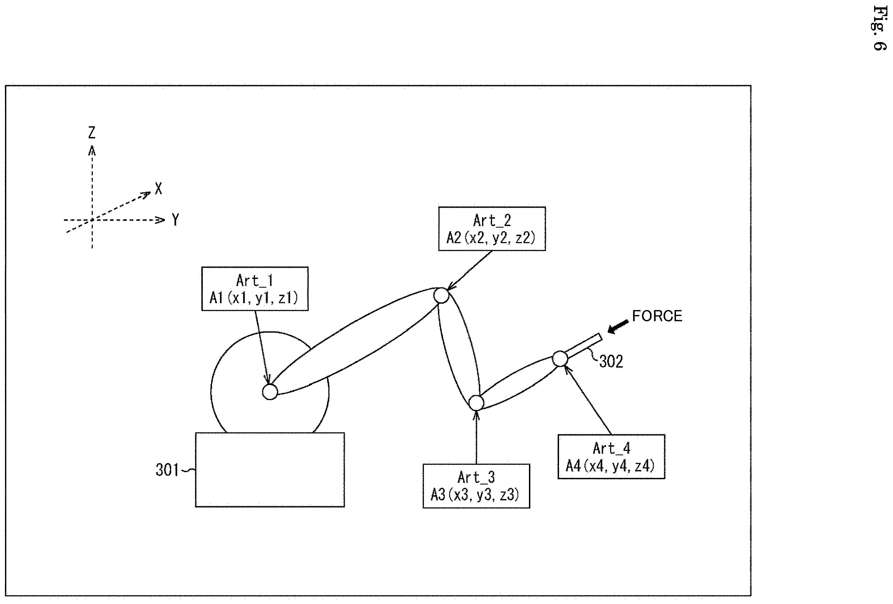

Fig. 6 is a diagram showing an example of a three-dimensional stimulation device.
[Fig. 7]

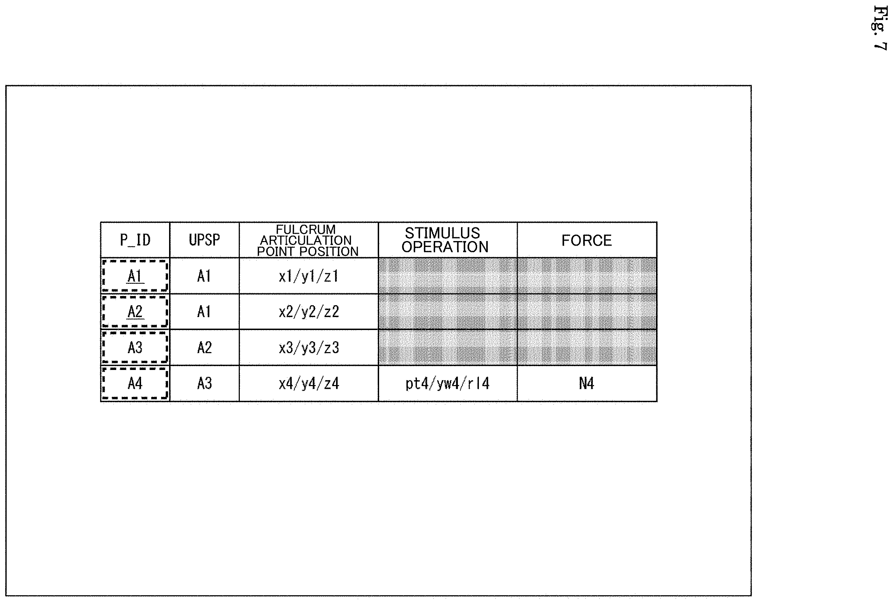

Fig. 7 is a diagram showing an example of haptic data.
[Fig. 8]

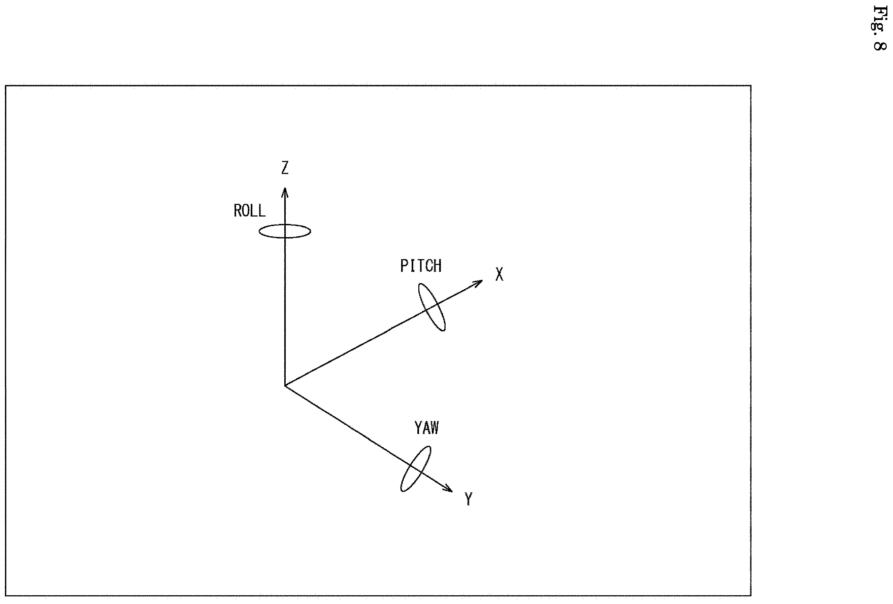

Fig. 8 is a diagram showing an example of stimulus operation data.
[Fig. 9]

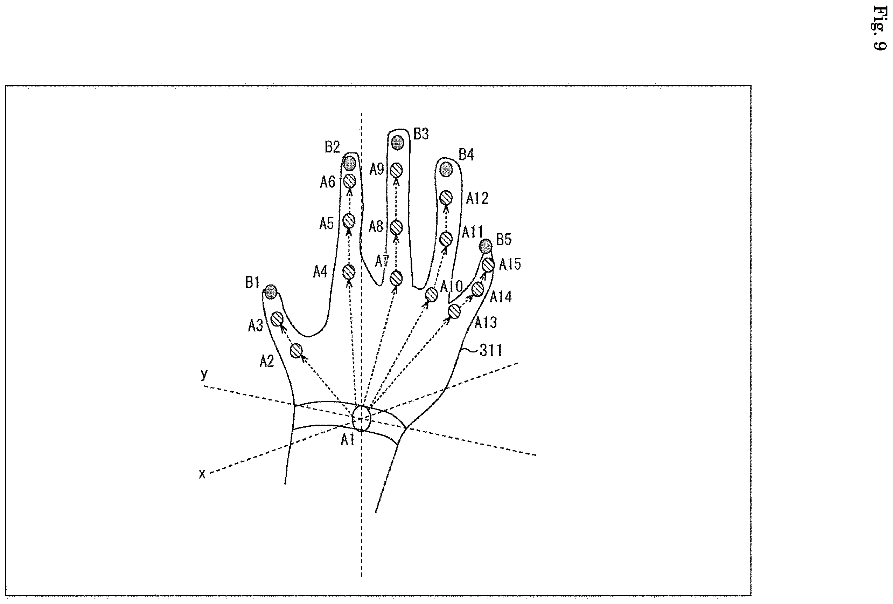

Fig. 9 is a diagram showing an example of a glove-type device.
[Fig. 10]

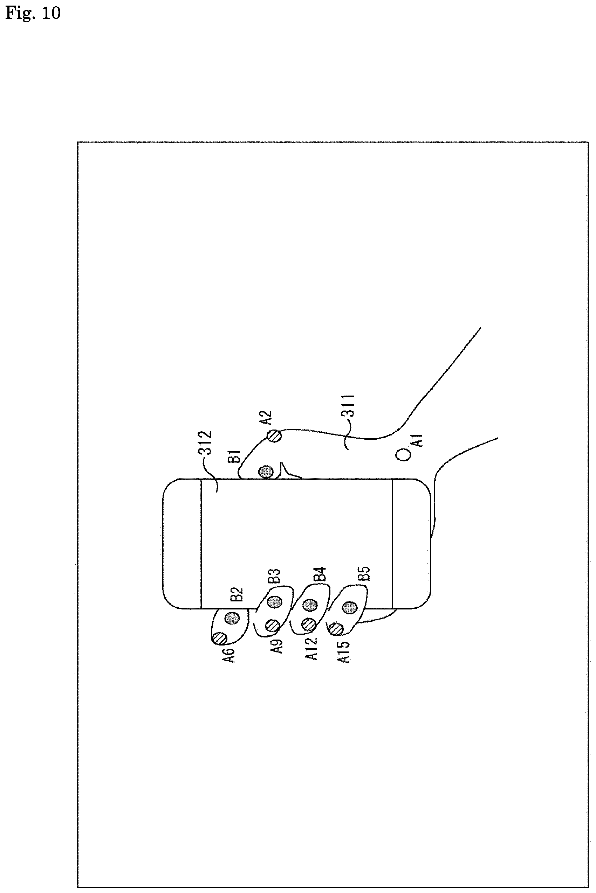

Fig. 10 is a diagram showing a usage example of the glove-type device.
[Fig. 11]

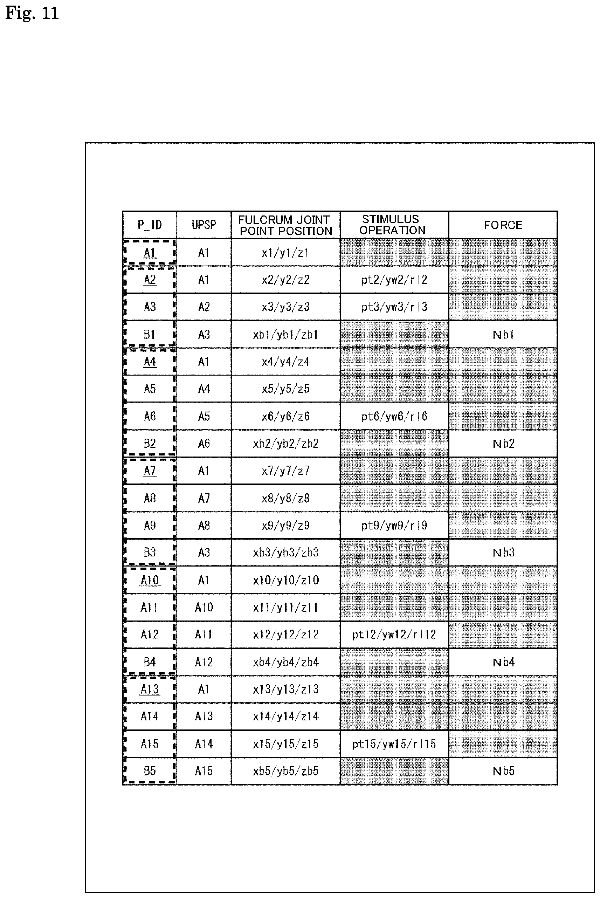

Fig. 11 is a diagram showing an example of haptic data.
[Fig. 12]

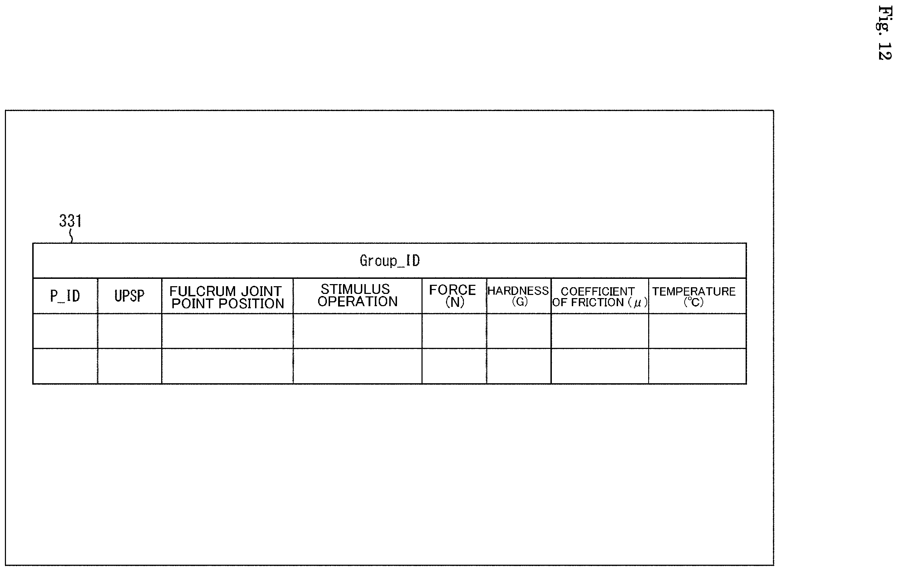

Fig. 12 is a diagram showing an example of a KT map.
[Fig. 13]

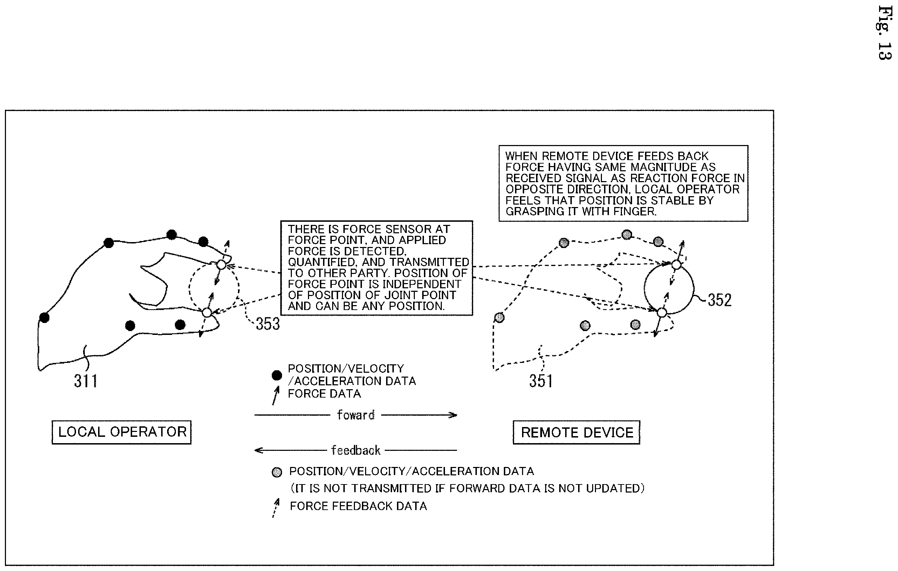

Fig. 13 is a diagram showing an application example of a remote control system.
[Fig. 14]

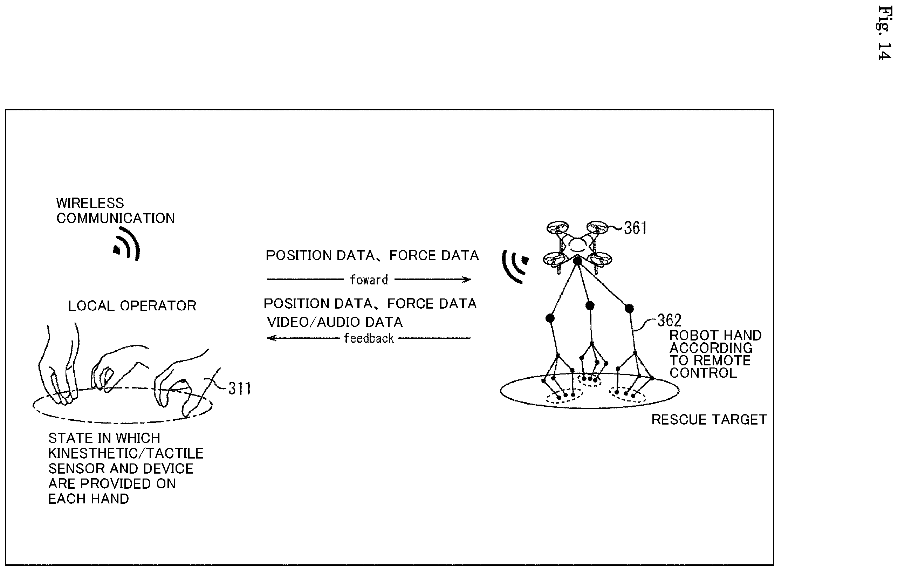

Fig. 14 is a diagram showing an application example of a remote control system.
[Fig. 15]

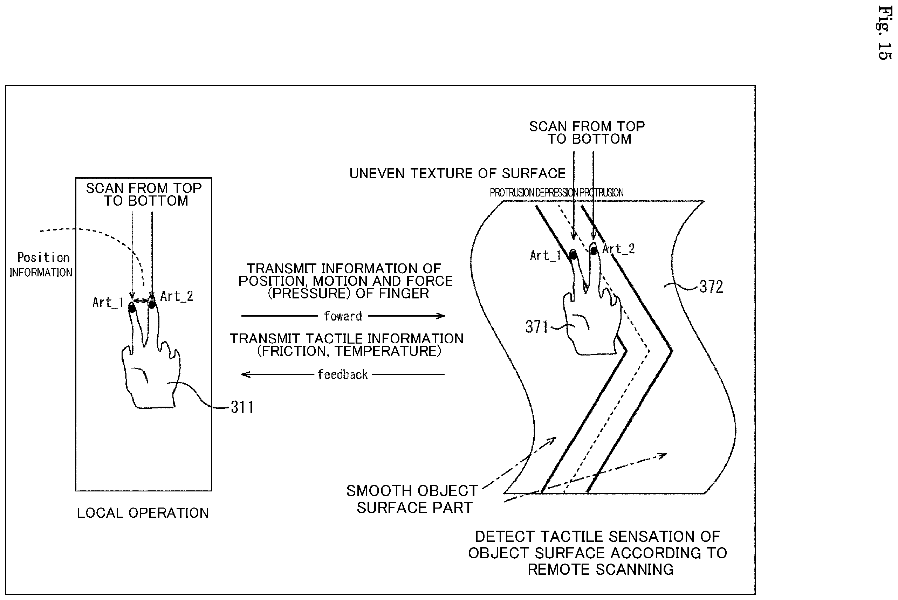

Fig. 15 is a diagram showing an application example of a remote control system.
[Fig. 16]

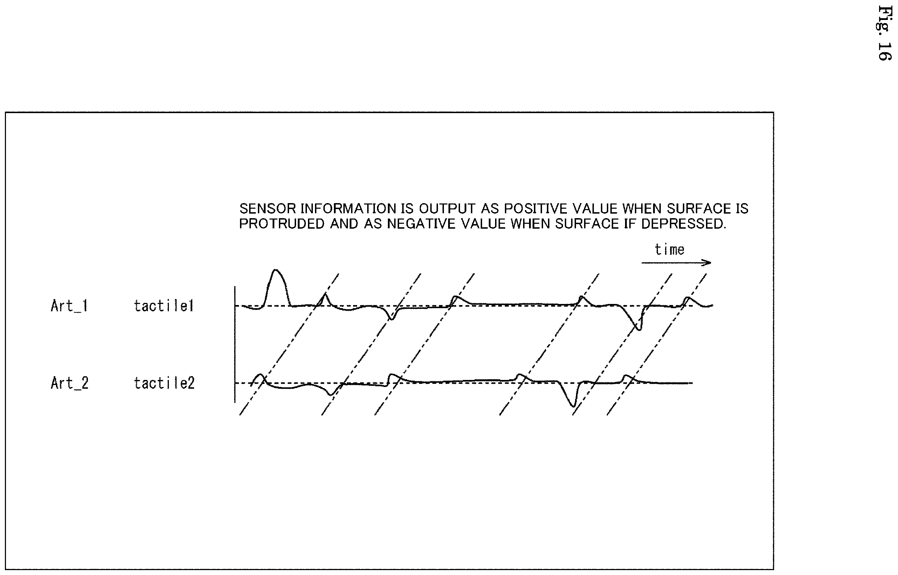

Fig. 16 is a diagram showing an example of tactile data.
[Fig. 17]

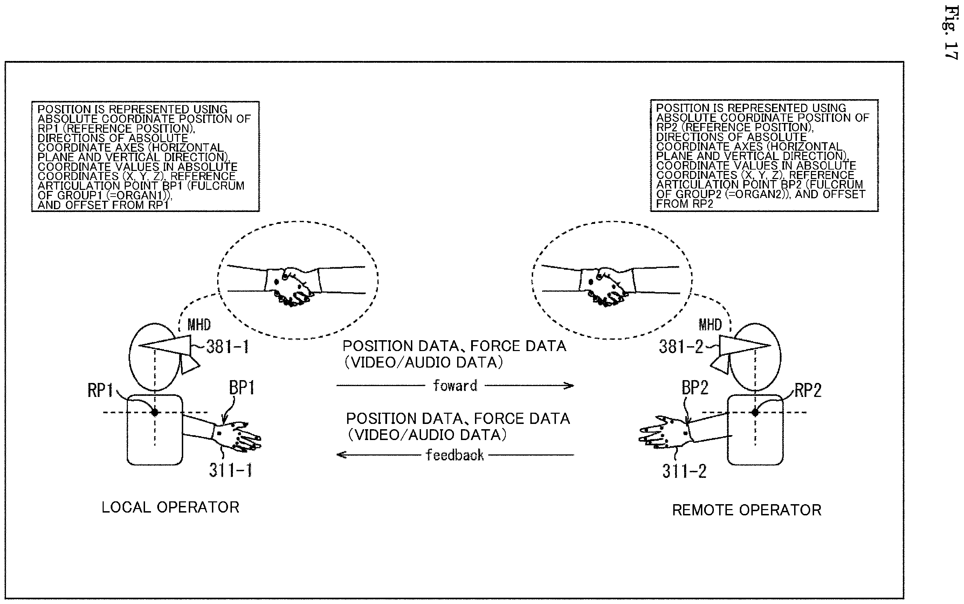

Fig. 17 is a diagram showing an application example of a remote control system.

[Fig. 18]

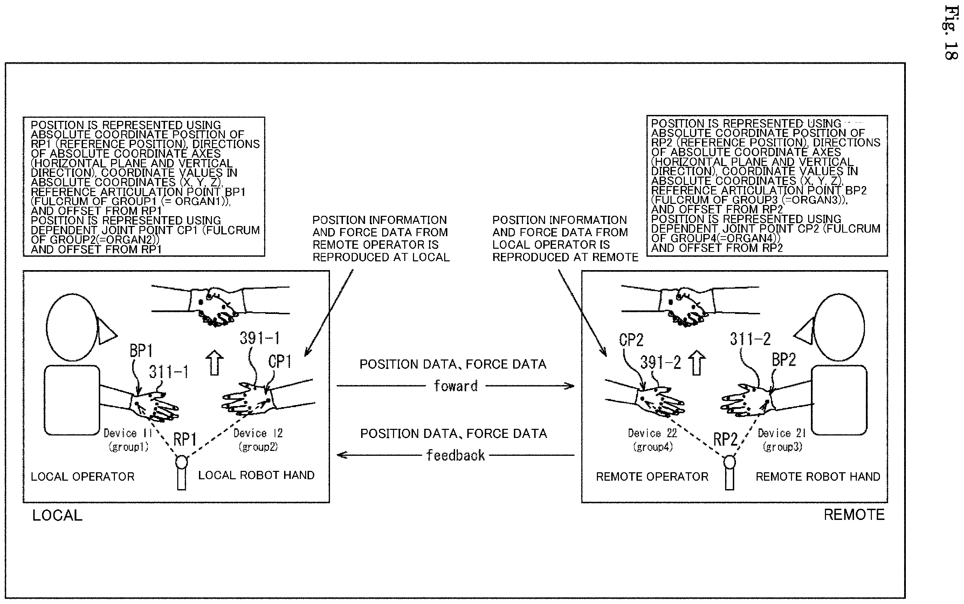

Fig. 18 is a diagram showing an application example of the remote control system.
[Fig. 19]

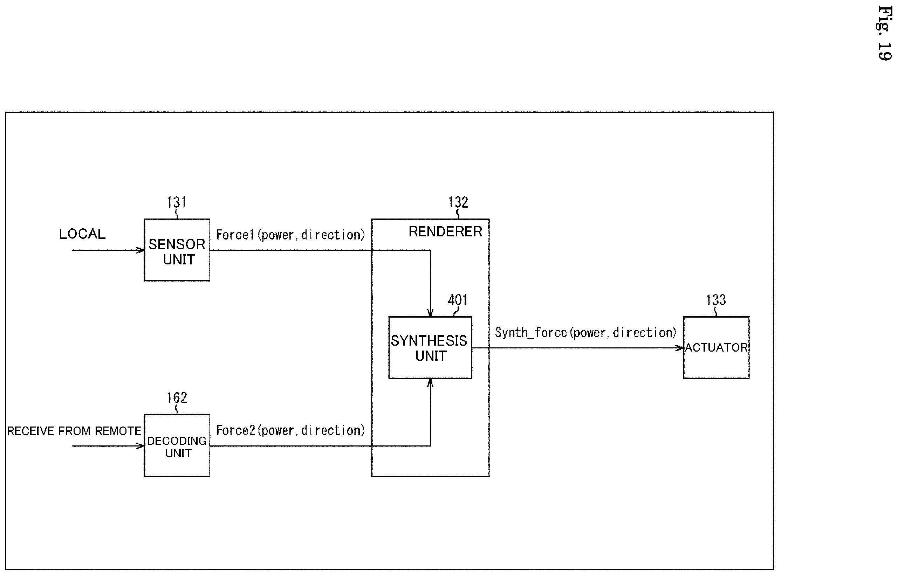

Fig. 19 is a block diagram showing a main configuration example of a renderer.
[Fig. 20]

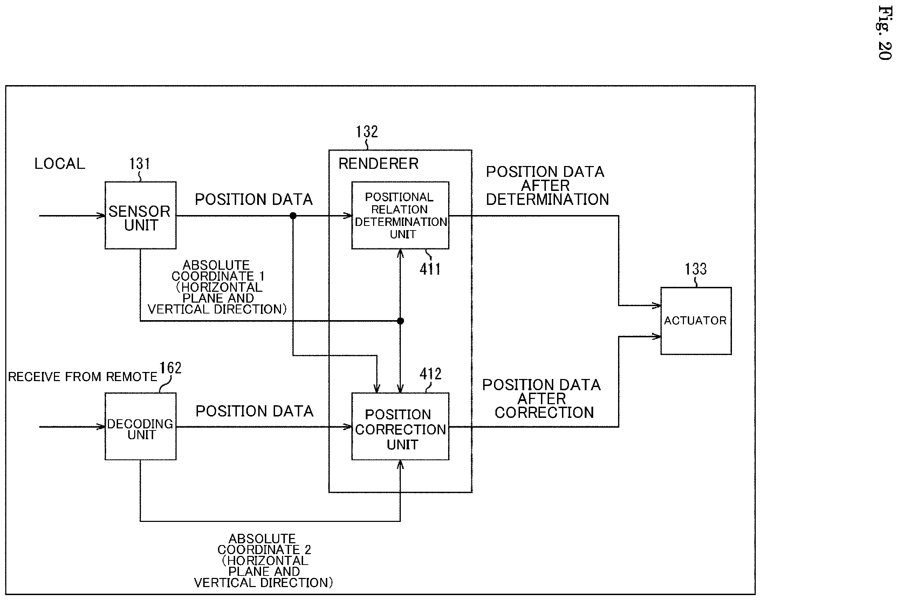

Fig. 20 is a block diagram showing a main configuration example of the renderer.
[Fig. 21]

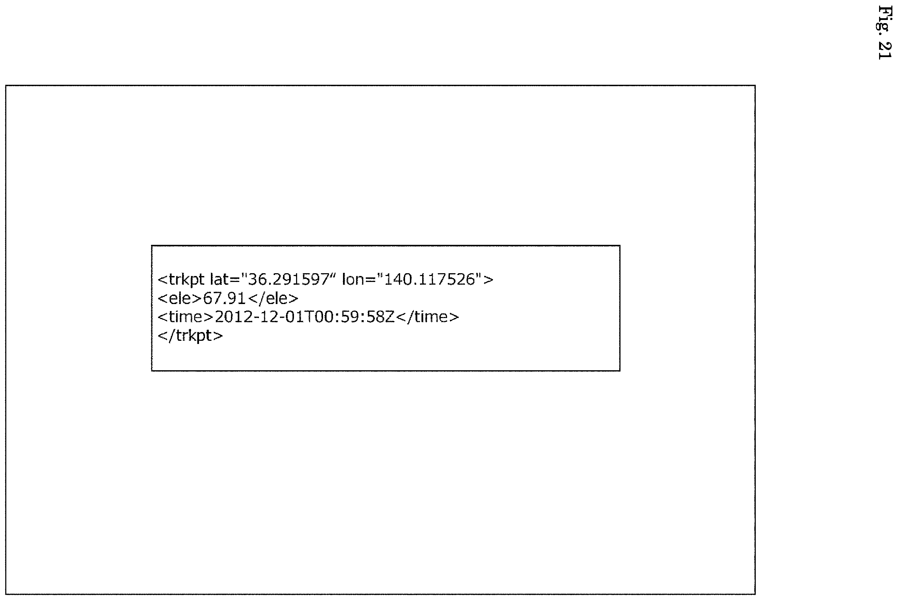

Fig. 21 is a diagram showing an example of GPS information.
[Fig. 22]

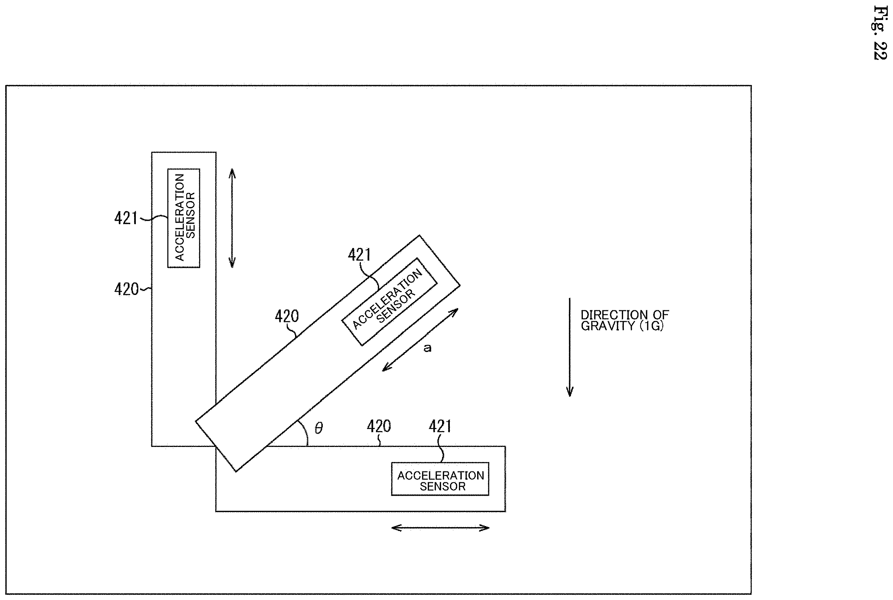

Fig. 22 is a diagram illustrating an example of deriving an inclination angle.
[Fig. 23]

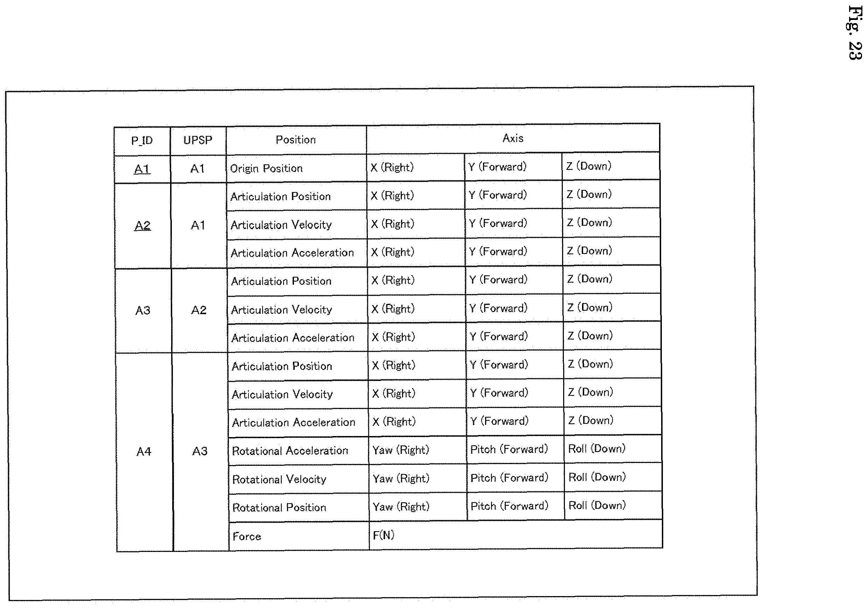

Fig. 23 is a diagram showing an example of a KT map.
[Fig. 24]

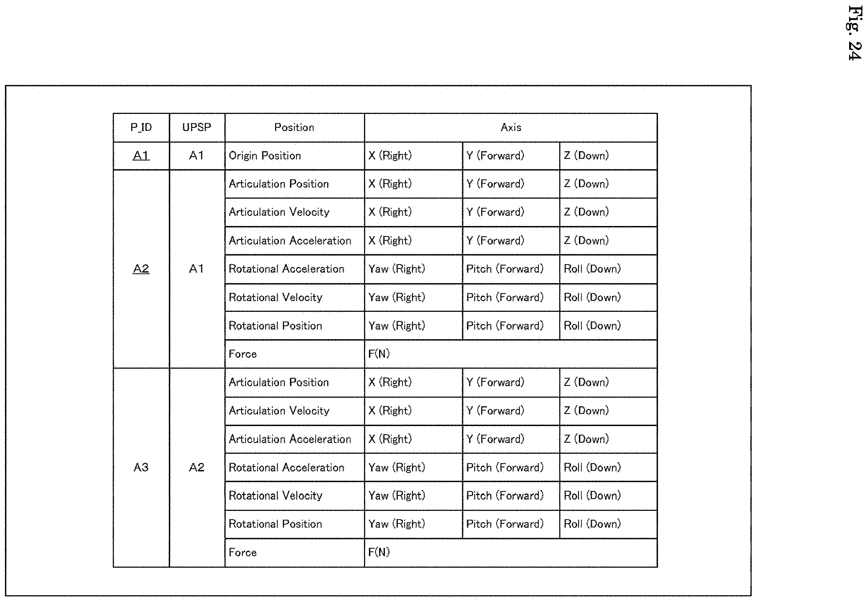

Fig. 24 is a diagram showing an example of a KT map.
[Fig. 25]

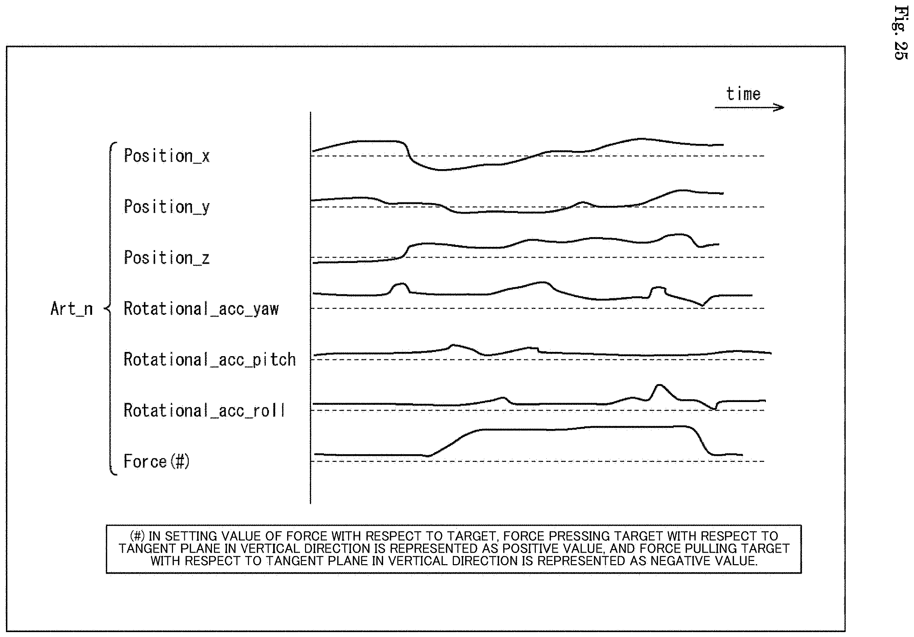

Fig. 25 is a diagram showing an example of haptic data.
[Fig. 26]

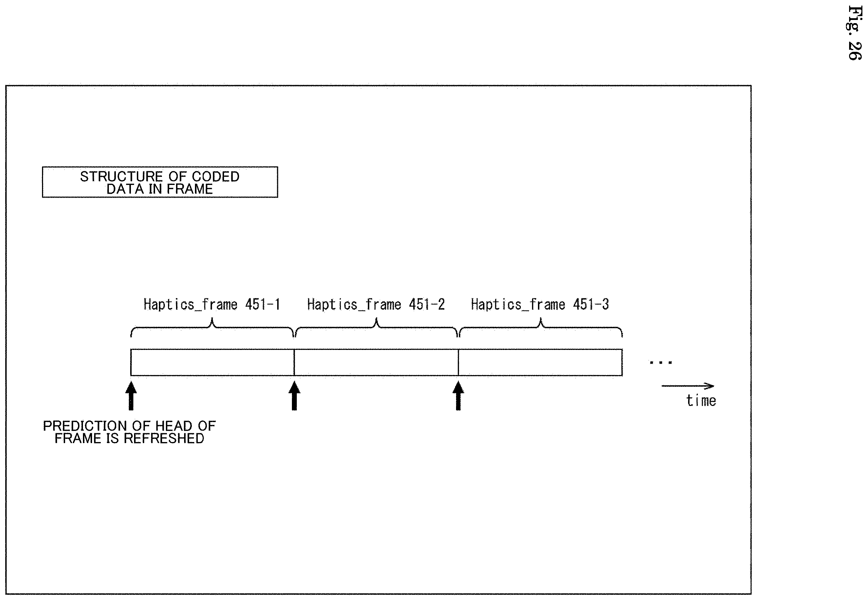

Fig. 26 is a diagram showing an example of a frame structure of coded data.
[Fig. 27]

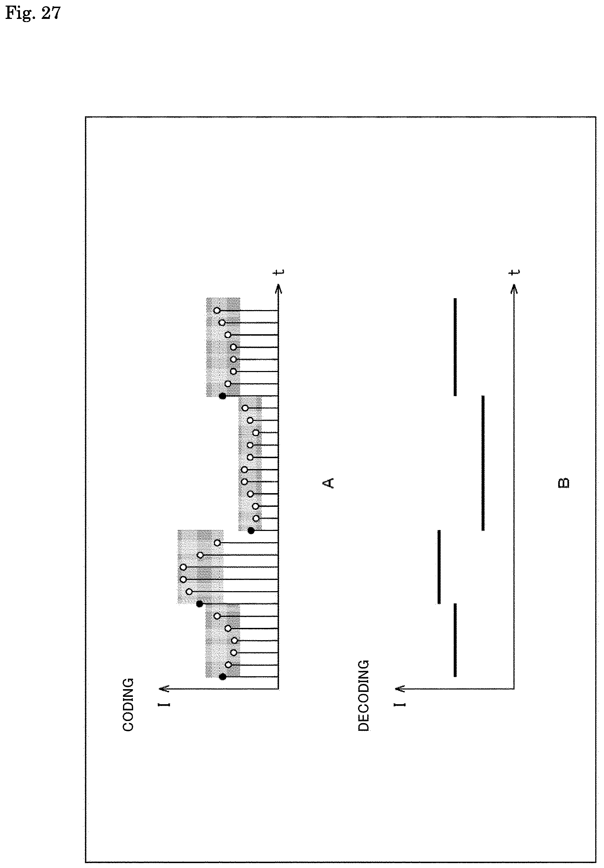

Fig. 27 is a diagram showing an example of coding by a dead band.
[Fig. 28]

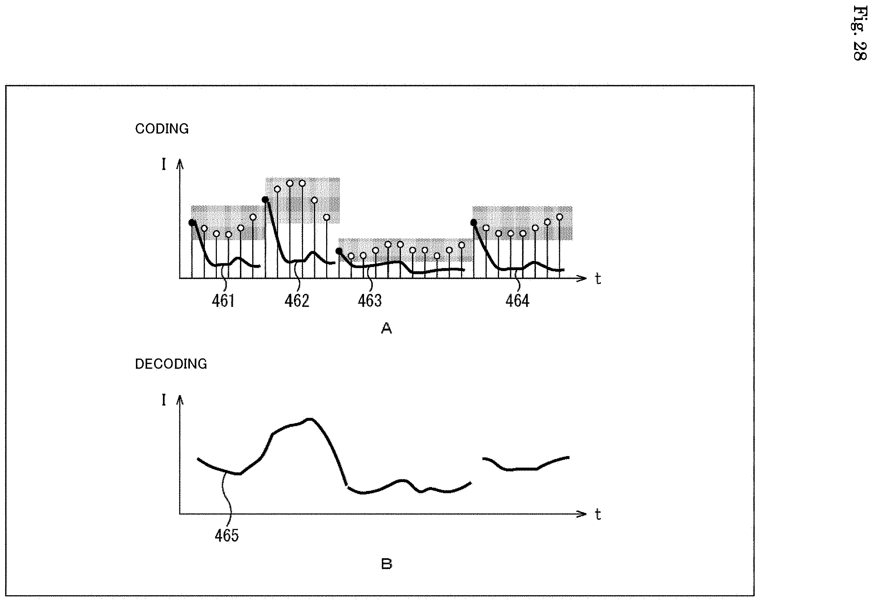

Fig. 28 is a diagram showing an example of coding haptic data.
[Fig. 29]

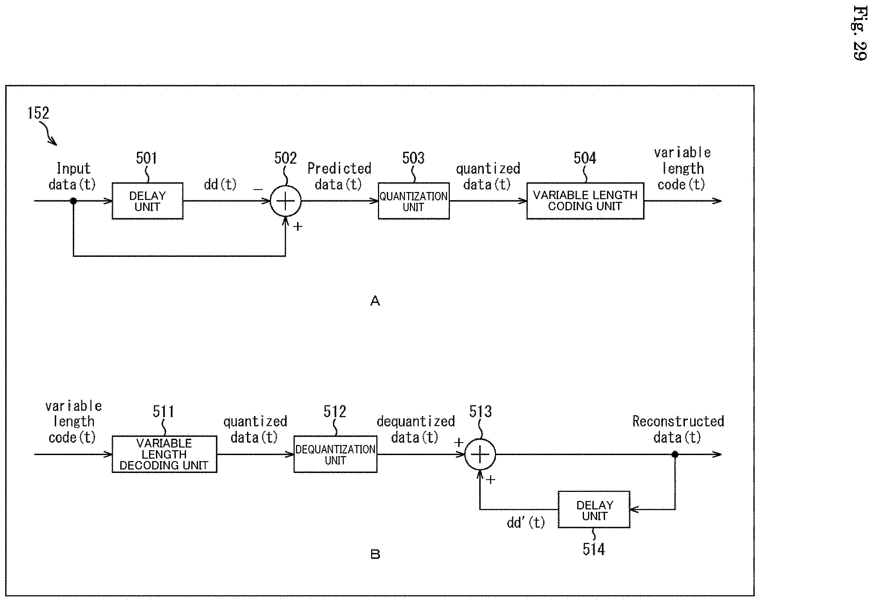

Fig. 29 is a block diagram showing a main configuration example of a coding unit and a decoding unit.
[Fig. 30]

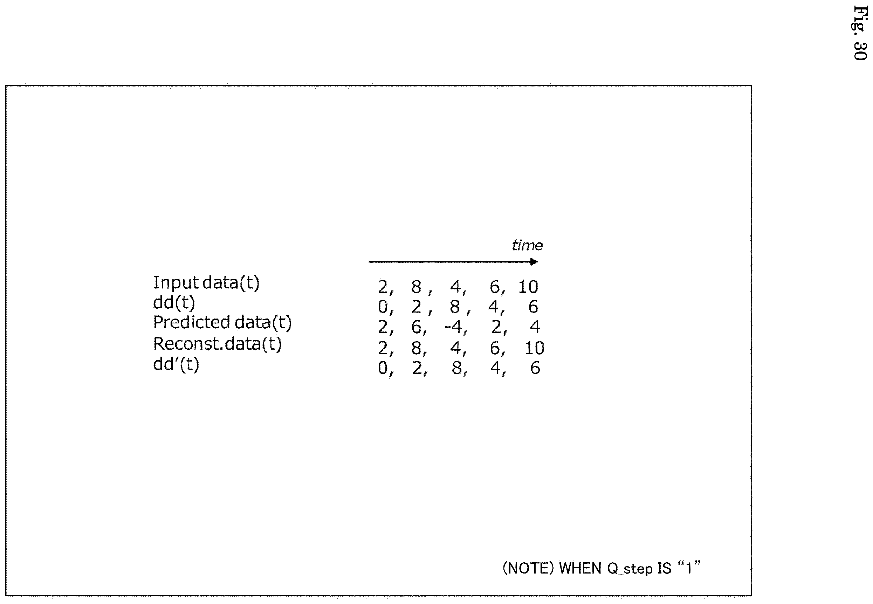

Fig. 30 is a diagram showing an example of a state of processing.
[Fig. 31]

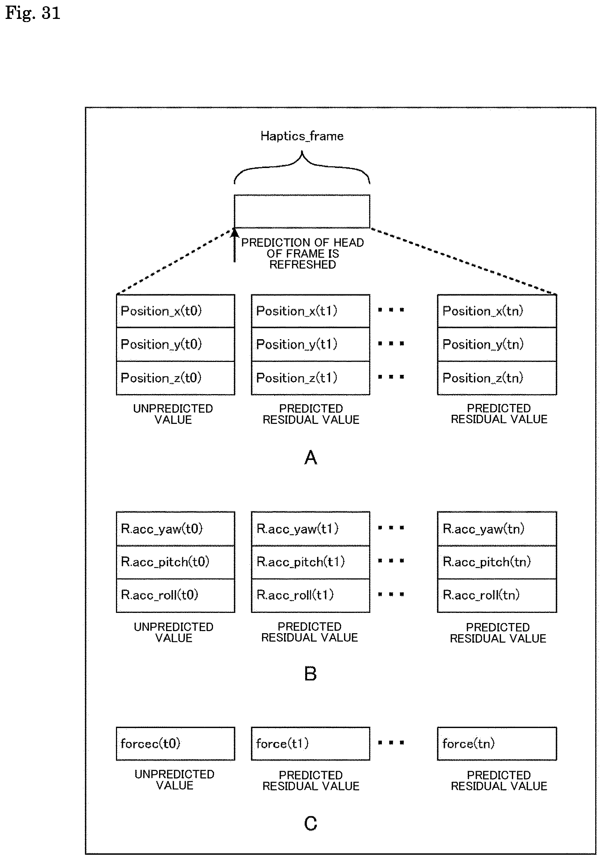

Fig. 31 is a diagram showing an example of an in-frame structure of coded data.
[Fig. 32]

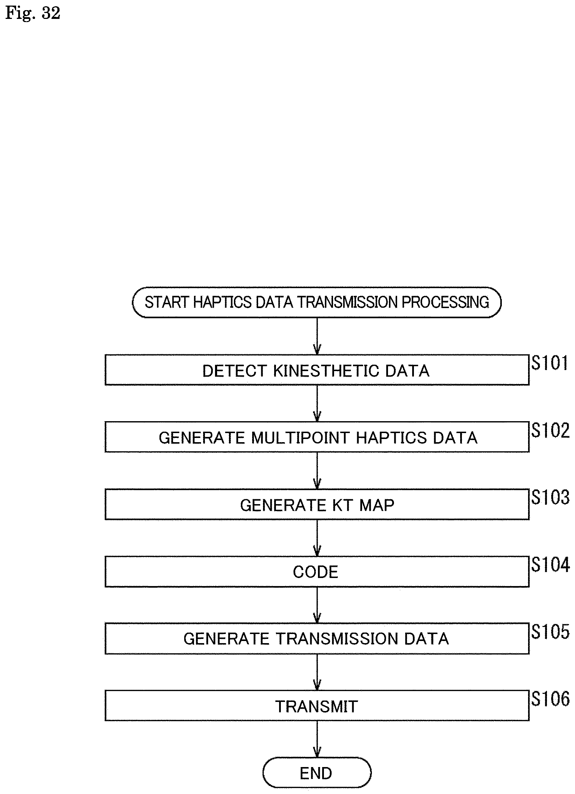

Fig. 32 is a flowchart illustrating an example of a flow of haptic data transmission processing.
[Fig. 33]

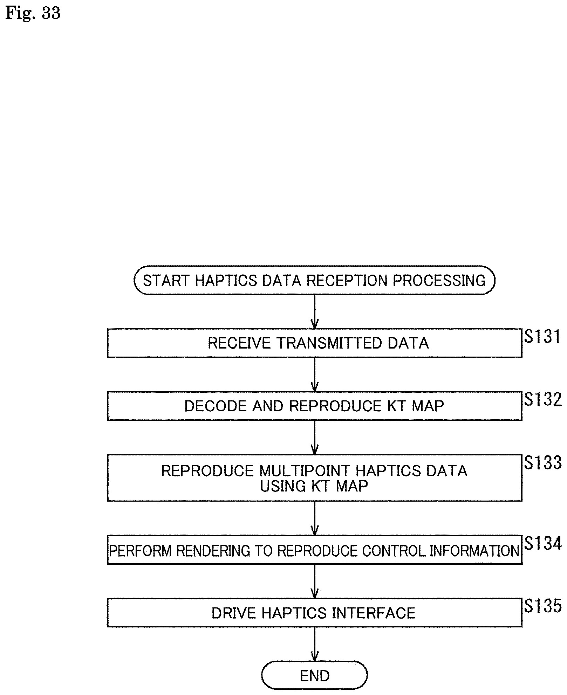

Fig. 33 is a flowchart illustrating an example of a flow of haptic data reception processing.
[Fig. 34]

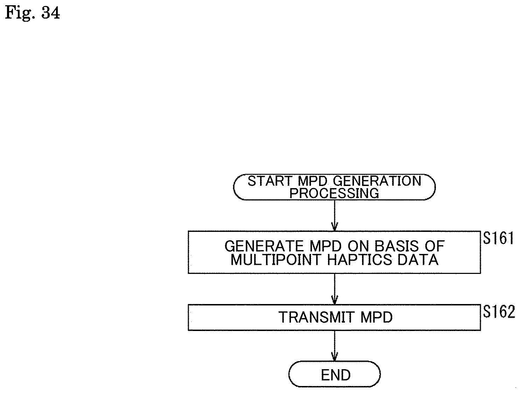

Fig. 34 is a flowchart illustrating an example of a flow of MPD generation processing.
[Fig. 35]

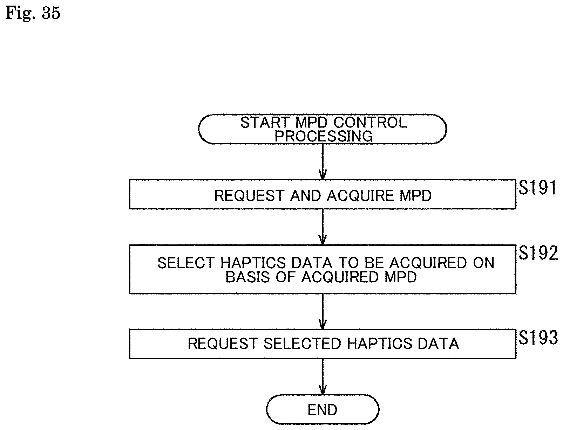

Fig. 35 is a flowchart illustrating an example of a flow of MPD control processing.
[Fig. 36]

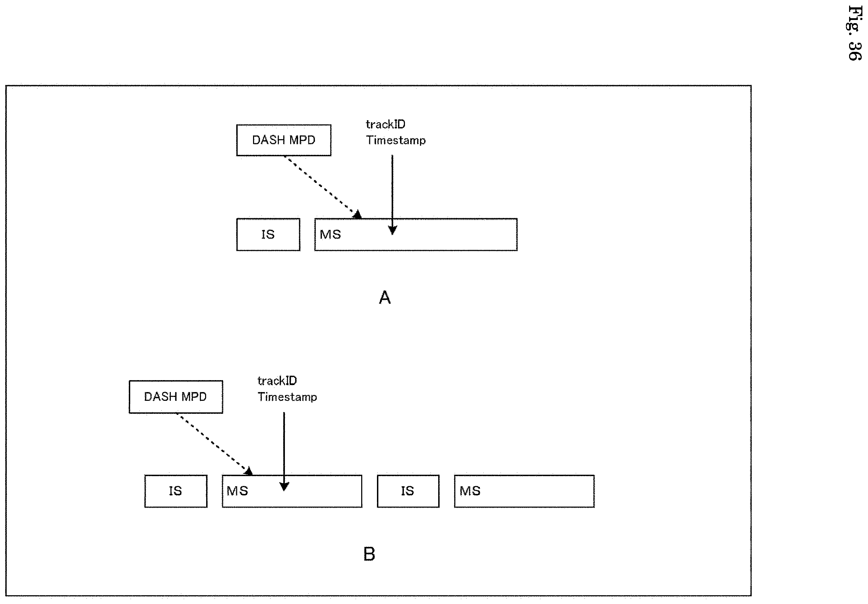

Fig. 36 is a diagram showing an example of a state of data reference using MPD.
[Fig. 37]

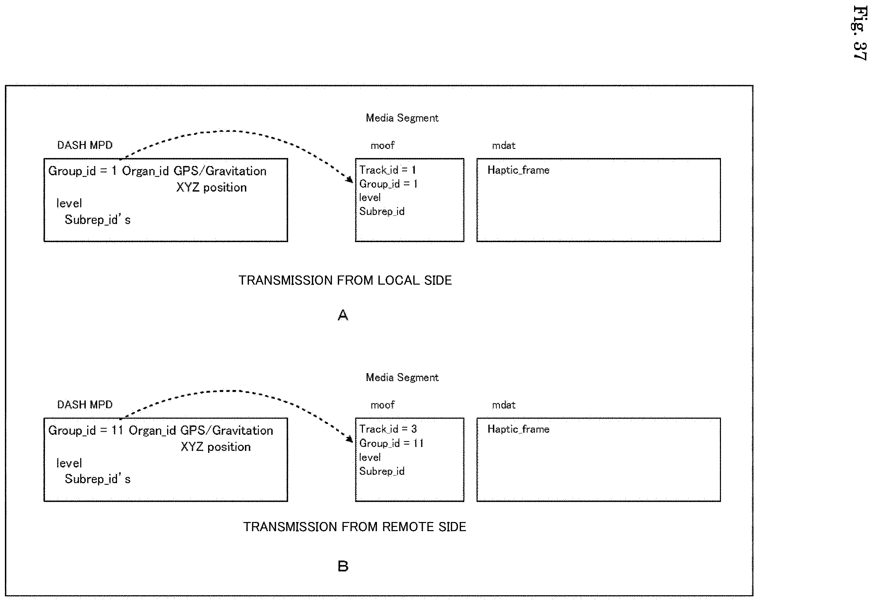

Fig. 37 is a diagram showing an example of a state of data reference using MPD.

[Fig. 38]

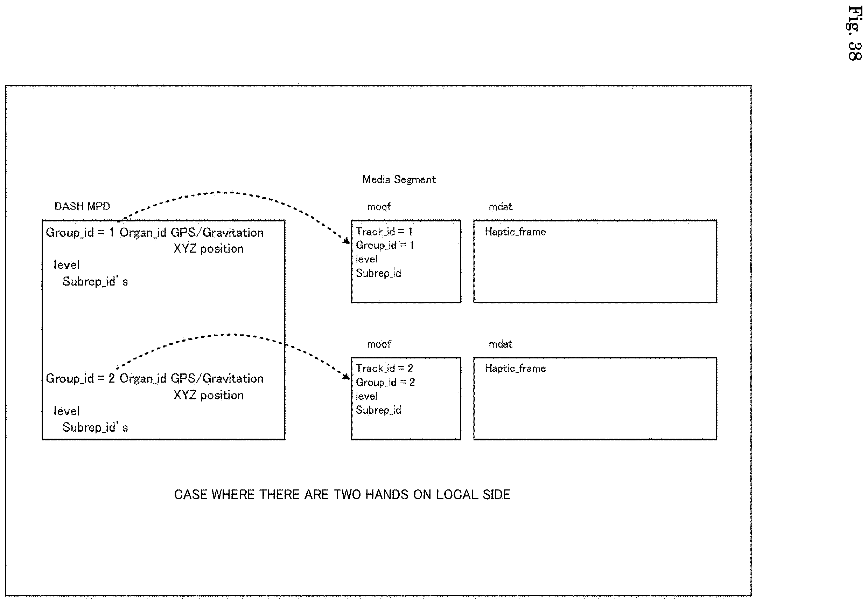

Fig. 38 is a diagram showing an example of a state of data reference using MPD.

[Fig. 39]

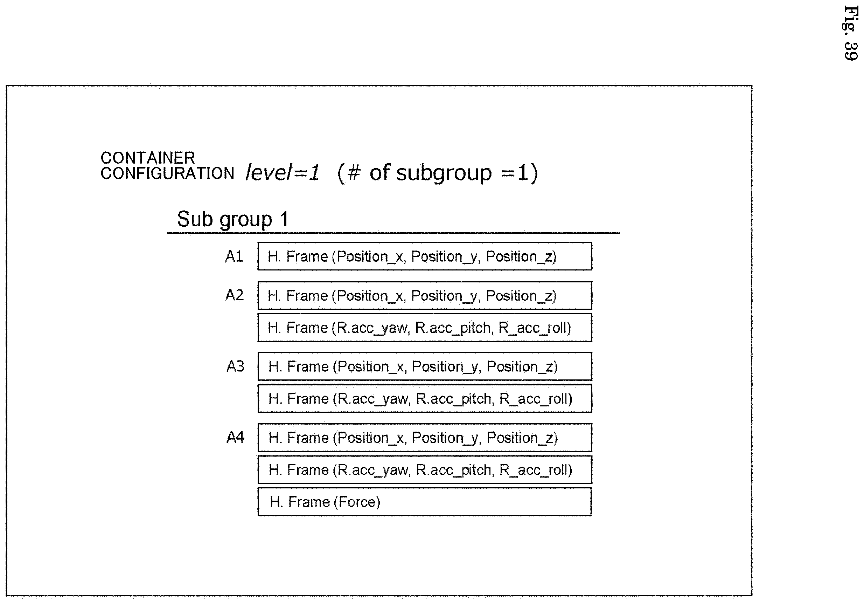

Fig. 39 is a diagram showing a configuration example of a container.

[Fig. 40]

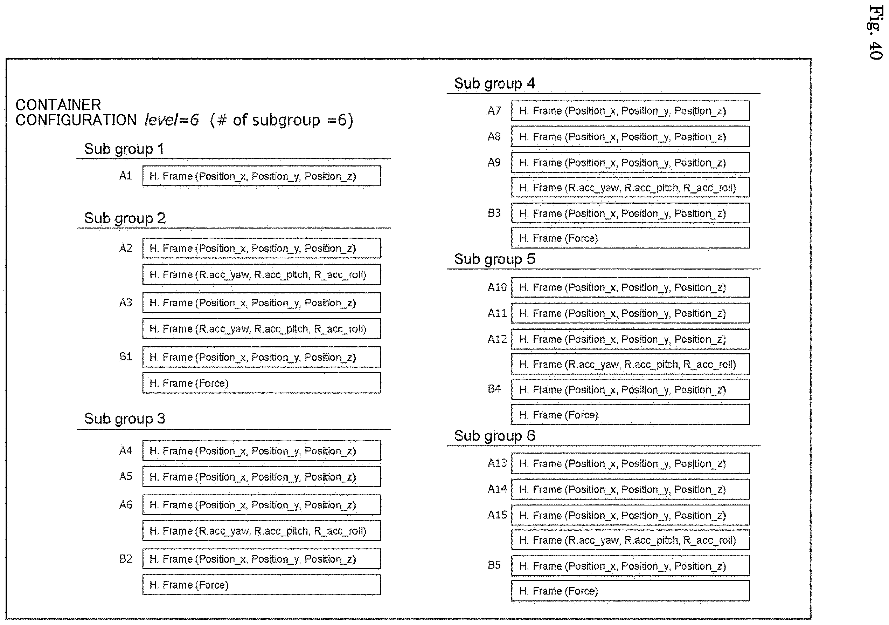

Fig. 40 is a diagram showing a configuration example of a container.

[Fig. 41]

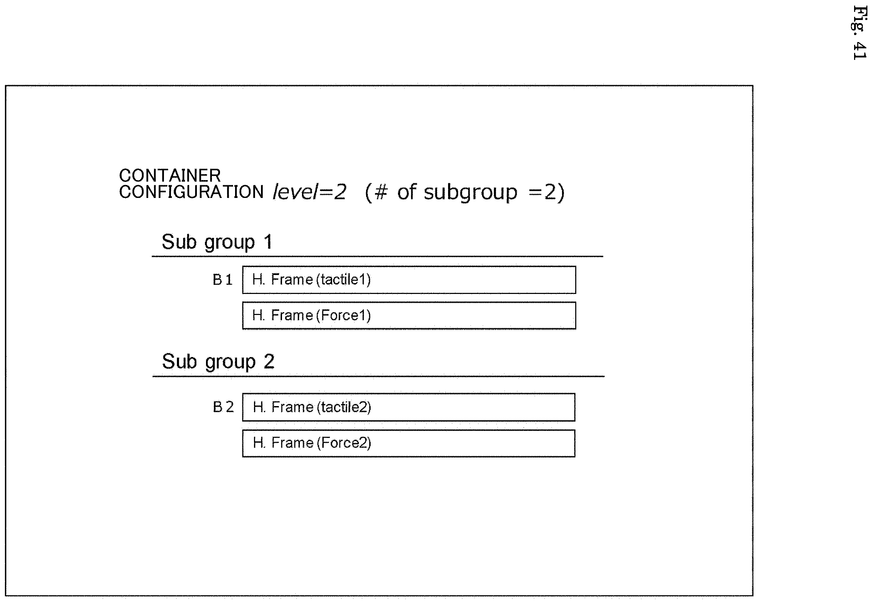

Fig. 41 is a diagram showing a configuration example of a container.

[Fig. 42]

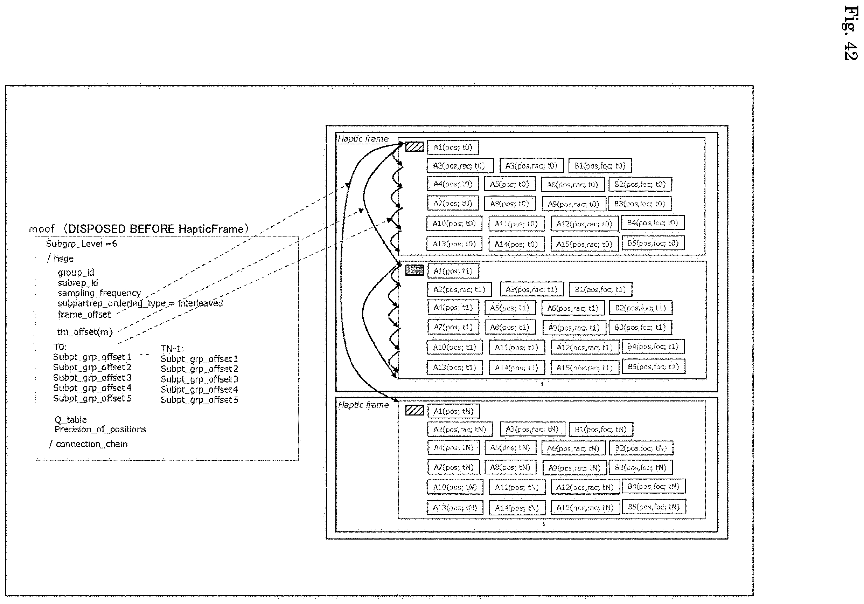

Fig. 42 is a diagram showing an arrangement example of data in a file format.

[Fig. 43]

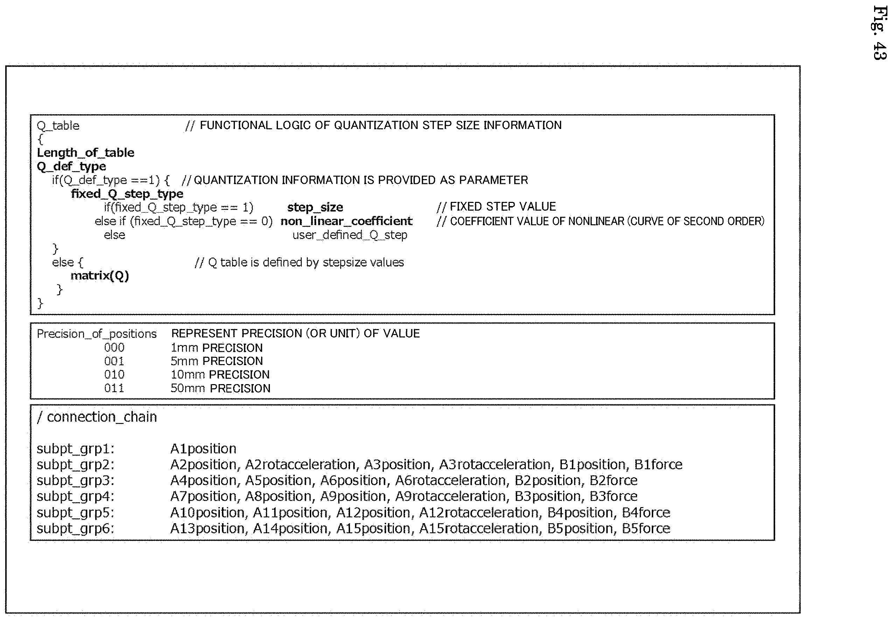

Fig. 43 is a diagram showing an example of a file format.

[Fig. 44]

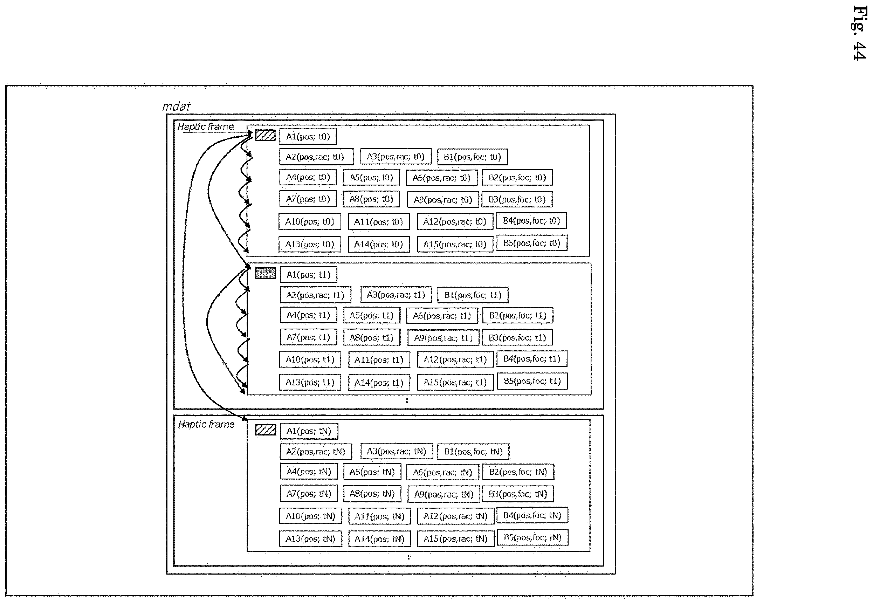

Fig. 44 is a diagram showing an arrangement example of data in a file format.

[Fig. 45]

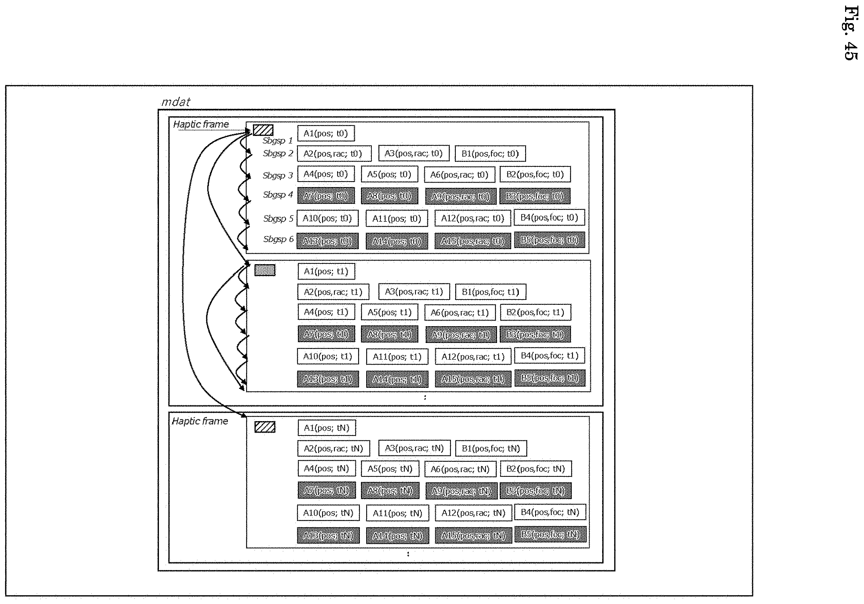

Fig. 45 is a diagram showing an arrangement example of data in a file format.

[Fig. 46]

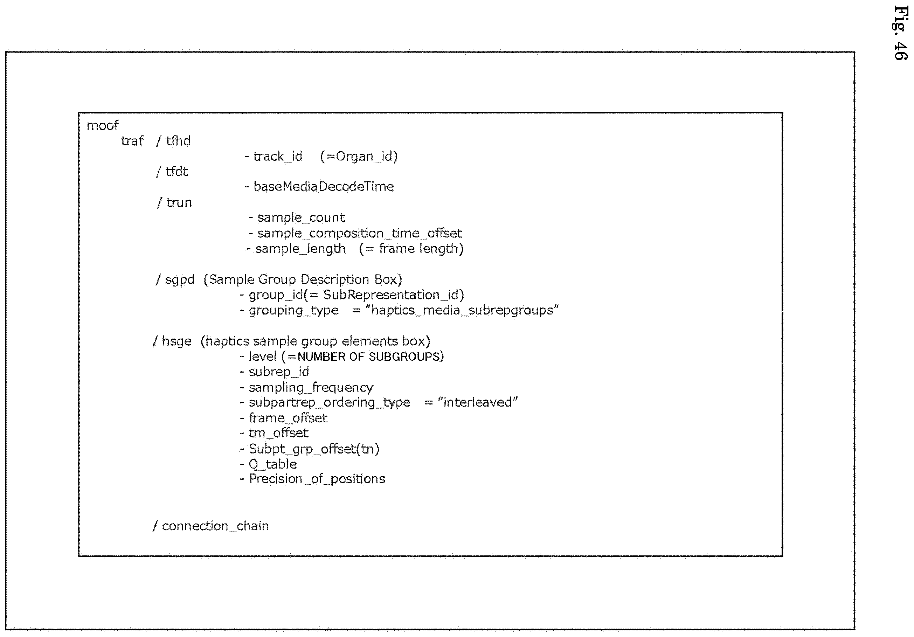

Fig. 46 is a diagram showing an example of a file format.

[Fig. 47]

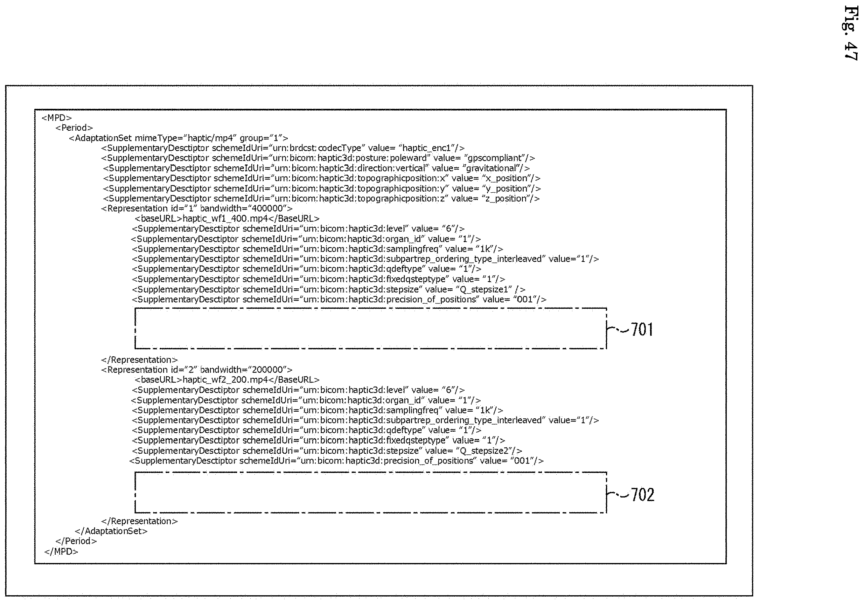

Fig. 47 is a diagram showing an example of MPD.

[Fig. 48]

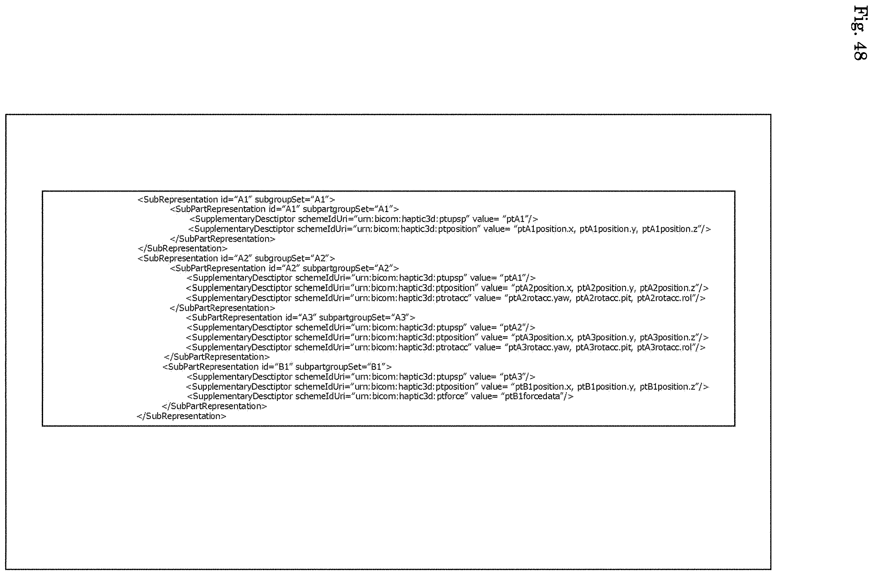

Fig. 48 is a diagram showing an example of MPD.

[Fig. 49]

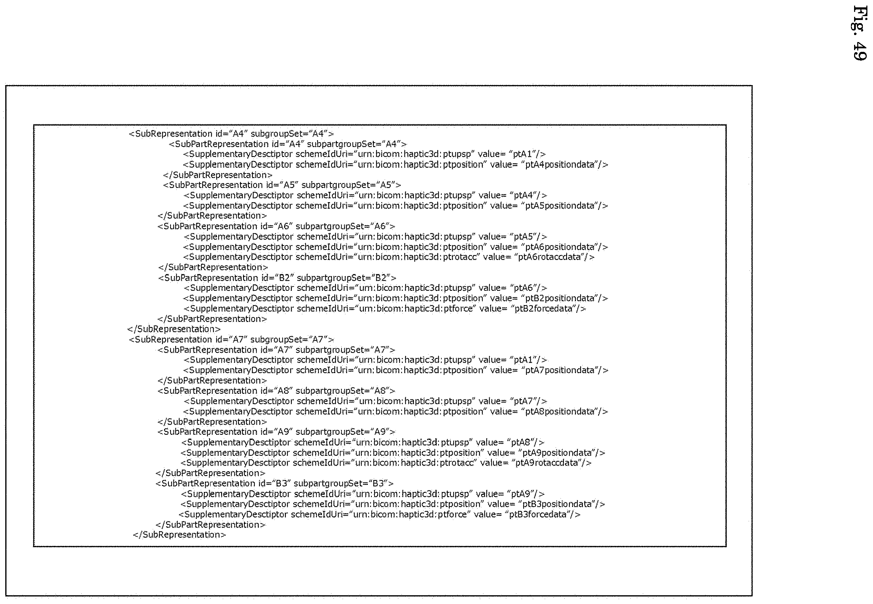

Fig. 49 is a diagram showing an example of MPD.

[Fig. 50]

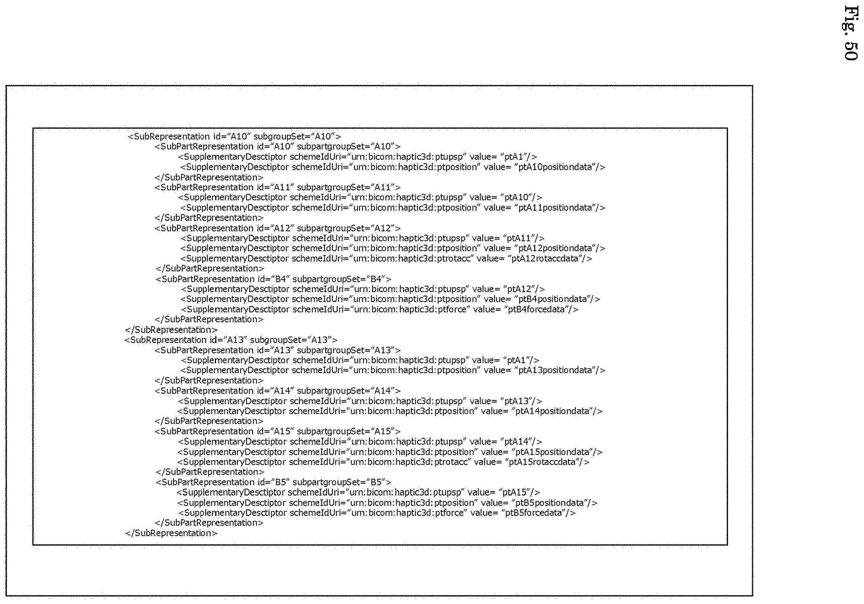

Fig. 50 is a diagram showing an example of MPD.

[Fig. 51]

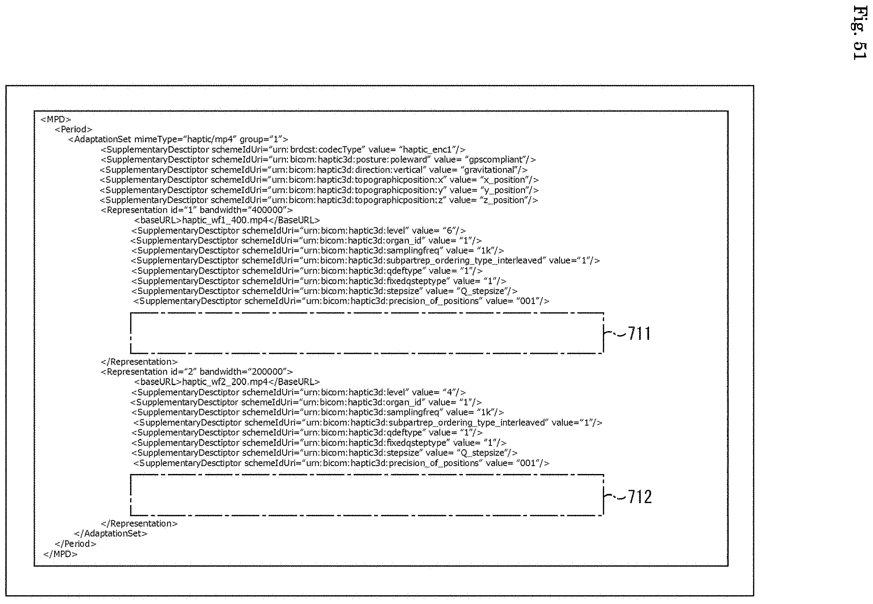

Fig. 51 is a diagram showing an example of MPD.

[Fig. 52]

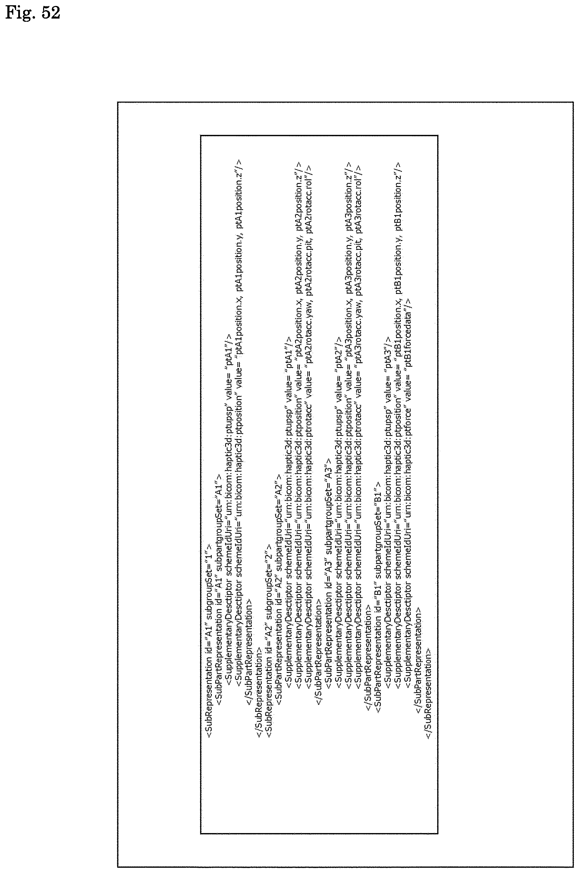

Fig. 52 is a diagram showing an example of MPD.

[Fig. 53]

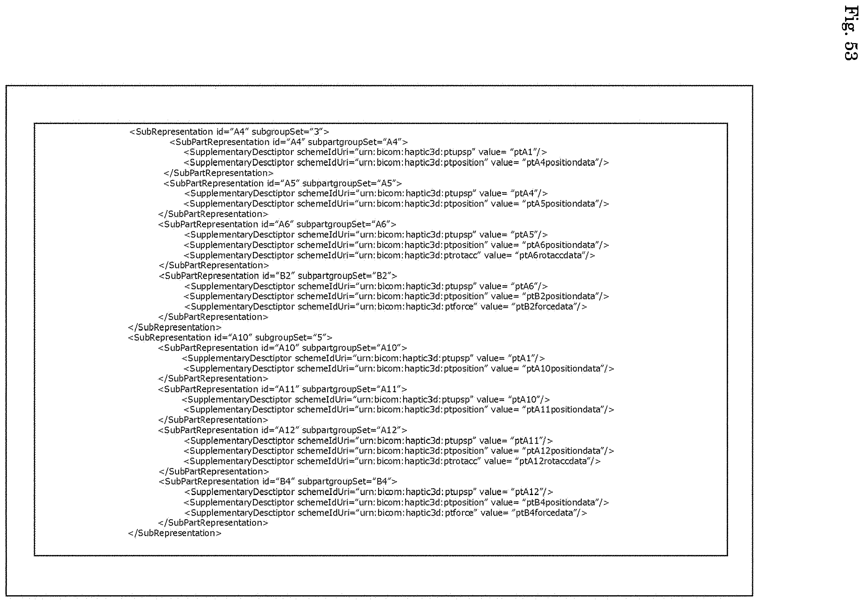

Fig. 53 is a diagram showing an example of MPD.

[Fig. 54]

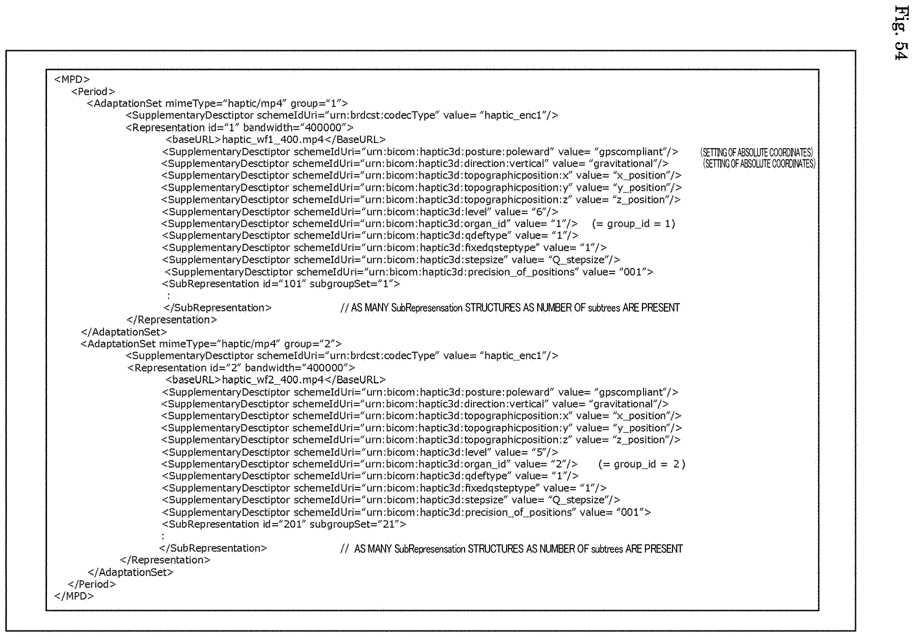

Fig. 54 is a diagram showing an example of MPD.

[Fig. 55]

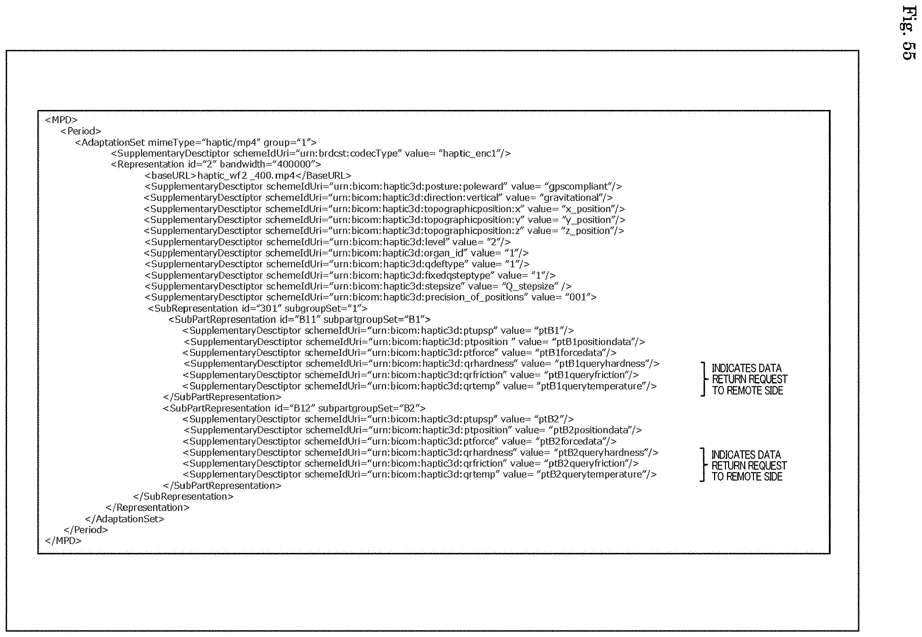

Fig. 55 is a diagram showing an example of MPD.

[Fig. 56]

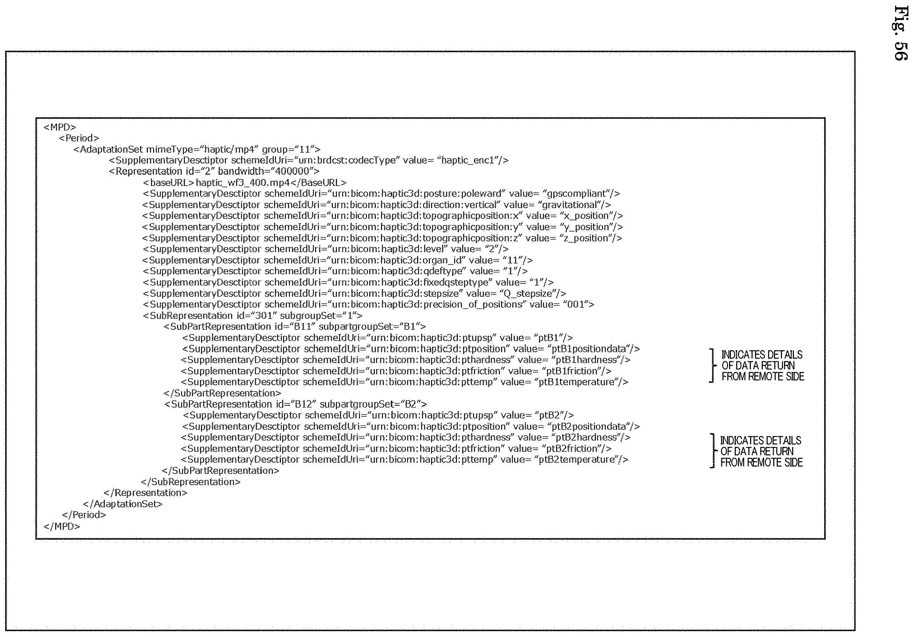

Fig. 56 is a diagram showing an example of MPD.

[Fig. 57]

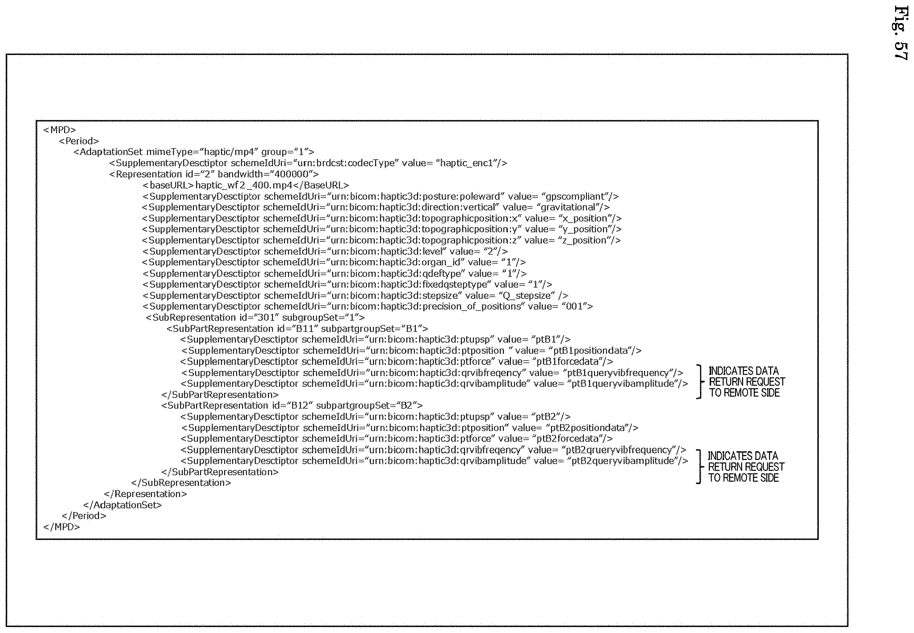

Fig. 57 is a diagram showing an example of MPD.

[Fig. 58]

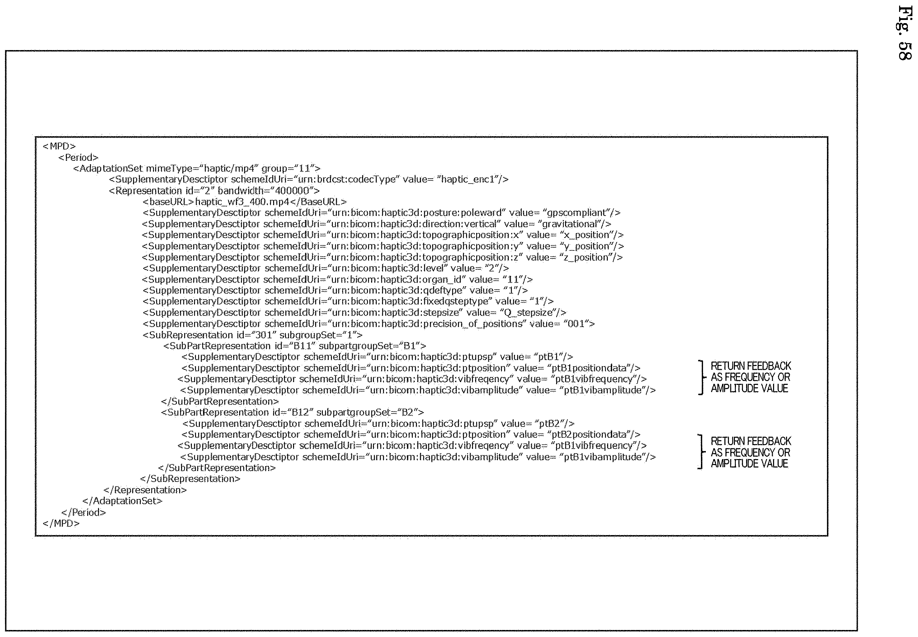

Fig. 58 is a diagram showing an example of MPD.

[Fig. 59]

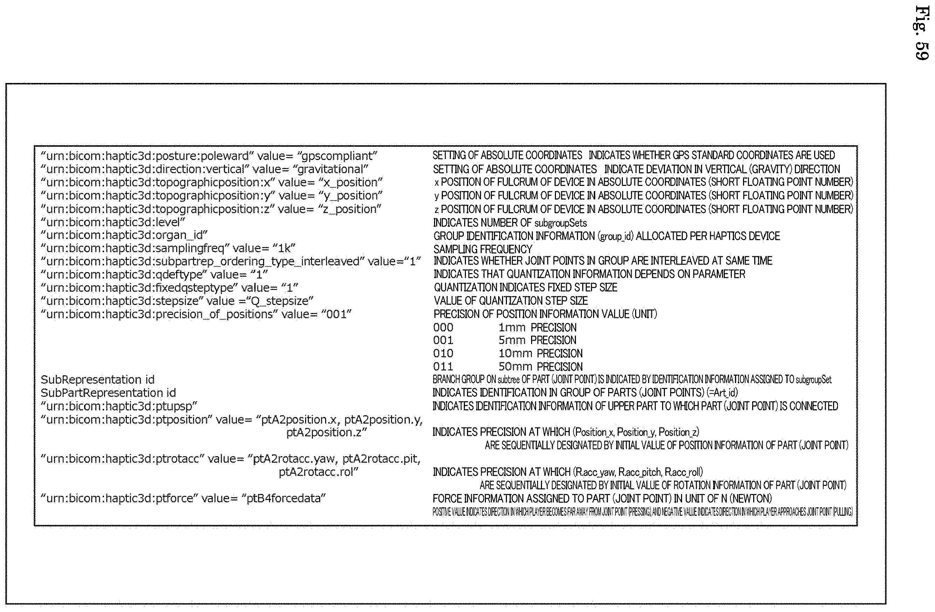

Fig. 59 is a diagram showing an example of semantics.

[Fig. 60]

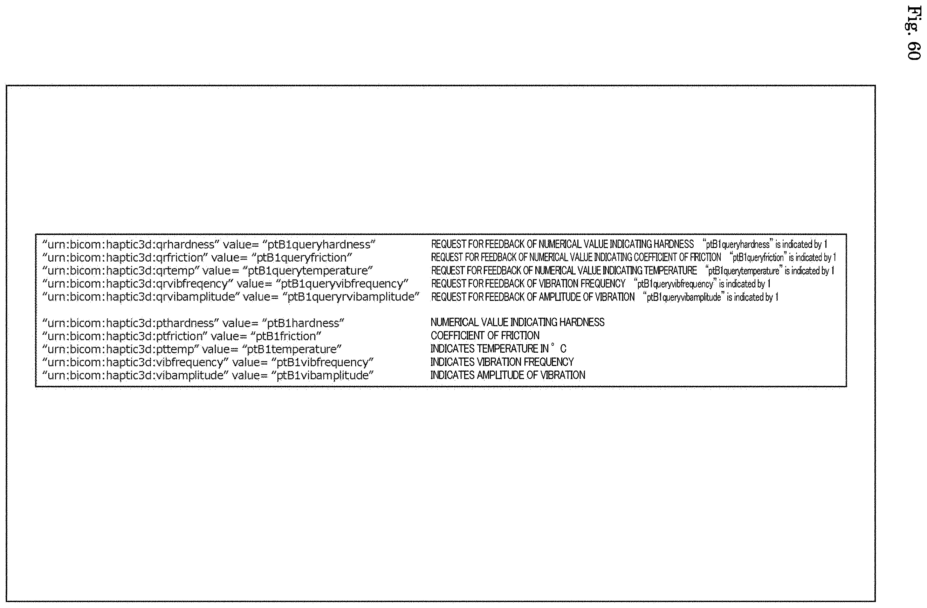

Fig. 60 is a diagram showing an example of semantics.

[Fig. 61]

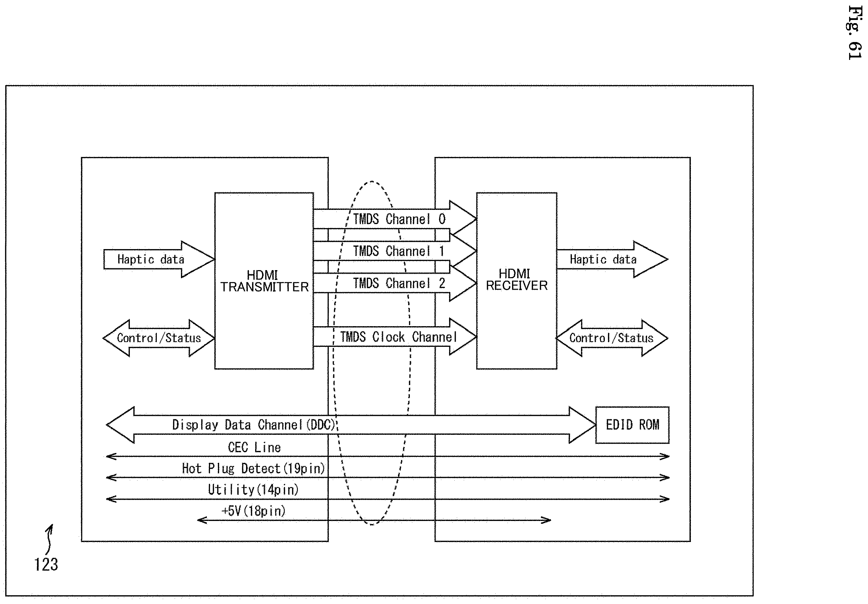

Fig. 61 is a diagram showing a configuration example of HDMI transmission.

[Fig. 62]

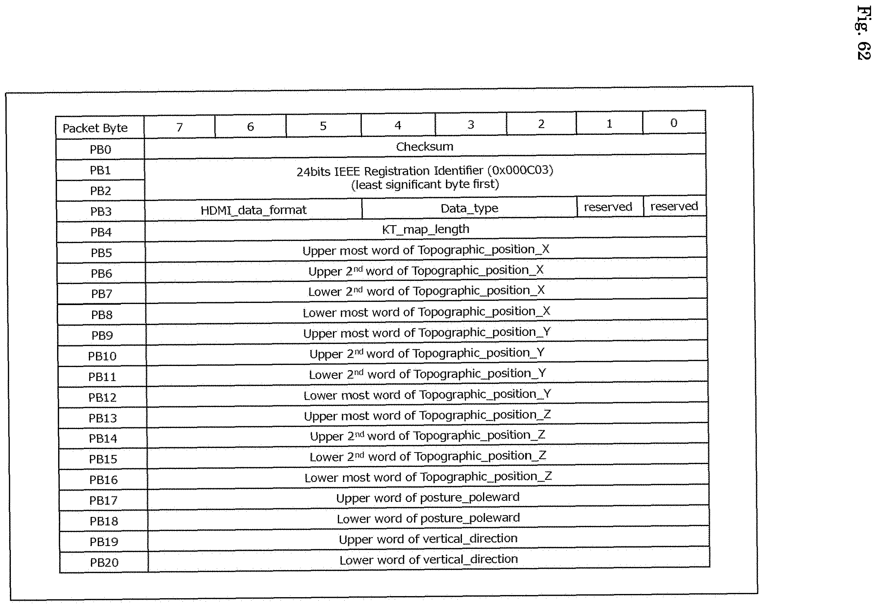

Fig. 62 is a diagram showing an example of metadata.

[Fig. 63]

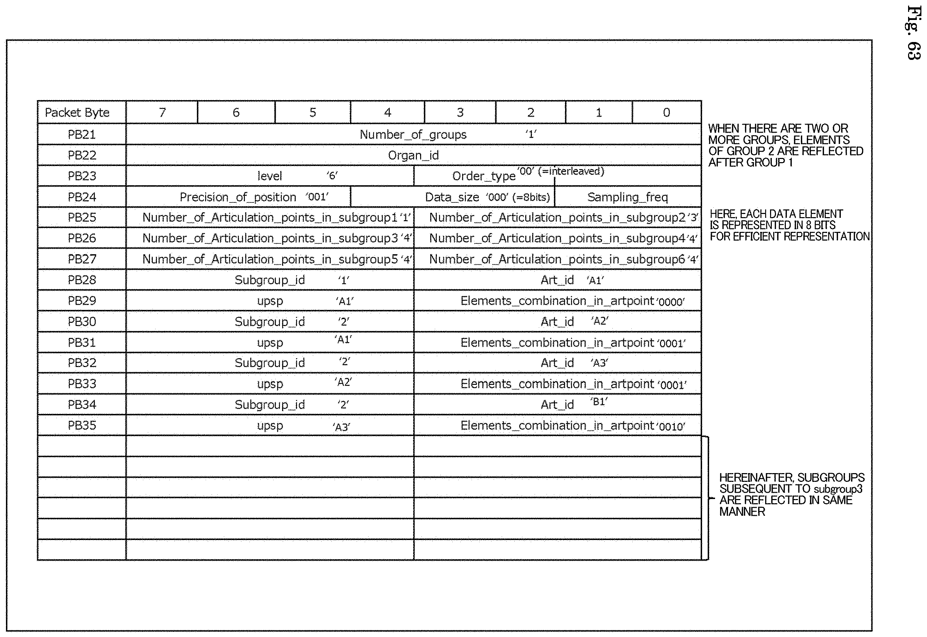

Fig. 63 is a diagram showing an example of metadata.

[Fig. 64]

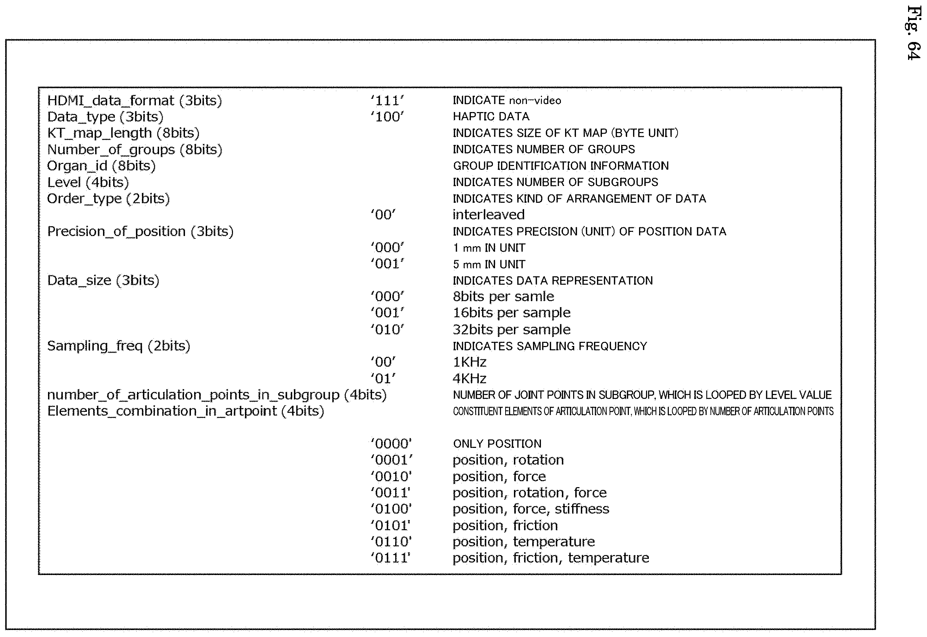

Fig. 64 is a diagram showing an example of semantics.

[Fig. 65]

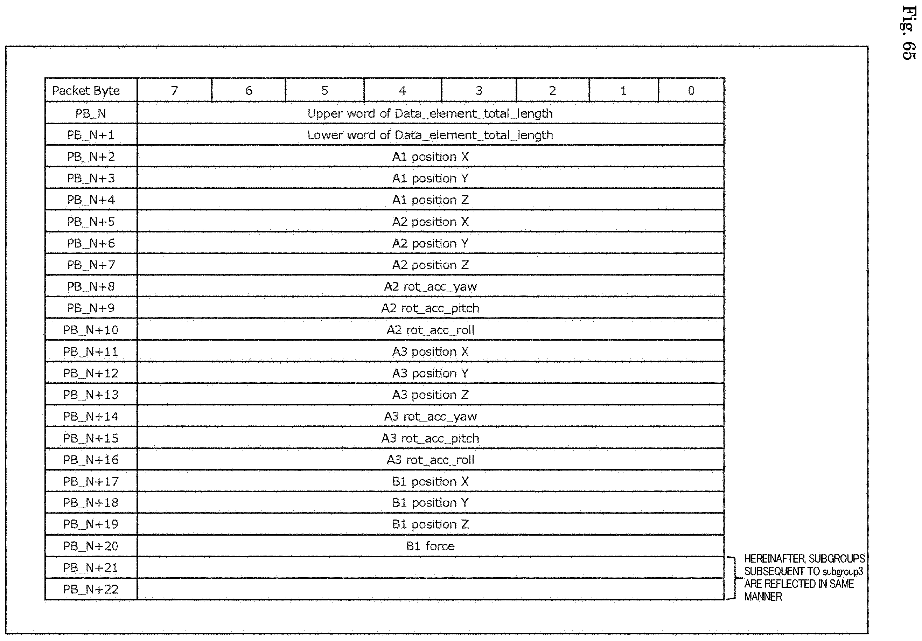

Fig. 65 is a diagram showing an example of a transmission format of haptic data through a TMDS channel.

[Fig. 66]

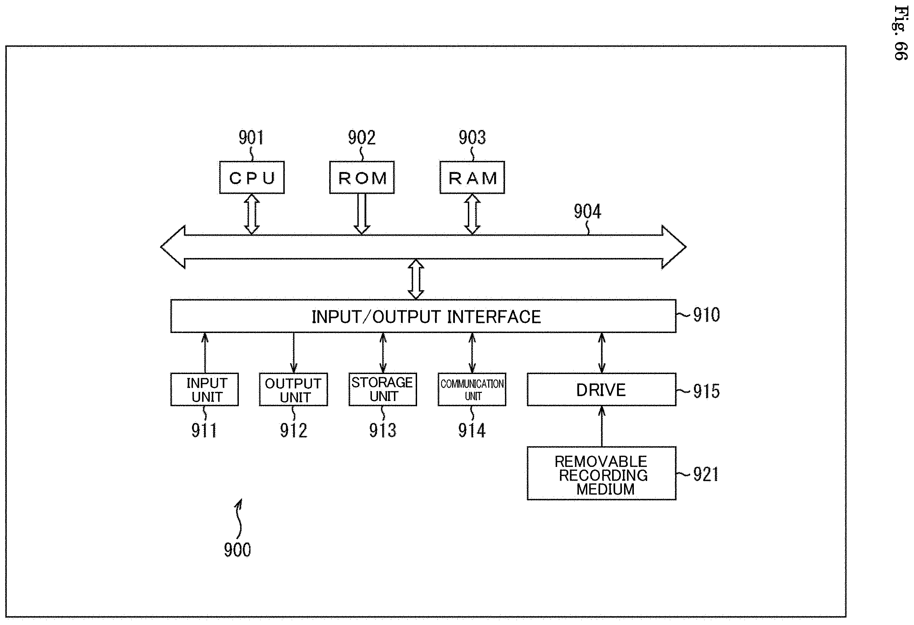

Fig. 66 is a block diagram showing a main configuration example of a computer.

[Description of Embodiments]

Hereinafter, modes for carrying out the present disclosure (hereinafter referred as embodiments) will be described. The descriptions will be given in the following order.

1. Haptic transmission
2. First embodiment (remote control system)
3. Second embodiment (application of MPD)
4. Third embodiment (digital interface)
5. Supplement

<1. Haptic transmission>

<Haptic system>

Telexistence society intends to realize the effect of instantaneous spatial movement by disposing a device controlled at user's will in a spatially separate place and controlling the device via a network, and is conceived to lead to realization of human augmentation in which an action on a local side which leads control is reproduced on a remote side and a remote device operates according to the action such that progress and results are fed back to the local side at any time, humans are incorporated into a feedback system to be free from spatiotemporal constraints such that the feedback causes local activity to continue, and human abilities can be amplified rather than simply the sense of presence.

For example, a haptic system 10 of Fig. 1 includes a haptic device 11 and a haptic device 15 which are installed at places remote from each other and are composed of sensors, actuators, and the like. One transmits haptic data (kinesthetic data, tactile data, and the like) detected by a sensor, and the other receives the haptic data and drives an actuator on the basis of the haptic data. By exchanging such haptic data, the operation of one haptic device can be reproduced in the other haptic device. That is, a remote operation is realized. Such exchange of haptic data is realized by a communication device 12 and a communication device 14 communicating with each other via a network 13.

The communication device 12 can also feedback haptic data from the haptic device 11 to the haptic device 11. Similarly, the communication device 14 can also feedback haptic data from the haptic device 15 to the haptic device 15.

In such transmission of haptic data, it is necessary to accurately describe how outputs of a plurality of local kinesthetic sensors change in conjunction with each other and to convey it to a remote receiving device.

A haptic device may be, for example, a device in a bent skeletal arm shape or a glove - shaped device that can be worn on a hand. When an operator moves a skeletal arm or a glove as a haptic display on a local side, position information and a motion state at each articulation change.

As a haptic device, a higher-order haptic device that changes the degree of freedom in a configuration of a kinesthetic sensor from the first (1 degree of freedom (1DoF)) to the third (3DoF), increasing the number of articulation points, or the like has been conceived. However, when it is transmitted to a remote side, it is limited to information of a single articulation point. In addition, in studies, projection of an element on a single vector in a three-dimensional space has been assumed, compression coding performed and coding results delivered.

Information on a plurality of articulation points that form the skeleton of a kinesthetic sensor can describe a motion of an end part by being combined, and if such interconnection information is not clearly described, accurate trace cannot be performed in a reproduction device on a reception side.

Therefore, connection information of each articulation part composed of a kinesthetic sensor is described, and at the time of transmission, transmitted to a reception side as metadata. By doing this, it is possible to realize high kinesthetic reproducibility and tactile reproducibility.

<2. First embodiment>

<Remote control system>

Fig. 2 is a diagram illustrating an overview of a remote control system which is an embodiment of a communication system (information processing system) to which the present technology is applied. The remote control system 100 shown in Fig. 2 has a local system 101 and a remote system 102 that are remote from each other. The local system and the remote system 102 each have haptic devices, communicate with each other via a network 110, and realize remote control of the haptic devices by exchanging haptic data. For example, an operation input to one haptic device can be reproduced in the other haptic device.

Here, although a system on the side of a subject of communication is referred to as the local system 101 and a system on the side of a communication partner is referred to as the remote system 102 in description, the local system 101 and the remote system 102 are systems that can basically play the same role. Therefore, unless otherwise specified, description of the local system 101 below can also be applied to the remote system 102.

Configurations of the local system 101 and the remote system 102 are arbitrary. The local system 101 and the remote system 102 may have different configurations or the same configuration. Further, although one local system 101 and one remote system 102 are shown in Fig. 2, the remote control system 100 can include an arbitrary number of local systems 101 and remote systems 102.

In addition, the remote control system 100 can include an MPD server 103. The MPD server 103 performs processing related to registration and provision of media presentation description (MPD) on the local system 101 and the remote system 102. The local system 101 and the remote system 102 can select and acquire necessary information using this MPD. Of course, the configuration of the MPD server 103 is also arbitrary, and the number thereof is also arbitrary.

This MPD server 103 can be omitted. For example, the local system 101 or the remote system 102 may supply MPD to the communication partner. Further, the local system 101 and the remote system 102 may exchange haptic data without using MPD, for example.

The network 110 is configured as, for example, any wired communication network or wireless network, or both, such as a local area network, a network by a dedicated line, a wide area network (WAN), the Internet, or satellite communication. Further, the network 110 may be configured as a plurality of communication networks.

<Local system>

Fig. 3 is a block diagram showing a main configuration example of the local system 101. As shown in Fig. 3, the local system 101 includes a haptic device 121, a communication device 122, a digital interface 123, and a digital interface 124.

The haptic device 121 is a device that can serve as an interface for a user or a remote device and generates haptic data or operates on the basis of the haptic data. In addition, the haptic device 121 can supply haptic data or the like to the communication device 122 via the digital interface 123, for example. Further, the haptic device 121 can acquire haptic data or the like supplied from the communication device 122 via the digital interface 124.

The communication device 122 can communicate with other devices via the network 110 (Fig. 2). The communication device 122 can exchange haptic data and exchange MPD through the communication, for example. Further, the communication device 122 can acquire haptic data or the like supplied from the haptic device 121 via the digital interface 123, for example. Further, the communication device 122 can supply haptic data or the like to the haptic device 121 via the digital interface 124. The digital interface 123 and the digital interface 124 are interfaces for digital apparatuses of arbitrary standards, such as a Universal Serial Bus (USB) (registered trademark) and a High-Definition Multimedia Interface (HDMI) (registered trademark).

The haptic device 121 includes a sensor unit 131, a renderer 132, an actuator 133, and a haptic interface (I/F) 134.

The sensor unit 131 detects kinesthetic data, tactile data, and the like at an observation point in the haptic interface 134 and supplies the detected data to the communication device 122 as haptic data. The sensor unit 131 can also supply haptic data to the renderer 132.

The sensor unit 131 may include any sensor, for example, a magnetic sensor, an ultrasonic sensor, and a Global Positioning System (GPS) sensor that detect a position and a motion, a gyro sensor that detects a motional state such as an angular velocity, an acceleration sensor that detects an acceleration, and the like as long as it can detect necessary data. For example, the sensor unit 131 may include an image sensor 141 and a spatial coordinate conversion unit 142. The image sensor 141 supplies captured image data to the spatial coordinate conversion unit 142. The spatial coordinate conversion unit 142 derives spatial coordinates (coordinates of a three-dimensional coordinate system) of an observation point (for example, an articulation or the like) of the haptic interface 134 from the image. The spatial coordinate conversion unit 142 can supply the coordinate data to the communication device 122 and the renderer 132 as haptic data.

The image sensor 141 may have a detection function in a depth direction. In this way, the spatial coordinate conversion unit 142 can more easily derive spatial coordinates of an observation point using a captured image and a depth value thereof. Further, the sensor unit 131 may have a plurality of sensors.

The renderer 132 performs rendering using the haptic data supplied from the communication device 122 and transmitted from another external device to generate control information for the actuator. The renderer 132 supplies the control information to the actuator 133. The renderer 132 can also perform rendering using haptic data supplied from the sensor unit 131 (spatial coordinate conversion unit 142).

The actuator 133 drives the haptic interface 134 in response to the control information supplied from the renderer 132. For example, the actuator 133 causes the haptic interface 134 to reproduce a motion (kinesthetic sensation, a tactile sensation, or the like) represented by the transmitted haptic data.

The haptic interface 134 serves as an interface for kinesthetic data, tactile data, and the like for an operator that is a user, a remote device, or the like. For example, the haptic interface 134 is controlled by the actuator 133 to reproduces a motion, a tactile sensation, or the like corresponding to the haptic data output from the renderer 132.

The communication device 122 performs processing related to transmission/reception of haptic data. In the case of the example of Fig. 3, the communication device 122 includes a composer 151, a coding unit 152, a container processing unit 153, an MPD generation unit 154, an imaging unit 155, and a video coding unit 156.

The composer 151 converts haptic data supplied from the haptic device 121 (sensor unit 131) into a format for transmission (for example, generates a KT map which will be described later). The composer 151 supplies the haptic data for transmission to the coding unit 152. Further, the composer 151 can also supply the haptic data for transmission to the MPD generation unit 154.

The coding unit 152 acquires and codes the haptic data supplied from the composer 151 to generate coded data of the haptic data. The coding unit 152 supplies the coded data to the container processing unit 153.

The container processing unit 153 performs processing related to generation of transmission data. For example, the container processing unit 153 may acquire the coded data of the haptic data supplied from the coding unit 152, store the coded data in transmission data, and transmit it to the remote system 102.

Further, with respect to the haptic data generated in the haptic device 121, the communication device 122 can generate MPD that is control information for controlling reproduction of the haptic data.

For example, the MPD generation unit 154 may acquire haptic data from the composer 151, generate MPD with respect to the haptic data, and supply the generated MPD to the coding unit 152. In such a case, the coding unit 152 can acquire the MPD supplied from the MPD generation unit 154 and code the MPD to generate coded data of the MPD, and supply the coded data to the container processing unit 153. The container processing unit 153 can store the coded data of the MPD supplied from the coding unit 152 in transmission data and transmit it to, for example, the MPD server 103. The container processing unit 153 may transmit the transmission data in which the coded data of the MPD is stored to the remote system 102.

Furthermore, the communication device 122 can also transmit data that is not haptic data. For example, the communication device 122 can image the haptic device 121 and transmit the captured image to the remote system 102.

For example, the imaging unit 155 may include an image sensor or the like, image the haptic device 121 (or a user of the haptic device 121), generate captured image data, and supply the captured image data to the video coding unit 156. The video coding unit 156 can acquire and code the captured image data supplied from the imaging unit 155 to generate coded data of the captured image data and supply the coded data to the container processing unit 153. In such a case, the container processing unit 153 can store the coded data of the captured image data supplied from the video coding unit 156 in the transmission data, and transmit the transmission data to, for example, the remote system 102.

Further, the communication device 122 includes a container processing unit 161, a decoding unit 162, an MPD control unit 163, a video decoding unit 164, and a display unit 165.

The container processing unit 161 performs processing of extracting desired data from the transmission data. For example, the container processing unit 161 can receive the transmission data transmitted from the remote system 102, extract the coded data of the haptic data from the transmission data, and supply the extracted coded data to the decoding unit 162.

The decoding unit 162 can acquire the coded data of the haptic data supplied from the container processing unit 161 and decode it to generate the haptic data and supply the generated haptic data to (the renderer 132 of) the haptic device 121.

In addition, the communication device 122 can control reproduction of haptic data using the MPD.

For example, the container processing unit 161 can acquire transmission data in which MPD corresponding to desired haptic data is stored from the MPD server 103, extract coded data of the MPD from the transmission data, and supply it to the decoding unit 162. The decoding unit 162 can decode the coded data to generate the MPD and supply the MPD to the MPD control unit 163. The MPD control unit 163 can acquire the MPD supplied from the decoding unit 162, control the container processing unit 161 using the MPD, and cause the transmission data in which the coded data of the desired haptic data is stored to be acquired.

Further, the communication device 122 can also receive data that is not haptic data. For example, the communication device 122 can receive a captured image of the haptic device 121 from the remote system 102.

In such a case, the container processing unit 161 can receive transmission data transmitted from the remote system 102, extract coded data of captured image data from the transmission data, and supply the extracted coded data to the video decoding unit 164. The video decoding unit 164 can acquire the coded data supplied from the container processing unit 161 and decode the coded data to generate the captured image data and supply the generated captured image data to the display unit 165. The display unit 165 includes an arbitrary display device such as a monitor or a projector and can display the captured image corresponding to the supplied captured image data.

The remote system 102 can have the same configuration as the local system 101. That is, the description given with reference to Fig. 3 can also be applied to the remote system 102.

<MPD server>

Fig. 4 is a block diagram showing a main configuration example of the MPD server 103. In the MPD server 103 shown in Fig. 4, a central processing unit (CPU) 201, a read only memory (ROM) 202, and a random access memory (RAM) 203 are connected via a bus 204.

An input/output interface 210 is also connected to the bus 204. An input unit 211, an output unit 212, a storage unit 213, a communication unit 214, and a drive 215 are connected to the input/output interface 210.

The input unit 211 may include any input device such as a keyboard, a mouse, a microphone, a touch panel, an image sensor, a motion sensor, or various other sensors. Further, the input unit 211 may include an input terminal. The output unit 212 may include any output device such as a display, a projector, a speaker, or the like. Further, the output unit 212 may include an output terminal.

The storage unit 213 includes, for example, an arbitrary storage medium such as a hard disk, a RAM disk, or a non-volatile memory, and a storage control unit that writes or reads information to or from the storage medium. The communication unit 214 includes, for example, a network interface. The drive 215 drives an arbitrary removable recording medium 221 such as a magnetic disk, an optical disc, a magneto-optical disc, or a semiconductor memory and writes or reads information to or from the removable recording medium 221.

In the MPD server 103 configured as described above, the CPU 201 realizes various functions indicated by functional blocks which will be described later, for example, by loading a program stored in the storage unit 213 into the RAM 203 via the input/output interface 210 and the bus 204 and executing the program. The RAM 203 also appropriately stores data and the like necessary for the CPU 201 to execute various types of processing of the program.

A program executed by a computer can be recorded on a removable recording medium 221 as package media or the like and applied thereto, for example. In such a case, the program can be installed in the storage unit 213 via the input/output interface 210 by mounting the removable recording medium 221 in the drive 215.

This program can also be provided via a wired or wireless transmission medium such as a local area network, a dedicated line network, or a WAN, the Internet, satellite communication, or the like. In such a case, the program can be received by the communication unit 214 and installed in the storage unit 213.

In addition, this program can be installed in the ROM 202 or the storage unit 213 in advance.

<Force representation/transmission of multiple articulations information>

For example, the remote control system 100 represents a force applied to a device position (articulation, or the like) of the haptic interface 134 when a force is applied to an object such as a stylus or a handle mounted on the haptic interface 134, as shown in Fig. 5.

In addition, the remote control system 100 transmits haptic data (kinesthetic data and tactile data) with respect to a plurality of device positions (multiple articulations or the like).

In the following, it is assumed that haptic data includes at least one piece of kinesthetic data detected at a device position, tactile data detected at the device position, and force data representing a force applied to the device position.

When only a motion of an end part is reproduced, even one piece of position information can be represented, but a motion of a articulation point from a viewpoint to the end cannot be faithfully reproduced, limiting the usage. If articulation points are configured in multiple stages, and the position of each articulation point and information on a point of action such as a force or a torque at the position of each articulation point need to be reproduced, more accurate control can be performed by describing rotation information of yaw/pitch/roll of sensor output and information on the force/torque with respect to each articulation point.

In addition, by describing each of multi-stage sensor outputs and transmitting connection information to a receiving side as metadata, more accurate tracing can be performed in a reproduction device on the receiving side. The remote control system 100 can realize high kinesthetic reproducibility by describing connection information of each articulation part composed of a kinesthetic sensor, and at the time of transmission, transmitting the connection information to the receiving side as metadata.

<Use case 1>

An application example of the remote control system 100 will be described. For example, a three-dimensional stimulation device 301 as shown in Fig. 6 may be applied as the haptic interface 134, and the remote control system 100 may be applied to a system that reproduces a motion of the three-dimensional stimulation device 301 at a remote location.

In the three-dimensional stimulation device 301, a rod-shaped object 302 is attached to the tip of an arm having a plurality of articulations and the position and posture of the object 302 are supported by the arm. In other words, when a user or the like moves the object 302 or changes the posture thereof, for example, the three-dimensional stimulation device 301 can detect a change in the position or posture of the object 302 by the arm.

The object 302 serves as, for example, a pen, a pointer, or the like. For example, when a user moves the object 302 to write letters or draw a line or a picture, the three-dimensional stimulation device 301 can detect a change in the position or posture of the object 302 by the arm and obtain haptic data capable of representing the change. For example, it is possible to reproduce a motion of the aforementioned object 302 by controlling a motion of a device having a drive mechanism similar to that of the three-dimensional stimulation device 301 using the haptic data.

As shown in Fig. 6, the arm has a plurality of articulations (movable parts). The sensor unit 131 uses the plurality of articulations of the three-dimensional stimulation device 301 (haptic interface 134) and the tip of the arm to which the object 302 is attached as observation points and detects haptic data with respect to each observation point.

For example, three articulation points of the arm are set as an observation point Art_1, an observation point Art_2, and an observation point Art_3 in order from the root side (left side in the figure). In addition, the tip (the position to which the object 302 is attached) of the arm is set as an observation point Art_4. The connection position relationship of the observation points is Art_1 -> Art_2 -> Art_3 -> Art_4 in order from the origin of a motion, and Art_1 is the origin of a motion and becomes a fulcrum of subsequent connection relationship. It is also possible to set the origin at another position and set Art_1 as a position having an offset from the origin.

The sensor unit 131 detects information about positions, information about a motion, and information about an applied force with respect to observation points as haptic data. The information about positions includes information indicating the positions of the observation points. The information about a motion includes information indicating a motion (amount of change in a posture) of the object 302 attached to an observation point. In the case of the example of Fig. 6, this information is obtained only for the observation point Art_4 to which the object 302 is attached. The information about an applied force includes information indicating the magnitude and direction (pushing, pulling, or the like) of a force applied in the vertical direction at an observation point. In the case of the example of Fig. 6, this force represents a force applied through the object 302. Therefore, this information is obtained only for the observation point Art_4 to which the object is attached.

The sensor unit 131 outputs information as shown in the table of Fig. 7 as haptic data. The example of Fig. 7 corresponds to the example of Fig. 6. In the table of Fig. 7, P_ID is identification information (ID) of an observation point. In the case of the example of Fig. 7, haptic data is detected with respect to four observation points A1 (Art_1 in Fig. 6) to A4 (Art_4 in Fig. 6). UPSP indicates an adjacent observation point (articulation point) located upstream in a fulcrum direction. For example, the UPSP of the observation point A2 (Art_2) is the observation point A1 (Art_1), the UPSP of the observation point A3 (Art_3) is the observation point A2 (Art_2), and the UPSP of the observation point A4 (Art_4) is the observation point A4 (Art_4). Since the observation point A1 (Art_1) is the highest observation point (on the first root side of the arm), the observation point A1 itself is assigned to the UPSP thereof.

A fulcrum articulation point position is information indicating the position of an observation point. The method of representing the position of an observation point is arbitrary. For example, the position of an observation point may be represented by coordinates (for example, xyz coordinates) with the fulcrum of the observation point as the origin (x1/y1/z1, x2/y2/z2, x3/y3/z3, x4/y4/z4). The radius of gyration r is uniquely obtained by taking the absolute value of a vector with an adjacent articulation point. Further, by combining these coordinates with the aforementioned connection position relationship between observation points, the position of each observation point can be represented by a single coordinate system.

The stimulus operation is information about a motion of an observation point. As described above, this information is obtained only for the observation point Art_4 to which the object is attached. The method of representing this motion is arbitrary. For example, as shown in Fig. 8, it may be represented by motions (velocity) in rotation directions (pitch, yaw, and roll) having coordinate axes of x, y, and z as rotation axes (pt4/yw4/rl4).

The force is information about a force applied to an observation point. As described above, this information is obtained only for the observation point Art_4 to which the object is attached. The method of representing this force is arbitrary. For example, it may be represented by the magnitude of a force (N4), such as Newton (N). In addition, the direction of the force may be indicated by the sign of a value. For example, a positive value may indicate a force in a direction of pushing the object 302 toward the observation point Art_4, and a negative value may indicate a force in a direction of moving the object 302 away from the observation point Art_4 (direction of pulling). Further, the mass (m) of the arm or the like may be used as known information, and an acceleration (a) may be used to represent this force (F = ma).

Meanwhile, observation points having motions that are chained (having motions that are related) may be grouped. In addition, a subgroup (Sub_Gp) may be formed of observation points having a stronger relationship among the observation points in the group. For example, since the observation points A1 to A4 are observation points of one three-dimensional stimulation device 301, they have related operations and thus can be grouped. In addition, since the observation points A1 to A4 are also observation points of one arm, they have a stronger relationship among their operations and thus can form a subgroup. In the case of the example of Fig. 7, a subgroup consisting of the observation point A1 and a subgroup consisting of the observation points A2 to A4 are formed. In this manner, an observation point on the most root side, which serves as a fulcrum may form a unique subgroup.

The table of Fig. 7 is an example, and haptic data output by the sensor unit 131 is not limited to the example of Fig. 7. Haptic data output by the sensor unit 131 may include at least one of kinesthetic data including information on a kinesthetic sensation detected at an observation point, tactile data including information on a tactile sensation detected at the observation point, and force data including information on the magnitude of a force applied to the observation point.

In the example of Fig. 7, the fulcrum articulation point position is information about the position of an observation point and information on a kinesthetic sensation. Further, the stimulus operation is information about the velocity of an observation point and information on a kinesthetic sensation. That is, data of the fulcrum articulation point position and the stimulus operation are included in kinesthetic data. In addition, the force is information about the magnitude of a force applied to an observation point. That is, data of the force is included in force data.

That is, haptic data output by the sensor unit 131 may include tactile data, or a part of the information shown in Fig. 7 may be omitted, for example.

The remote control system 100 can represent, for example, a motion of the object 302 that cannot be represented only using position information of the observation point Art_4 by transmitting haptic data with respect to a plurality of observation points, as in the example of Fig. 7. In addition, an applied force can also be represented. Therefore, it is possible to perform remote control with higher accuracy.

<Use case 2>

In addition, for example, a glove-type device 311 as shown in Fig. 9 may be applied as the haptic interface 134 and the remote control system 100 may be applied to a system that reproduces a motion of the glove-type device 311 at a remote location.

The glove-type device 311 is a device of a glove type, and when a user or the like wears the glove-type device on his/her hand like a glove and moves it, for example, a motion can be detected. As shown in Fig. 9, the sensor unit 131 uses the wrist, articulations, fingertips, and the like of the glove-type device 311 as observation points. An observation point A1 is the wrist of the glove-type device 311. Observation points A2 and A3 are articulations of the thumb, and an observation point B1 is the tip of the thumb. Observation points A4 to A6 are articulations of the index finger, and an observation point B2 is the tip of the index finger. Observation points A7 to A9 are articulations of the middle finger, and an observation point B3 is the tip of the middle finger. Observation points A10 to A12 are articulations of the ring finger, and an observation point B4 is the tips of the ring finger. Observation points A13 to A15 are articulations of the little finger, and an observation point B5 is the tip of the little finger.

As in the case of use case 1, the sensor unit 131 detects haptic data with respect to these observation points. For example, when a user wears the glove-type device 311 and grasps an object 312 (for example, a smartphone), as shown in Fig. 10, motions of the fingers, that is, motions of the respective observation points are detected by the sensor unit 131 and haptic data is output. The table of Fig. 11 shows an example of the haptic data.

The table of Fig. 11 shows P_ID, UPSP, and a fulcrum articulation positions with respect to each observation point, similarly to the example of Fig. 7. In addition, a stimulus operation is shown with respect to each of observation points (for example, observation points A2, A3, A6, A9, A12, and A15) in contact with the object 312. Further, a force applied to each of the observation points (for example, observation points B1 to B5) at the tips of the fingers is shown. The method of representing such information is arbitrary as in the case of use case 1.

In addition, in this case, as indicated by dotted line frames in the table of Fig. 11, the observation points are subgrouped for each finger. For example, the observation point A1 that is a fulcrum, the observation points A2, A3, and B1 of the thumb, the observation points A4, A5, A6, and B2 of the index finger, the observation points A7, A8, A9, and B3 of the middle finger, the observation points A10, A11, A12, and B4 of the ring finger, and the observation points A13, A14, A15, and B5 of the little finger are subgrouped, respectively.

The table of Fig. 11 is an example, and haptic data output by the sensor unit 131 is not limited to the example of Fig. 11. Haptic data output by the sensor unit 131 may include at least one of kinesthetic data including information on a kinesthetic sensation detected at an observation point, tactile data including information on a tactile sensation detected at the observation point, and force data including information on the magnitude of a force applied to the observation point.

In the example of Fig. 11, the fulcrum articulation point position is information about the position of an observation point and information on a kinesthetic sensation. Further, the stimulus operation is information about the velocity of an observation point and information on a kinesthetic sensation. That is, data of the fulcrum articulation point position and the stimulus operation are included in kinesthetic data. In addition, the force is information about the magnitude of a force applied to an observation point. That is, data of the force is included in force data.

That is, haptic data output by the sensor unit 131 may include tactile data, or a part of the information shown in Fig. 11 may be omitted, for example.

The remote control system 100 can represent, for example, a motion of the object 302 that cannot be represented only using position information of the observation points B1 to B5 at the fingertips by transmitting haptic data with respect to a plurality of observation points

as in the example of Fig. 11. In addition, an applied force can also be represented. Therefore, it is possible to perform remote control with higher accuracy.

<KT map>

Each piece of information of haptic data with respect to a plurality of observation points as described above may be integrated for each observation point (may be classified for each observation point) using, for example, a kinesthetic & tactile (KT) map 331 shown in Fig. 12. The KT map shown in Fig. 12 is a table in which haptic data with respect to each observation point is integrated for each observation point (classified for each observation point).

As shown in Fig. 12, in this KT map 331, observation points are grouped, and identification information (group ID) of each group is shown. In such a group, identification information (P_ID) of each observation point is indicated, and information such as UPSP, a fulcrum articulation point position, a stimulus operation, force (N), hardness (G), a coefficient of friction ($\mu$), and temperature (°C) are associated for each P_ID.

The P_ID, UPSP, fulcrum articulation point position, stimulus operation, and force (N) are the same information as those in Fig. 7 and Fig. 11. The type of force may be pressure. Pressure is represented by a force applied to a unit area, and $N/m^2$ or Pascal P is the unit, for example. The hardness (G) is information indicating the hardness of the surface of an object with which the haptic interface 134 is in contact, which is detected at an observation point. Here, the unit representing the hardness is assumed to be rigidity. The rigidity is a kind of elastic modulus, which is a physical property value that determines the difficulty of deformation, and can be represented in Gpa. A larger Gpa value represents greater hardness. The coefficient of friction ($\mu$) is information indicating the coefficient of friction of the surface of an object with which the haptic interface 134 is in contact, which is detected at an observation point. The coefficient of friction can be obtained from a dimensionless quantity ($\mu = F/N$) obtained by dividing a frictional force by a normal force acting on a contact surface. The temperature (°C) is information indicating the temperature of the surface of an object with which the haptic interface 134 is in contact, which is detected at an observation point. That is, the hardness (G), the coefficient of friction ($\mu$), and the temperature (°C) are all information about the surface of the object with which the haptic interface 134 is in contact, that is, information on a tactile sensation. That is, this data is included in tactile data.

By forming the KT map 331 that integrates haptic data for each observation point in this manner, it is possible to more easily select and exchange haptic data of a desired observation point. Further, by configuring haptic data as the KT map 331 in the form of a table as shown in the example of Fig. 12, it is possible to more easily select and exchange desired information of a desired observation point. Therefore, it is possible to control and adjust loads of communication and processing related to transmission of haptic data.

Meanwhile, the KT map 331 may include haptic data for each observation point, and details thereof are not limited to the example shown in Fig. 12. For example, information that is not shown in Fig. 12 may be included in the KT map 331, or a part of the information shown in Fig. 12 may be omitted. Further, observation points may be subgrouped as in the case of the examples of Fig. 7 and Fig. 11.

<Use case 3>

The remote control system 100 can bidirectionally transmit such haptic data. For example, when a local operator operates the glove-type device 311, as shown in Fig. 13, haptic data (data of the position, velocity, and acceleration of each observation point, and the like, applied force data, and the like) detected at a plurality of observation points (black circles) of the glove-type device 311 is transmitted (forward) to a remote device 351 at a remote location. The remote device 351 is a hand-shaped device (so-called robot hand) corresponding to the glove-type device 311 and is the haptic interface 134 of the remote system 102.

The remote device 351 controls a plurality of control points (white circles) such as articulations thereof on the basis of the transmitted plurality of pieces of observation point haptic data to grip a predetermined object 352 (e.g., a ball or the like) that is a gripping target.

When haptic data such as kinesthetic data, tactile data, and force data is detected at a plurality of observation points (white circles) of the remote device 351 by grasping the object 352, the haptic data (data of the position, velocity, and acceleration of each observation point, and the like, applied force data, and the like) is transmitted (feedback) to the glove-type device 311 of the local operator. That is, in this case, there is a kinesthetic sensor at the force point (the part that grips the object) of the device, and the applied force is detected, quantified, and transmitted to the other party. The position of the force point is independent of the position of a articulation point and can be any position.

By performing feedback transmission in this manner, the glove-type device 311 can reproduce a reaction force at the time of gripping the object 352, which is detected by the remote device 351. That is, the local operator can feel the reaction force. Therefore, when the remote device 351 feeds back a force having the same magnitude as the received signal as the reaction force in the opposite direction, the local operator feels that the position is stable by grasping it with a finger. By adjusting the force applied to the glove-type device 311 such that the local operator can obtain such a feeling, remote control can be performed such that the remote device 351 can stably grip the object 352. That is, remote control can be performed with higher accuracy.

Meanwhile, this feedback transmission may be performed only when forward-transmitted kinesthetic data is updated by gripping the object 352.

<Use case 4>

Meanwhile, haptic data may be transmitted through wireless communication. For example, as shown in Fig. 14, the remote control system 100 may be applied to remote control of a robot hand 362 provided on a flying object 361 such as a so-called drone. In this case, a local operator operates the glove-type device 311 to input an operation for the robot hand 362. The local system 101 transmits position data and force data as kinesthetic data detected in the glove-type device 311 to the flying object 361 through wireless communication. The flying object 361 supplies the information to the robot hand 362, and the robot hand 362 is driven according to the control thereof to perform an operation such as grasping an object. When the robot hand 362 grasps an object or the like, position data and force data thereof are fed back to the glove-type device 311 as in the case of use case 3. The local operator can remotely control the robot hand 362 while experiencing a kinesthetic sensation, a tactile sensation, and the like reproduced by the glove-type device 311 on the basis of the fed back position data and force data.

Such remote control can be applied to, for example, an operation in which a rescue flying object 361 flies to a scene of an incident and grasps the body of a person found there by the robot hand 362 to rescue the person, and the like. For example, the robot hand 362 may move in conjunction with a hand of the local operator and hold the person around him/her. Further, at that time, it may be possible to confirm whether or not the local operator is holding the person through feedback transmission. Meanwhile, the feedback data may include video and audio data.

<Use case 5>

In addition, the remote control system 100 may be applied to a system that detects the state of the surface of a material by a remote device. For example, as shown in Fig. 15, when a local operator wears the glove-type device 311 and scans from the top to the bottom in the figure, haptic data detected in the glove-type device 311 is forward-transmitted to a remote device 371 at a remote location, and a motion of the glove-type device 311 is reproduced in the remote device 371. That is, the remote device 371 scans an object surface 372 from the top to the bottom in the figure.

According to this scanning, the remote device 371 detects a state of unevenness of the object surface 372, and the like. This haptic data is fed back to the glove-type device 311 on the side of the local operator. The glove-type device 311 reproduces the unevenness of the object surface 372 detected by the remote device 371 by a tactile actuator on the basis of the haptic data. Accordingly, the local operator can ascertain the unevenness that is not directly touched.

For example, regarding detection of a tactile sensation, the local operator can simultaneously detect ranges with widths by operating with two fingers with a predetermined force. When position information changes at a certain time, vibration with a frequency of $f = V/\lambda$ Hz is generated on the skin surface when tracing a material having surface unevenness intervals of $\lambda$ mm at a velocity V (mm/sec) calculated by the position information. When this vibration is traced, for example, it becomes as shown in Fig. 16. Accordingly, from position information of the two fingers (tactile points), it can be ascertained that feedback patterns of tactile data that is results of parallel scanning of the two fingers side by side have a similarity relation therebetween having a slight time difference. Therefore, it can be ascertained that the surface has unevenness diagonally at the distance scanned by the two fingers.

By comparing the positions of the two fingers and tactile feedback information obtained at the positions on the local side in this manner, it is possible to ascertain the shapes, unevenness, roughness, and smoothness of the surfaces of a plurality of positions more accurately and efficiently and to ascertain the texture and structure as surfaces. It is possible to control a degree of force to be applied on the remote side using force information transmitted from the local side. In this manner, the texture of an object surface can be ascertained by simultaneously scanning a plurality of points even in transmission of only a tactile sensation without distribution of a video.

<Use case 6>

Further, Extended Reality (XR) may be applied to the system. For example, as shown in Fig. 17, reality of sensation may be improved by displaying a video of a virtual hand. In the case of the example of Fig. 17, a local operator wears a glove-type device 311-1 and performs a virtual handshaking operation with a remote operator at a remote location. The remote operator also wears a glove-type device 311-2 and similarly performs a virtual handshaking operation with the local operator.

According to forward transmission and feedback transmission, haptic data detected in each glove-type device 311 is exchanged, and the motion is reproduced by a kinesthetic/tactile actuator of the glove-type device 311 of the other side.

In addition, the local operator is wearing a head mounted display (HMD) 381-1. Similarly, the remote operator is wearing a head mounted display (HMD) 381-2. When it is not necessary to distinguish the head mounted display 381-1 and the head mounted display 381-2 from each other in description, they are referred to as a head mounted display 381. The head mounted display 381 is equipped with an image sensor for recognizing the surroundings.

The head mounted display 381-1 displays a video of a virtual space including an image of a real hand corresponding to the glove-type device 311-1 operated by the local operator and an image of a virtual hand corresponding to the glove-type device 311-2 operated by the remote operator. The image of the virtual hand corresponding to the glove-type device 311 - 1 is generated on the basis of haptic data detected in the glove-type device 311-1. That is, the image of the real hand reproduces the state of the motion of the glove-type device 311-1 operated by the local operator. Similarly, the image of the virtual hand corresponding to the glove-type device 311-2 is generated on the basis of haptic data transmitted from the glove-type device 311-2. That is, this image of the virtual hand reproduces the state of the motion of the glove-type device 311-2 operated by the remote operator.

The local operator can perform shaking of virtual hands in the virtual space displayed on the head mounted display 381-1, for example, by operating the glove-type device 311-1 while viewing the video displayed on the head mounted display 381-1. Further, since the glove-type device 311-1 can reproduce kinesthetic sensation and a tactile sensation using the haptic data fed back from the glove-type device 311-2 by the kinesthetic/tactile actuator, the local operator can feel the motion and the amount of force of the other person's hand at the time of shaking hands, and sensation such as temperature. Further, in the case of this system, the local operator can view the video of handshaking, and thus the reality of the handshaking sensation can be improved.

The same applies to the remote operator side. The head mounted display 381-2 displays a video of a virtual space including an image of a virtual hand corresponding to the glove -type device 311-1 operated by the local operator and an image of a virtual hand corresponding to the glove-type device 311-2 operated by the remote operator. The image of the virtual hand corresponding to the glove-type device 311-1 is generated on the basis of haptic data transmitted from the glove-type device 311-1. That is, this image of the virtual hand reproduces the state of the motion of the glove-type device 311-1 operated by the local operator. Similarly, the image of the virtual hand corresponding to the glove-type device 311-2 is generated on the basis of haptic data detected in the glove-type device 311-2. That is, this image of the virtual hand reproduces the state of the motion of the glove-type device 311-2 operated by the remote operator.

The remote operator can perform shaking of the virtual hands in the virtual space displayed on the head mounted display 381-2, for example, by operating the glove-type device 311-2 while viewing the video displayed on the head mounted display 381-2. Further, since the glove-type device 311-2 can reproduce kinesthetic sensation and a tactile sensation using haptic data fed back from the glove-type device 311-1 by the kinesthetic/tactile actuator, the remote operator can feel the sensation of the other person's hand at the time of shaking the hands. Further, in the case of this system, the remote operator can view the video of the state of handshaking, and thus the reality of the handshaking sensation can be improved.

For example, the local system 101 represents the position of the glove-type device 311-1 using information such as an absolute coordinate position of a reference position RP1 (Reference Position 1), directions of absolute coordinate axes (horizontal plane and vertical direction), coordinate values in absolute coordinates (x, y, z), a reference observation point BP1 (e.g., fulcrum of Group1 (= Organ1)), and an offset from the reference position RP1.

Similarly, the remote system 102 represents the position of the glove-type device 311-2 using information such as an absolute coordinate position of a reference position RP2 (Reference Position 2), directions of absolute coordinate axes (horizontal plane and vertical direction), coordinate values in absolute coordinates (x, y, z), a reference observation point BP2 (e.g., fulcrum of Group2 (= Organ2)), and an offset from the reference position RP2.

By exchanging this information, relative positions of the glove-type device 311-1 and the glove-type device 311-2 can be derived and handshaking can be performed in a virtual space.

<Use case 7>

Further, in a system that realizes virtual handshaking between operators at remote locations like the system of Fig. 17, a local operator and a remote operator may perform handshaking with actual robot hands.

In this case, the head mounted display 381 is unnecessary. Instead, a robot hand 391-1 is provided near the local operator. The local operator operates the glove-type device 311-1 to actually shake a hand with the robot hand 391-1. The robot hand 391-1 is driven on the basis of haptic data transmitted from the glove-type device 311-2 and reproduces a motion of the glove-type device 311-2 operated by the remote operator. That is, the local operator and the remote operator can get a feeling (a kinesthetic sensation or tactile sensation) as if they are really shaking hands with each other. Moreover, since the actual robot hand 391-1 is driven, the local operator can improve the reality of the handshaking sensation.

The same applies to the remote operator side. That is, a robot hand 391-2 is provided near the remote operator. The remote operator operates the glove-type device 311-2 to actually shake a hand with the robot hand 391-2. The robot hand 391-2 is driven on the basis of haptic data transmitted from the glove-type device 311-1 and reproduces a motion of the glove-type device 311-1 operated by the local operator. That is, the local operator and the remote operator can get a feeling (a kinesthetic sensation or tactile sensation) as if they are really shaking hands with each other. Further, since the actual robot hand 391-2 is driven, the remote operator can improve the reality of the handshaking sensation.

For example, the local system 101 represents the position of the glove-type device 311-1 using information such as an absolute coordinate position of a reference position RP1 (Reference Position 1), directions of absolute coordinate axes (horizontal plane and vertical direction), coordinate values in absolute coordinates (x, y, z), a reference observation point BP1 (e.g., fulcrum of Group1 (= Organ1)), and an offset from the reference position RP1.

Similarly, the remote system 102 represents the position of the glove-type device 311-2 using information such as an absolute coordinate position of a reference position RP2 (Reference Position 2), directions of absolute coordinate axes (horizontal plane and vertical direction), coordinate values in absolute coordinates (x, y, z), a reference observation point BP2 (e.g., fulcrum of Group2 (= Organ2)), and an offset from the reference position RP2.

By exchanging this information, relative positions of the glove-type device 311-1 and the glove-type device 311-2 can be derived, and virtual handshaking (handshaking with the actual robot hand 391) can be performed.

<Renderer>

Next, the renderer 132 will be described. The renderer 132 may synthesize, for example, force data generated through a local operation and force data received remotely with respect to force data. Fig. 19 shows a main configuration example of the renderer 132 in such a case. As shown in Fig. 19, the renderer 132 in this case includes a synthesis unit 401. The synthesis unit 401 acquires force data (Force1 (power, direction)) supplied from the sensor unit 131 and generated through a local operation. Further, the synthesis unit 401 acquires force data (Force2 (power, direction)) supplied from the decoding unit 162 and received remotely. The synthesis unit 401 synthesizes the force data to generate control information (Synth_force (power, direction)) of the actuator 133. The synthesis unit 401 supplies the control information to the actuator 133.

In addition, the renderer 132 may correct a posture of a haptic system at an absolute position. Further, the renderer 132 may correct and map remote position information in a local positional relationship. Fig. 20 shows a main configuration example of the renderer 132 in such a case. In this case, the renderer 132 includes a positional relationship determination unit 411 and a position correction unit 412.

The positional relationship determination unit 411 determines a positional relationship between a reference position RP1 and a reference articulation point BP1 from local absolute coordinates 1. Similarly, it determines a positional relationship between RP1 and a local dependent articulation point CP1.

The position correction unit 412 obtains a positional relationship between a remote reference position RP2 and a remote reference observation point BP2 and a positional relationship of a remote dependent articulation point CP2 from remote absolute coordinates 2. These positional relationships are scaled and corrected in local positional relationships obtained as described above. Then, the corrected position data is sent to the actuator.

Meanwhile, the same processing may also be performed in a renderer on the remote side.

<Delay compensation by position detection sensor>

A predictor may be provided in a sensor that detects a motion on each of a local side and a remote side, and a position immediately after the corresponding position may be predicted using an immediately previous history. With this prediction function, it is possible to transmit a value (preemptive position data) that is ahead of the current position on the local side as position information that is actually transmitted.

On the remote side, feedback information at the preemptive data position is transmitted. When an actual motion on the local side has progressed, it is possible to obtain renderer output on the local side by receiving the feedback information from the remote side and tuning the feedback information such that it is reproduced by the actuator. The same can apply to sensor information transmitted from the remote side, and it is possible to obtain kinesthetic tactile information without feeling delay in renderer output of the remote side by returning a feedback of the local side for the preemptive position information from the remote side.

<Identification of absolute position>

An inclination with respect to the north may be detected using global positioning system (GPS) information and a 3-axis direction sensor to identify a fulcrum position of a haptic device and a set direction. In the GPS information, for example, information such as two-dimensional coordinates (latitude, longitude), elevation, and time is defined as spatial coordinates. Fig. 21 shows an example of describing GPS information in xml format.

<Deviation in vertical direction>

In addition, as shown in Fig. 22, for example, an acceleration sensor 421 may be used to obtain an inclination angle of a device 420 in which the acceleration sensor is provided. For example, when the acceleration sensor 421 is consistent with the direction in which gravity acts, the acceleration sensor 421 detects an acceleration of 9.8 m/sec². On the other hand, when the acceleration sensor 421 is disposed in the direction perpendicular to the direction in which gravity acts, the influence of gravity disappears and the output of the acceleration sensor 421 becomes 0. When an acceleration a of an inclination at an arbitrary angle θ is obtained as the output of the acceleration sensor 421, the inclination angle θ can be derived by the following formula (1).

$$\Theta = sin^{-1}\left(a \,/\, g\right) \cdot \cdot \cdot \;(1)$$

In this manner, a deviation of the haptic device in the vertical direction can be calculated.

<Other examples of haptic data (KT map)>

The configuration of haptic data (KT map) is arbitrary and is not limited to the above example. The haptic data in the example of Fig. 7 may be configured as shown in Fig. 23. The haptic data in the example of Fig. 11 may be configured as shown in Fig. 24. That is, the position, velocity, and acceleration of each observation point may be indicated as a fulcrum articulation point position.

<Coding of haptic data>

Values of haptic data (kinesthetic data, tactile data, force data) of an observation point dynamically change along the time axis as shown in the graph of Fig. 25, for example. Therefore, when such haptic data is coded, for example, a frame (haptic frame (haptic_frame)) may be formed at predetermined time intervals, as shown in Fig. 26.

In Fig. 26, the rectangles represent haptic data arranged in a time series, and the haptic data is separated at predetermined time intervals to form a haptic frame (haptic_frame) 451-1 and a haptic frame 451-2, a haptic frame 451-3, .... When it is not necessary to distinguish each haptic frame in description, it is referred to as a haptic frame 451.

In addition, it is possible to perform prediction between samples of haptic data in the haptic frame 451, and at the time of performing prediction, an increase in the amount of information is curbed.

As a one-dimensional data coding method, for example, there is deadband. In the case of the deadband method, for example, in one-dimensional data as shown in A of Fig. 27, only some data (data indicated by the black circle) in which immediately previous values considerably vary are coded, and coding of data in gray parts having small variation is omitted. At the time of decoding, coded/decoded data is duplicated for a section that has not been coded. Therefore, decoded data is as shown in B of Fig. 27. That is, in the case of the deadband method, there is a possibility that it is difficult to reproduce a minute change. On the contrary, when a motion with high definition is intended to be reproduced, the range of a perception threshold becomes very narrow and the frequency of data to be transmitted increases, and thus the coding efficiency may be reduced.

Therefore, in coding of haptic data, a difference is obtained between adjacent points in a time series, and the difference value is variable-length coded. For example, as shown in A of Fig. 28, a difference is derived between adjacent points in a time series in a haptic frame 451 of one-dimensional haptic data. For data at the beginning of a haptic frame, a difference is not derived and the value thereof is used intactly.

In this way, haptic data (difference value) for respective haptic frames becomes, for example, a curve 461 to a curve 464. Then, these difference values are quantized and additionally variable-length coded. In this way, the amount of information can be reduced and reduction in coding efficiency can be curbed as compared to a case where original data is coded intact. Further, when such coded data is decoded, the original data can be faithfully reconstructed as shown by a curve 465 shown in B of Fig. 28. Therefore, it is possible to curb decrease in reproduction accuracy due to coding/decoding such as the deadband method. That is, it is possible to reproduce a motion with high definition on a receiving side, and it is also possible to achieve a constant data compression effect at all times. This is the same in the case of a motion in three-dimensional space.

Meanwhile, when such prediction processing is performed, invalid decoded values due to an error at the time of transmission, and the like may be propagated to a subsequent sample, but it is possible to curb the propagation even if decoding has failed by configuring a haptic frame at predetermined time intervals, refreshing prediction at the beginning of the haptic frame, and performing coding without deriving difference values, as described above. Accordingly, it is possible to improve the resistance to transmission errors and the like, for example.

<Coding unit>

A main configuration example of the coding unit 152 (Fig. 3) in this case is shown in A of Fig. 29. In this case, the coding unit 152 includes a delay unit 501, an arithmetic operation unit 502, a quantization unit 503, and a variable length coding unit 504.

The delay unit 501 delays input haptic data (Input data (t)) to generate delayed haptic data (dd (t)). The arithmetic operation unit 502 derives a difference value (also referred to as a predicted residual value) (Predicted data (t)) between the input haptic data (Input data (t)) and the haptic data (dd (t)) delayed by the delay unit 501. That is, prediction is performed between samples and a predicted residual is derived. The quantization unit 503 quantizes the predicted residual value (Predicted data (t)) to generate a quantization coefficient (quantized data (t)). The variable length coding unit 504 variable-length-codes the quantization coefficient (quantized data (t)) to generate coded data (variable length code (t)) and outputs the coded data.

<Decoding unit>

In addition, a main configuration example of the decoding unit 162 in this case is shown in B of Fig. 29. In this case, the decoding unit 162 includes a variable length decoding unit 511, a dequantization unit 512, an arithmetic operation unit 513, and a delay unit 514.

The variable length decoding unit 511 variable-length-decodes the input coded data (variable length code (t)) to generate the quantization coefficient (quantized data (t)). The dequantization unit 512 dequantizes the quantization coefficient (quantized data (t)) to derive a dequantization coefficient (dequantized data (t)). This dequantization coefficient (dequantized data (t)) is a reconstructed predicted residual value (Predicted data' (t)). Since quantization is performed and it is irreversible depending on a quantization step width, this reconstructed predicted residual value (Predicted data' (t)) may not be the same as the predicted residual value (Predicted data (t)) of the coding unit 152.

The arithmetic operation unit 513 adds data (dd' (t)) obtained by delaying haptic data (Reconstructed data (t)) by the delay unit 514 to the dequantization coefficient (dequantized data (t)) to derive reconstructed haptic data (Reconstructed data (t)). That is, the arithmetic operation unit 513 generates haptic data of the current sample by adding the decoding result of the past sample to the predicted residual.

For example, if the haptic data (Input data (t)) value input to the coding unit 152 changes in the order of "2" → "8" → "4" → "6" → "10" in a time series, the haptic data (dd (t)), the predicted residual value (Predicted data (t)), the haptic data (dd' (t)), and the haptic data (Reconstructed data (t)) become values as shown in Fig. 30. Generally, mapping is performed such that a code length decreases as an input value approaches zero in variable-length coding, and thus the amount of information can be reduced and reduction in coding efficiency can be curbed.

In a haptic frame, information such as a fulcrum articulation point position, a stimulus operation, and a force is predicted between samples, as shown in A to C of Fig. 31, and is composed of unpredicted values and predicted residual values.

<Flow of haptic data transmission processing>

Next, processing executed in the local system 101 will be described. The local system 101 transmits haptic data by performing haptic data transmission processing. An example of the flow of this haptic data transmission processing will be described with reference to the flowchart of Fig. 32.

When haptic data transmission processing is started, the sensor unit 131 detects kinesthetic data, tactile data, force data, and the like at a plurality of observation points of the haptic interface 134 in step S101. In step S102, the sensor unit 131 generates multipoint haptic data using such information. In step S103, the composer 151 generates a KT map by performing integration of the multipoint haptic data for each observation point, and the like.

In step S104, the coding unit 152 codes the KT map using prediction between samples to generates coded data.

In step S105, the container processing unit 153 stores the coded data in a container and generates transmission data. In step S106, the container processing unit 153 transmits the transmission data.

When the transmission data including the haptic data is transmitted as described above, haptic data transmission processing ends.

In this way, haptic data of multiple observation points can be transmitted, and remote control can be performed with higher accuracy.

<Flow of haptic data reception processing>

Next, an example of a flow of haptic data reception processing will be described with reference to the flowchart of Fig. 33.

When haptic data reception processing is started, the container processing unit 161 receives transmitted data and extracts coded data in step S131. In step S132, the decoding unit 162 decodes the coded data to reproduce a KT map. In step S133, the decoding unit 162 reproduces the multipoint haptic data using the KT map.

In step S134, the renderer 132 performs rendering using the multipoint haptic data to reproduce control information for controlling the actuator 133.

In step S135, the actuator 133 drives the haptic interface 134 on the basis of the control information generated in step S134.

When the haptic interface 134 is driven, haptic data reception processing ends.

In this way, haptic data of a plurality of observation points can be received, and remote control can be performed with higher accuracy.

<3. Second embodiment>

<Application of MPD>

As described above, the remote control system 100 can also apply MPD to reproduction of haptic data. In such a case, the local system 101 can generate MPD with respect to haptic data detected thereby and register the MPD in the MPD server 103.

<Flow of MPD generation processing>

An example of a flow of MPD generation processing for generating such MPD will be described with reference to the flowchart of Fig. 34.

When MPD generation processing is started, the MPD generation unit 154 acquires multipoint haptic data from the composer 151 and generates MPD corresponding to the multipoint haptic data on the basis of the multipoint haptic data in step S161.

In step S162, the container processing unit 153 transmits the MPD generated in step S161 to the MPD server 103. When the MPD is transmitted, MPD transmission processing ends.

By generating MPD with respect to multipoint haptic data and registering it in the MPD server in this manner, reproduction control based on the MPD can be performed.

<Flow of MPD control processing>

An example of a flow of MPD control processing, which is processing related to reproduction control of haptic data using MPD, will be described with reference to the flowchart of Fig. 35.

When MPD control processing is started, the MPD control unit 163 requests and acquires MPD from the MPD server 103 via the container processing unit 161 in step S191.

In step S192, the MPD control unit 163 selects haptic data to be acquired on the basis of the MPD acquired through processing of step S191.

In step S193, the MPD control unit 163 requests the haptic data selected through processing of step S192 from the remote system 102 via the container processing unit 161.

Haptic data supplied on the basis of the aforementioned request can be acquired by the local system 101 performing the above-described haptic data reception processing.

<Configuration example of container>

A main configuration example of a container for storing haptic data is shown in A of Fig. 36. Haptic data is stored in, for example, a container (transmission data) in the ISO base media file format (ISOBMFF). In the case of this ISOBMFF, the container has an initialization segment (IS) and a media segment (MS), as shown in A of Fig. 36. Track identification information (trackID), a time stamp (Timestamp), and the like are stored in the MS. In addition, DASH MPD is associated with this MS.

A of Fig. 36 shows an example of a state of the container when the media segment is not fragmented. B of Fig. 36 shows an example of a state of the container when the media segment is fragmented. The media segment contains moof and mdat as a movie fragment.

DASH MPD is associated with moof of the media segment according to a group ID (Group_id). A of Fig. 37 shows an example in the case of transmission from a local side. B of Fig. 37 shows an example in the case of transmission from a remote side.

Further, when there are multiple haptic devices locally, one MPD can be associated with multiple moofs as shown in Fig. 38. Even in such a case, association is performed according to the group ID. As in this example, haptic data may be stored in different tracks for respective groups.

<Allocation of track>

Regarding haptic data, one group may be allocated to one track of a media file. Fig. 39 shows an example of a container configuration when the haptic data of the example of Fig. 7 is stored. In addition, Fig. 40 shows an example of a container configuration when the haptic data of the example of Fig. 11 is stored. Further, Fig. 41 shows an example of a container configuration when the haptic data of the example of Fig. 16 is stored.

<Data arrangement in file format>

For example, as shown in Fig. 42, haptic data of all the observation points of one haptic device 121 (haptic interface 134) may be disposed in one track of a container. In this case, a track is allocated to one file and moof is disposed independently within the track. haptic-SampleGroupEntry ('hsge') indicates an offset position between subparts at the same time, an offset position in ascending order on the time axis, an offset position between samples, and the like along with connection arrangement of each observation point. The same also applies when a coding target is tactile data. It is possible to easily approximately pick up only a necessary subptrep group according to the structure of observation points on the reproduction side according to subpt_grp_offset indicating an offset position between subparts.

Fig. 43 shows an example of a quantization table (Q_table), precision of value (Precision_of_positions), and connection chain (connection_chain). The connection_chain information indicates the placement order of coded sample elements when subpartrep_ordering_type is "interleaved." It is also possible to transmit and receive velocity and acceleration information instead of position. In addition, it is also possible to transmit and receive rotposition and rotvelocity information instead of rotacceleration.

<Consideration for error tolerance>

When the decoding unit 162 variable-length-decodes coding target data, the influence of deterioration due to an error in a transmission process may be minimized by detecting a predetermined code string (unique word) having a meaning different from that of normal data, the beginning of the next time data or the next haptic frame may be detected, and decoding processing may be restarted therefrom. An example is shown in Fig. 44. In Fig. 44, a diagonally hatched rectangle indicates identification information for identifying the frame top of a haptic frame according to a variable-length-coded unique word. Further, a rectangle in gray indicates identification information for identifying the top of time data (Time_data Top) according to the variable-length-coded unique word.

For example, "1111111111" may be a unique word for identifying the frame top of a haptic frame, and "1111111110" may be a unique word for identifying the top of time data (Time Data Top). That is, N "Is" may continue at the frame top of the haptic frame, (N-1) "Is" may continue at the top of the time data (Time Data Top), and a maximum of (N-2) "Is" may be continue in other pieces of coded data.

Even when packet loss occurs (it is possible to check with the checksum of an upper layer, or the like), a unique word can be detected by checking the number of consecutive 'Is' and recovery from a predetermined timing can be performed in a receiver.

<Securing reproduction selection system on receiving side>

There are cases where devices on transmitting and receiving sides have differed scales of articulation points (that is, the number of observation points on the transmitting side differs from the number of control points on the receiving side). When the number (M) of articulation points operated on the transmitting side differs from the number (P) of articulation points reproducible on the receiving side, particularly, when M>P, only a subpoint group corresponding to articulation points that can be reproduced by the receiving side may be decoded. For example, as shown in Fig. 45, only a subgroup (Sbgsp) to be reproduced may be selected, and other decoding or reproduction may be skipped. In the case of the example of Fig. 45, decoding or reproduction of subgroups (for example, Sbgsp4 and Sbgsp6) represented in gray is skipped.

At that time, as a decision on the receiving side, initial values of position information of articulation points are checked for each subgroup set included in each subrepresentation in MPD. Subgroup sets having many articulation points and position information which are close and can be reproduced in the receiver are adopted as reproduction targets. For example, when subgroup sets = 1, 2, 3, and 5 are adopted, the subgroups (subgroupset) represented in gray in Fig. 45 are skipped. At the time of skipping, Subpt_grp_offset information in the MPD is used.

Feedback information to the local side when reproduced in such a manner is transmitted from the remote side only by the adopted amount. According to this function, a wider range of types of reproduction devices can be used as haptic kinesthetic reproduction devices.

Fig. 46 shows an example of the moof syntax in the ISOBMFF file format corresponding to the KT map. In Fig. 46, /hsge and /connection_chain are elements provided to correspond to the KT map.

<Control of distribution target by MPD on receiving side>

The receiving side may access the MPD server 103, acquire and analyze an MPD file, consider a possible bandwidth in the network on the receiving side, and select an appropriate bit rate. Further, depending on the device configuration on the receiving side, control for selecting the scale of observation points to be delivered may be performed such that the scale is within a reproducible range.

In order to realize the above-described functions, a new schema is defined using supplementary descriptor in MPD.

For example, when the transmitting side receives a bit rate request via the MPD server 103, the transmitting side performs coding quantization control with a quantization step size that realizes the request. An example of MPD in such a case is shown in Fig. 47. Fig. 47 is an example of MPD corresponding to the haptic data of Fig. 11. The description of subrepresentation of Fig. 48 to Fig. 50 is inserted into the parts of frames 701 and 702 indicated by alternate long and short dash lines in Fig. 47. Position data, rotaccdate, and force data below subrepresentations of Fig. 48 to Fig. 50 indicate initial values of dynamic change. In this example, the total amount of coding bit rates can be selected from 4 Mbps or 2 Mbps.

In addition, when the transmitting side receives a request for reducing the scale of articulation points via the MPD server 103, the transmitting side reduces the number of subgroups (sub_group) and performs coding so as to realize the request. An example of MPD in such a case is shown in Fig. 51. Fig. 51 is an example of MPD corresponding to the haptic data of Fig. 11. The description of subrepresentation of Fig. 52 and Fig. 53 is inserted into the parts of frames 711 and 712 indicated by alternate long and short dash lines in Fig. 51. Position data, rotaccdate, and force data below subrepresentations of Fig. 52 and Fig. 53 indicate initial values of dynamic change. In this example, the number of subgroups can be selected from 6 and 4.

Although the examples of Fig. 47 to Fig. 53 describe MPD when haptic data is transmitted from a single kinesthetic device, haptic data may be transmitted from a plurality of kinesthetic devices. An example of MPD in such a case is shown in Fig. 54. In the case of the example of Fig. 54, two adaptation sets are provided. Different group IDs are allocated to the adaptation sets, and the adaptation sets correspond to different kinesthetic devices.

In addition, Fig. 55 shows an example of MPD corresponding to transmission of haptic data from the local system 101 to the remote system 102 when haptic data is bidirectionally transmitted. In this case, a request is performed for the remote system 102 such that the remote system 102 returns tactile data such as hardness, coefficient of friction, and temperature information in MPD corresponding to transmission from the local system 101. For example, <SupplementaryDesctiptor schemeIdUri = "urn:bicom:haptic3d:qrhardness" value = "ptB1queryhardness"/> in the MPD of Fig. 55 is a description of requesting that the remote system 102 will return "hardness" as tactile (tactile data). In addition, <SupplementaryDesctiptor schemeIdUri = "urn:bicom:haptic3d:qrfriction" value = "ptB1queryfriction"/> is a description requesting that the remote system 102 will return "coefficient of friction" as tactile (tactile data). Further, <SupplementaryDesctiptor schemeIdUri = "urn:bicom:haptic3d:qrtemp" value = "ptB1querytemperature"/> is a description requesting that the remote system 102 will return "temperature information" as tactile (tactile data). Similarly, <SupplementaryDesctiptor schemeIdUri = "urn:bicom:haptic3d:qrhardness" value = "ptB2queryhardness"/> in the MPD of Fig. 55 is a description requesting that the remote system 102 will return "hardness" as tactile (tactile data). In addition, <SupplementaryDesctiptor schemeIdUri = "urn:bicom:haptic3d:qrfriction" value = "ptB2queryfriction"/> is a description requesting that the remote system 102 will return "coefficient of friction" as tactile (tactile data). Further, <SupplementaryDesctiptor schemeIdUri = "urn:bicom:haptic3d:qrtemp" value = "ptB2querytemperature"/> is a description requesting that the remote system 102 will return "temperature information" as tactile (tactile data).

In addition, Fig. 56 shows an example of MPD corresponding to transmission (feedback transmission) of haptic data from the remote system 102 to the local system 101, which corresponds to the MPD of Fig. 55. In this feedback transmission, tactile data such as hardness, coefficient of friction, and temperature information are returned on the basis of requests in the MPD of Fig. 55. For example, <SupplementaryDesctiptor schemeIdUri = "urn:bicom:haptic3d:pthardness" value = "ptB1hardness"/> in the MPD of Fig. 56 is a description showing that "hardness" is fed back as tactile data and the initial value thereof is reflected in ptB1hardness in response to a request from the local system 101. In addition, <SupplementaryDesctiptor schemeIdUri = "urn:bicom:haptic3d:ptfriction" value = "ptB1friction"/> is a description showing that "coefficient of friction" is fed back as tactile data and the initial value thereof is reflected in ptB1friction in response to a request from the local system 101. Further, <SupplementaryDesctiptor schemeIdUri = "urn:bicom:haptic3d:pttemp" value = "ptB1temperature"/> is a description showing that "temperature information" is fed back as tactile data and the initial value thereof is reflected in ptB1temperature in response to a request from the local system 101. Similarly, <SupplementaryDesctiptor schemeIdUri = "urn:bicom:haptic3d:pthardness" value = "ptB2hardness"/> in the MPD of Fig. 56 is a description showing that "hardness" is fed back as tactile data and the initial value thereof is reflected in ptB2hardness in response to a request from the local system 101. In addition, <Supplementary-

Desctiptor schemeIdUri = "urn:bicom:haptic3d:ptfriction" value = "ptB2friction"/> is a description showing that "coefficient of friction" is fed back as tactile data and the initial value thereof is reflected in ptB2friction in response to a request from the local system 101. Further, <Supplementary Desctiptor schemeIdUri = "urn:bi-com:haptic3d:pttemp" value = "ptB2temperature"/> is a description showing that "temperature information" is fed back as tactile data and the initial value thereof is reflected in ptB2temperature in response to a request from the local system 101.

Fig. 57 is a diagram showing another example of MPD corresponding to transmission of haptic data from the local system 101 to the remote system 102 when haptic data is bidirectionally transmitted. In this case, a request is performed for the remote system 102 such that the remote system 102 returns vibration information as frequency and amplitude values in the MPD corresponding to transmission from the local system 101. For example, <SupplementaryDesctiptor schemeIdUri = "urn:bicom:haptic3d:qrvibfreqency" value = "ptB1queryvibfrequency"/> in the MPD of Fig. 57 is a description requesting that the remote system 102 will return vibration information as a frequency. In addition, <SupplementaryDesctiptor schemeIdUri = "urn:bicom:haptic3d:qrvibamplitude" value = "ptB1queryvibamplitude"/> is a description requesting that the remote system 102 will return vibration information as an amplitude value. Similarly, the <Supplementary Desctiptor schemeIdUri = "urn:bicom:haptic3d:qrvibfreqency" value = "ptB2queryvibfrequency"/> in the MPD of Fig. 57 is a description requesting that the remote system 102 will return vibration information as a frequency. In addition, <SupplementaryDesctiptor schemeIdUri = "urn:bicom:haptic3d:qrvibamplitude" value = "ptB2queryvibamplitude"/> is a description requesting that the remote system 102 will return vibration information as an amplitude value.

In addition, Fig. 58 shows an example of MPD corresponding to transmission (feedback transmission) of haptic data from the remote system 102 to the local system 101, which corresponds to the MPD of Fig. 57. In this feedback transmission, vibration information is returned as frequency and amplitude values on the basis of requests described in the MPD of Fig. 57. For example, <SupplementaryDesctiptor schemeIdUri = "urn:bicom:haptic3d:vibfreqency" value = "ptB1vibfrequency"/> in the MPD of Fig. 58 is a description showing that vibration information is fed back as a frequency and the initial value thereof is reflected in ptB1vibfrequency in response to a request from the local system 101. Further, for example, <SupplementaryDesctiptor schemeIdUri = "urn:bicom:haptic3d:vibamplitude" value = "ptB1vibamplitude"/> in the MPD of Fig. 58 is a description showing that vibration information is fed back as an amplitude value and the initial value thereof is reflected in ptB1vibamplitude in response to a request from the local system 101. Similarly, <SupplementaryDesctiptor schemeIdUri = "urn:bicom:haptic3d:vibfreqency" value = "ptB2vibfrequency"/> in the MPD of Fig. 58 is a description showing that vibration information is fed back as a frequency and the initial value thereof is reflected in ptB2vibfrequency in response to a request from the local system 101. Further, for example, <Supplementary-Desctiptor schemeIdUri = "urn:bicom:haptic3d:vibamplitude" value = "ptB2vibamplitude"/> in the MPD of Fig. 58 is a description showing that vibration information is fed back as an amplitude value and the initial value thereof is reflected in ptB2vibamplitude in response to a request from the local system 101.

Examples of MPD semantics are shown in Fig. 59 and Fig. 60.

<4. Third embodiment>

<Digital interface>

In one or both of the local system 101 and the remote system 102, transmission of haptic data between the haptic device 121 and the communication device 122 can be performed via the digital interface 123 or the digital interface 124 as shown in Fig. 3. As described above, an interface for digital devices of any standard can be applied to these digital interfaces. For example, Fig. 61 shows a main configuration example of the digital interface 123 when HDMI is applied. A main configuration example of the digital interface 124 when HDMI is applied is the same as the example of Fig. 61. In this case, transmission of haptic data between the haptic device 121 and the communication device 122 is performed using a transition minimized differential signaling (TMDS) channel of HDMI. Meanwhile, data transmitted through the TMDS channel can be considered as the same premise even if it is transmitted through an optical transmission line or radio waves.

Transmission of haptic data is performed in synchronization with video data or using a blanking period. Examples of states of insertion of metadata in this data island slot are shown in Fig. 62 and Fig. 63. In addition, an example of semantics is shown in Fig. 64. Further, an example of transmission formats of haptic data in the TMDS channel is show in Fig. 65.

<5. Supplement>

<Computer>

The above-described series of processing can be executed by hardware or software. When the series of processing is performed by software, a program including the software is installed in a computer. Here, the computer includes a computer which is embedded in dedicated hardware or, for example, a general-purpose personal computer capable of executing various functions by installing various programs.

Fig. 66 is a block diagram showing an example of a hardware configuration of a computer that executes the above-described series of processing according to a program.

In a computer 900 illustrated in Fig. 66, a central processing unit (CPU) 901, a read only memory (ROM) 902, and a random access memory (RAM) 903 are connected to each other via a bus 904.

An input/output interface 910 is also connected to the bus 904. An input unit 911, an output unit 912, a storage unit 913, a communication unit 914, and a drive 915 are connected to the input/output interface 910.

The input unit 911 may include, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a non-volatile memory, and the like. The communication unit 914 includes, for example, a network interface. The drive 915 drives a removable recording medium 921 such as a magnetic disk, an optical disc, a magneto-optical disk, or a semiconductor memory.

In the computer configured as above, for example, the CPU 901 performs the above-described a series of processing by loading a program stored in the storage unit 913 to the RAM 903 via the input/output interface 910 and the bus 904 and executing the program. Data and the like necessary for the CPU 901 to execute various kinds of processing are also appropriately stored in the RAM 903.

A program executed by a computer can be recorded on a removable recording medium 921 as package media or the like and applied thereto, for example. In such a case, the program can be installed in the storage unit 913 via the input/output interface 910 by mounting the removable recording medium 921 in the drive 915.

This program can also be provided via a wired or wireless transmission medium such as a local area network, a leased line network, or a WAN, the Internet, satellite communication, or the like. In this case, the program can be received by the communication unit 914 and installed in the storage unit 913.

In addition, the program can also be installed in advance in the ROM 902 or the storage unit 913.

<Application target of present technology>

Although each device of the remote control system 100 has been described above as an example to which the present technology is applied, the present technology can be applied to any configuration.

For example, the present technology can be applied to various electronic apparatuses such as a transmitter or a receiver (for example, a television receiver or a mobile phone) in satellite broadcasting, wired broadcasting such as cable TV, transmission on the Internet, a local area network, a network using a dedicated line, or a WAN, transmission to a terminal through cellular communication, and the like, or a device (for example, a hard disk recorder or a camera) that records an image on media such as an optical disc, a magnetic disk, and a flash memory or reproduces an image from these storage media.

For example, the present technology can be implemented as a configuration of a part of a device such as a processor (for example, a video processor) of a system large scale integration (LSI), a module (for example, a video module) using a plurality of processors or the like, a unit (for example, a video unit) using a plurality of modules or the like, or a set (for example, a video set) with other functions added to the unit.

For example, the present technology can also be applied to a network system configured by a plurality of devices. For example, the present technology may be implemented as cloud computing shared or processed in cooperation with a plurality of devices via a network. For example, the present technology can be implemented in a cloud service providing a service related to images (moving images) to any terminal such as a computer, an audio visual (AV) device, a portable information processing terminal, or an Internet of things (IoT) device.

In the present specification, a system means a set of a plurality of constituent elements (devices, modules (parts), or the like) and all the constituent elements may not be in the same casing. Accordingly, a plurality of devices accommodated in separate casings and connected via a network and a single device accommodating a plurality of modules in a single casing are all a system.

The above-described series of processing can be executed by hardware or software. When the series of processing is performed by software, a program including the software is installed in a computer. Here, the computer includes a computer which is embedded in dedicated hardware or, for example, a general-purpose personal computer capable of executing various functions by installing various programs.

<Others>

The embodiments of the present technology are not limited to the above-described embodiments, and various modifications can be made without departing from the essential spirit of the present technology.

For example, a configuration described as one device (or processing unit) may be divided and configured as a plurality of devices (or processing units). On the other hand, the configuration described above as the plurality of devices (or processing units) may be collected and configured as one device (or processing unit). A configuration other than the above-described configuration may be added to the configuration of each device (or each processing unit). Further, when the configuration or the operation are substantially the same in the entire system, a part of the configuration of a certain device (or processing unit) may be included in the configuration of another device (or another processing unit).

For example, the above-described program may be executed in any device. In this case, the device may have a necessary function (a functional block or the like) and may be able to obtain necessary information.

For example, each step of one flowchart may be executed by one device or may be shared and executed by a plurality of devices. Further, when a plurality of kinds of processing are included in one step, the plurality of kinds of processing may be performed by one device or may be shared and performed by a plurality of devices. In other words, a plurality of kinds of processing included in one step can also be executed as processing of a plurality of steps. In contrast, processing described as a plurality of steps can be collectively performed as one step.

For example, for a program executed by a computer, processing of steps of describing the program may be performed chronologically in order described in the present specification or may be performed in parallel or individually at a necessary timing such as the time of calling. That is, processing of each step may be performed in order different from the above-described order as long as inconsistency does not occur. Further, processing of steps describing the program may be performed in parallel to processing of another program or may be performed in combination with processing of another program.

For example, a plurality of technologies related to the present technology can be implemented independently alone as long as inconsistency does not occur. Of course, any number of modes of the present technology may be used in combination. For example, part or all of the present technology described in any of the embodiments may be implemented in combination with part or all of the present technology described in the other embodiments. Further, part or all of the above-described present technology may be implemented in combination with other technologies not described above.

The present technology can also be configured as follows.

(1) An information processing device including a transmission unit that transmits haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface.

(2) The information processing device according to (1), wherein the kinesthetic data includes information on positions of the observation points or information on velocity of the observation points.

(3) The information processing device according to (1) or (2), wherein the tactile data includes at least one piece of information on a hardness of another object in contact with the observation points, information on a coefficient of friction of the object, and information on a temperature of the object.

(4) The information processing device according to any one of (1) to (3), wherein the haptic data includes at least one piece of the kinesthetic data, the tactile data, and the force data classified for each observation point.

(5) The information processing device according to (4), wherein the haptic data further includes information indicating a relationship between the observation points.

(6) The information processing device according to (4) or (5), wherein the transmission unit stores the haptic data for each observation point in different tracks for respective groups of the observation points according to a control structure of the device and transmits the haptic data.

(7) The information processing device according to any one of (1) to (6), further including a coding unit that codes the haptic data to generate coded data, wherein the transmission unit transmits the coded data generated by the coding unit.

(8) The information processing device according to (7), wherein the coding unit performs prediction between samples to derive a predicted residual and codes the predicted residual to generate the coded data with respect to the haptic data.

(9) The information processing device according to any one of (1) to (8), further including a generation unit that generates control information for controlling reproduction of the haptic data,
wherein the transmission unit transmits the control information generated by the generation unit.

(10) An information processing method including transmitting haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface.

(11) An information processing device including a reception unit that receives haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface, and
a driving unit that drives a plurality of driven points of a device serving as an interface on the basis of the haptic data received by the reception unit.

(12) The information processing device according to (11), further including a control unit that controls the reception unit on the basis of control information for controlling reproduction of the haptic data, wherein the reception unit receives the haptic data designated by the control unit.

(13) The information processing device according to (12), wherein the reception unit receives the haptic data at a bit rate designated by the control unit.

(14) The information processing device according to (12) or (13), wherein the reception unit receives the haptic data of a group of the observation points designated by the control unit.

(15) The information processing device according to any one of (11) to (14), wherein the reception unit receives coded data of the haptic data, and the information processing device further includes a decoding unit that decodes the coded data received by the reception unit to generate the haptic data.

(16) The information processing device according to (15), wherein the coded data is coded data of a predicted residual of the haptic data, derived by performing prediction between samples, and the decoding unit decodes the coded data to generate the predicted residual, and adds a decoding result of a past sample to the predicted residual to generate the haptic data of a current sample.

(17) The information processing device according to (16), wherein the decoding unit detects a predetermined code string included in the coded data and identifies a start position of prediction between the samples.

(18) The information processing device according to any one of (11) to (17), further including a rendering processing unit that performs rendering processing of generating control information for controlling the driving unit on the basis of haptic data detected at observation points of the device having the driven points and the haptic data received by the receiving unit, wherein the driving unit drives the plurality of driven points of the device on the basis of the control information generated by the rendering processing unit.

(19) The information processing device according to (18), wherein the rendering processing unit corrects the control information using absolute coordinates.

(20) An information processing method including receiving haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface, and driving a plurality of driven points of a device serving as an interface on the basis of the received haptic data.

[Reference Signs List]

100 Remote control system
101 Local system
102 Remote system
103 MPD server
121 Haptic device
122 Communication device
131 Sensor unit
132 Renderer
133 Actuator
134 haptic interface
141 Image sensor
142 Spatial coordinate conversion unit
151 Composer
152 Coding unit
153 Container processing unit
154 MPD generation unit
155 Imaging unit
156 Video coding unit
161 Container processing unit
162 Decoding unit
163 MPD control unit
164 Video decoding unit
165 Display unit
301 Three-dimensional stimulation device
302 Object
311 Glove-type device
312 Object
331 KT map
351 Remote device
352 Object
353 Virtual object
361 Flying object
362 Robot hand
371 Remote device
372 Object surface
381 Head mounted display
391 Robot hand
401 Synthesis unit
411 Positional relationship determination unit
412 Position correction unit
420 Device
421 Acceleration sensor
451 Haptic frame
501 Delay unit
502 Arithmetic operation unit
503 Quantization unit
504 Variable length coding unit
511 Variable length decoding unit
512 Dequantization unit
513 Arithmetic operation unit
514 Delay unit

**Claims**

1. An information processing device comprising a transmission unit that transmits haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface.

2. The information processing device according to claim 1, wherein the kinesthetic data includes information on positions of the observation points or information on velocity of the observation points.

3. The information processing device according to claim 1, wherein the tactile data includes at least one piece of information on a hardness of another object in contact with the observation points, information on a coefficient of friction of the object, and information on a temperature of the object.

4. The information processing device according to claim 1, wherein the haptic data includes at least one piece of the kinesthetic data, the tactile data, and the force data classified for each observation point.

5. The information processing device according to claim 4, wherein the haptic data further includes information indicating a relationship between the observation points.

6. The information processing device according to claim 4, wherein the transmission unit stores the haptic data for each observation point in different tracks for respective groups of the observation points according to a control structure of the device and transmits the haptic data.

7. The information processing device according to claim 1, further comprising a coding unit that codes the haptic data to generate coded data, wherein the transmission unit transmits the coded data generated by the coding unit.

8. The information processing device according to claim 7, wherein the coding unit performs prediction between samples to derive a predicted residual and codes the predicted residual to generate the coded data with respect to the haptic data.

9. The information processing device according to claim 1, further comprising a generation unit that generates control information for controlling reproduction of the haptic data, wherein the transmission unit transmits the control information generated by the generation unit.

10. An information processing method comprising transmitting haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface.

11. An information processing device comprising: a reception unit that receives haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface; and a driving unit that drives a plurality of driven points of a device serving as an interface on the basis of the haptic data received by the reception unit.

12. The information processing device according to claim 11, further including a control unit that controls the reception unit on the basis of control information for controlling reproduction of the haptic data, wherein the reception unit receives the haptic data designated by the control unit.

13. The information processing device according to claim 12, wherein the reception unit receives the haptic data at a bit rate designated by the control unit.

14. The information processing device according to claim 12, wherein the reception unit receives the haptic data of a group of the observation points designated by the control unit.

15. The information processing device according to claim 11, wherein

    the reception unit receives coded data of the haptic data, and
    the information processing device further includes a decoding unit that decodes the coded data received by the reception unit to generate the haptic data.

16. The information processing device according to claim 15, wherein the coded data is coded data of a predicted residual of the haptic data, derived by performing prediction between samples, and

the decoding unit decodes the coded data to generate the predicted residual, and adds a decoding result of a past sample to the predicted residual to generate the haptic data of a current sample.

17. The information processing device according to claim 16, wherein the decoding unit detects a predetermined code string included in the coded data and identifies a start position of prediction between the samples.

18. The information processing device according to claim 11, further comprising a rendering processing unit that performs rendering processing of generating control information for controlling the driving unit on the basis of haptic data detected at observation points of the device having the driven points and the haptic data received by the receiving unit, wherein the driving unit drives the plurality of driven points of the device on the basis of the control information generated by the rendering processing unit.

19. The information processing device according to claim 18, wherein the rendering processing unit corrects the control information using absolute coordinates.

20. An information processing method comprising: receiving haptic data including at least one piece of kinesthetic data including information on a kinesthetic sensation detected at a plurality of observation points, tactile data including information on a tactile sensation detected at the observation points, and force data including information on a magnitude of force applied to the observation points with respect to the observation points of a device serving as an interface; and
driving a plurality of driven points of a device serving as an interface on the basis of the received haptic data.

Fig. 1

Fig. 2

EP 4 079 459 A1

Fig. 3

Fig. 4

Fig. 5

EP 4 079 459 A1

JOINT: Y AXIS, Z AXIS

STYLUS/HANDLE

Force DATA
push/pull

GIMBAL:
YAW
PITCH
ROLL

DEVICE POSITION

TURRET: X AXIS

Fig. 6

EP 4 079 459 A1

| P_ID | UPSP | FULCRUM ARTICULATION POINT POSITION | STIMULUS OPERATION | FORCE |
|---|---|---|---|---|
| A1 | A1 | x1/y1/z1 | | |
| A2 | A1 | x2/y2/z2 | | |
| A3 | A2 | x3/y3/z3 | | |
| A4 | A3 | x4/y4/z4 | pt4/yw4/rl4 | N4 |

Fig. 7

Fig. 8

Fig. 9

Fig. 10

Fig. 11

| P_ID | UPSP | FULCRUM JOINT POINT POSITION | STIMULUS OPERATION | FORCE |
|---|---|---|---|---|
| A1 | A1 | x1/y1/z1 | | |
| A2 | A1 | x2/y2/z2 | pt2/yw2/rℓ2 | |
| A3 | A2 | x3/y3/z3 | pt3/yw3/rℓ3 | |
| B1 | A3 | xb1/yb1/zb1 | | Nb1 |
| A4 | A1 | x4/y4/z4 | | |
| A5 | A4 | x5/y5/z5 | | |
| A6 | A5 | x6/y6/z6 | pt6/yw6/rℓ6 | |
| B2 | A6 | xb2/yb2/zb2 | | Nb2 |
| A7 | A1 | x7/y7/z7 | | |
| A8 | A7 | x8/y8/z8 | | |
| A9 | A8 | x9/y9/z9 | pt9/yw9/rℓ9 | |
| B3 | A3 | xb3/yb3/zb3 | | Nb3 |
| A10 | A1 | x10/y10/z10 | | |
| A11 | A10 | x11/y11/z11 | | |
| A12 | A11 | x12/y12/z12 | pt12/yw12/rℓ12 | |
| B4 | A12 | xb4/yb4/zb4 | | Nb4 |
| A13 | A1 | x13/y13/z13 | | |
| A14 | A13 | x14/y14/z14 | | |
| A15 | A14 | x15/y15/z15 | pt15/yw15/rℓ15 | |
| B5 | A15 | xb5/yb5/zb5 | | Nb5 |

Fig. 12

| P_ID | UPSP | FULCRUM JOINT POINT POSITION | STIMULUS OPERATION | FORCE (N) | HARDNESS (G) | COEFFICIENT OF FRICTION ($\mu$) | TEMPERATURE (°C) |
|------|------|------------------------------|--------------------|-----------|--------------|----------------------------------|-------------------|
| | | | | | | | |
| | | | | | | | |

Group_ID

331

Fig. 13

WHEN REMOTE DEVICE FEEDS BACK
FORCE HAVING SAME MAGNITUDE AS
RECEIVED SIGNAL AS REACTION FORCE IN
OPPOSITE DIRECTION, LOCAL OPERATOR
FEELS THAT POSITION IS STABLE BY
GRASPING IT WITH FINGER.

THERE IS FORCE SENSOR AT
FORCE POINT, AND APPLIED
FORCE IS DETECTED,
QUANTIFIED, AND TRANSMITTED
TO OTHER PARTY. POSITION OF
FORCE POINT IS INDEPENDENT
OF POSITION OF JOINT POINT
AND CAN BE ANY POSITION.

353

352

311

351

● POSITION/VELOCITY
/ACCELERATION DATA
↑ FORCE DATA

————— foward —————→

LOCAL OPERATOR

←————— feedback —————

REMOTE DEVICE

◉ POSITION/VELOCITY/ACCELERATION DATA
(IT IS NOT TRANSMITTED IF FORWARD DATA IS NOT UPDATED)
↑ FORCE FEEDBACK DATA

Fig. 14

WIRELESS COMMUNICATION

POSITION DATA, FORCE DATA
——— foward ———→

POSITION DATA, FORCE DATA
VIDEO/AUDIO DATA
——— feedback ———→

361

362
ROBOT HAND ACCORDING TO REMOTE CONTROL

RESCUE TARGET

LOCAL OPERATOR

311

STATE IN WHICH KINESTHETIC/TACTILE SENSOR AND DEVICE ARE PROVIDED ON EACH HAND

Fig. 15

SCAN FROM TOP TO BOTTOM

UNEVEN TEXTURE OF SURFACE

PROTRUSION DEPRESSION PROTRUSION

Art_2

Art_1

371

372

TRANSMIT INFORMATION OF POSITION, MOTION AND FORCE (PRESSURE) OF FINGER

—— foward ——→

TRANSMIT TACTILE INFORMATION (FRICTION, TEMPERATURE)

←—— feedback ——

SMOOTH OBJECT SURFACE PART

DETECT TACTILE SENSATION OF OBJECT SURFACE ACCORDING TO REMOTE SCANNING

SCAN FROM TOP TO BOTTOM

Art_2

Art_1

311

Position INFORMATION

LOCAL OPERATION

Fig. 16

EP 4 079 459 A1

SENSOR INFORMATION IS OUTPUT AS POSITIVE VALUE WHEN SURFACE IS
PROTRUDED AND AS NEGATIVE VALUE WHEN SURFACE IF DEPRESSED.

time

Art_1     tactile1

Art_2     tactile2

Fig. 17

EP 4 079 459 A1

POSITION IS REPRESENTED USING ABSOLUTE COORDINATE POSITION OF RP1 (REFERENCE POSITION), DIRECTIONS OF ABSOLUTE COORDINATE AXES (HORIZONTAL PLANE AND VERTICAL DIRECTION), COORDINATE VALUES IN ABSOLUTE COORDINATES (X, Y, Z), REFERENCE ARTICULATION POINT BP1 (FULCRUM OF GROUP1 (=ORGAN1)), AND OFFSET FROM RP1

POSITION IS REPRESENTED USING ABSOLUTE COORDINATE POSITION OF RP2 (REFERENCE POSITION), DIRECTIONS OF ABSOLUTE COORDINATE AXES (HORIZONTAL PLANE AND VERTICAL DIRECTION), COORDINATE VALUES IN ABSOLUTE COORDINATES (X, Y, Z), REFERENCE ARTICULATION POINT BP2 (FULCRUM OF GROUP2 (=ORGAN2)), AND OFFSET FROM RP2

MHD

381-1

POSITION DATA、FORCE DATA
(VIDEO/AUDIO DATA)

————— foward —————→

RP1

BP1

POSITION DATA、FORCE DATA
(VIDEO/AUDIO DATA)

←————— feedback —————

311-1

MHD

381-2

BP2

RP2

311-2

LOCAL OPERATOR

REMOTE OPERATOR

Fig. 18

POSITION IS REPRESENTED USING : ABSOLUTE COORDINATE POSITION OF RP1 (REFERENCE POSITION), DIRECTIONS OF ABSOLUTE COORDINATE AXES (HORIZONTAL PLANE AND VERTICAL DIRECTION), COORDINATE VALUES IN ABSOLUTE COORDINATES (X, Y, Z), REFERENCE ARTICULATION POINT BP1 (FULCRUM OF GROUP1 (=ORGAN1)), AND OFFSET FROM RP1. POSITION IS REPRESENTED USING DEPENDENT JOINT POINT CP1 (FULCRUM OF GROUP2(=ORGAN2)) AND OFFSET FROM RP1

POSITION IS REPRESENTED USING : ABSOLUTE COORDINATE POSITION OF RP2 (REFERENCE POSITION), DIRECTIONS OF ABSOLUTE COORDINATE AXES (HORIZONTAL PLANE AND VERTICAL DIRECTION), COORDINATE VALUES IN ABSOLUTE COORDINATES (X, Y, Z), REFERENCE ARTICULATION POINT BP2 (FULCRUM OF GROUP3 (=ORGAN3)), AND OFFSET FROM RP2. POSITION IS REPRESENTED USING DEPENDENT JOINT POINT CP2 (FULCRUM OF GROUP4(=ORGAN4)) AND OFFSET FROM RP2

POSITION INFORMATION AND FORCE DATA FROM LOCAL OPERATOR IS REPRODUCED AT REMOTE

POSITION INFORMATION AND FORCE DATA FROM REMOTE OPERATOR IS REPRODUCED AT LOCAL

POSITION DATA, FORCE DATA — foward

POSITION DATA, FORCE DATA — feedback

REMOTE

BP2
311-2
CP2
391-2
RP2
Device 21 (group3)
Device 22 (group4)
REMOTE OPERATOR
REMOTE ROBOT HAND

LOCAL

391-1
CP1
BP1
311-1
RP1
Device 11 (group1)
Device 12 (group2)
LOCAL OPERATOR
LOCAL ROBOT HAND

Fig. 19

EP 4 079 459 A1

Fig. 20

Fig. 21

EP 4 079 459 A1

```
<trkpt lat="36.291597" lon="140.117526">
<ele>67.91</ele>
<time>2012-12-01T00:59:58Z</time>
</trkpt>
```

Fig. 22

Fig. 23

| P_ID | UPSP | Position | Axis | | |
|---|---|---|---|---|---|
| A1 | A1 | Origin Position | X (Right) | Y (Forward) | Z (Down) |
| A2 | A1 | Articulation Position | X (Right) | Y (Forward) | Z (Down) |
| | | Articulation Velocity | X (Right) | Y (Forward) | Z (Down) |
| | | Articulation Acceleration | X (Right) | Y (Forward) | Z (Down) |
| A3 | A2 | Articulation Position | X (Right) | Y (Forward) | Z (Down) |
| | | Articulation Velocity | X (Right) | Y (Forward) | Z (Down) |
| | | Articulation Acceleration | X (Right) | Y (Forward) | Z (Down) |
| A4 | A3 | Articulation Position | X (Right) | Y (Forward) | Z (Down) |
| | | Articulation Velocity | X (Right) | Y (Forward) | Z (Down) |
| | | Articulation Acceleration | X (Right) | Y (Forward) | Z (Down) |
| | | Rotational Acceleration | Yaw (Right) | Pitch (Forward) | Roll (Down) |
| | | Rotational Velocity | Yaw (Right) | Pitch (Forward) | Roll (Down) |
| | | Rotational Position | Yaw (Right) | Pitch (Forward) | Roll (Down) |
| | | Force | F(N) | | |

Fig. 24

EP 4 079 459 A1

| P_ID | UPSP | Position | Axis | | |
|---|---|---|---|---|---|
| <u>A1</u> | A1 | Origin Position | X (Right) | Y (Forward) | Z (Down) |
| <u>A2</u> | A1 | Articulation Position | X (Right) | Y (Forward) | Z (Down) |
| | | Articulation Velocity | X (Right) | Y (Forward) | Z (Down) |
| | | Articulation Acceleration | X (Right) | Y (Forward) | Z (Down) |
| | | Rotational Acceleration | Yaw (Right) | Pitch (Forward) | Roll (Down) |
| | | Rotational Velocity | Yaw (Right) | Pitch (Forward) | Roll (Down) |
| | | Rotational Position | Yaw (Right) | Pitch (Forward) | Roll (Down) |
| | | Force | F(N) | | |
| A3 | A2 | Articulation Position | X (Right) | Y (Forward) | Z (Down) |
| | | Articulation Velocity | X (Right) | Y (Forward) | Z (Down) |
| | | Articulation Acceleration | X (Right) | Y (Forward) | Z (Down) |
| | | Rotational Acceleration | Yaw (Right) | Pitch (Forward) | Roll (Down) |
| | | Rotational Velocity | Yaw (Right) | Pitch (Forward) | Roll (Down) |
| | | Rotational Position | Yaw (Right) | Pitch (Forward) | Roll (Down) |
| | | Force | F(N) | | |

Fig. 25

(#) IN SETTING VALUE OF FORCE WITH RESPECT TO TARGET, FORCE PRESSING TARGET WITH RESPECT TO TANGENT PLANE IN VERTICAL DIRECTION IS REPRESENTED AS POSITIVE VALUE, AND FORCE PULLING TARGET WITH RESPECT TO TANGENT PLANE IN VERTICAL DIRECTION IS REPRESENTED AS NEGATIVE VALUE.

EP 4 079 459 A1

Fig. 26

STRUCTURE OF CODED
DATA IN FRAME

Haptics_frame 451-1　　Haptics_frame 451-2　　Haptics_frame 451-3

PREDICTION OF HEAD OF
FRAME IS REFRESHED

time

Fig. 27

Fig. 28

CODING

461 462 463 464

A

t

DECODING

465

B

t

Fig. 29

EP 4 079 459 A1

152

**A**

Input data(t) — 501 DELAY UNIT — dd(t) — 502 (−/+) — Predicted data(t) — 503 QUANTIZATION UNIT — quantized data(t) — 504 VARIABLE LENGTH CODING UNIT — variable length code(t)

**B**

variable length code(t) — 511 VARIABLE LENGTH DECODING UNIT — quantized data(t) — 512 DEQUANTIZATION UNIT — dequantized data(t) — 513 (+/+) — Reconstructed data(t)

dd'(t) — 514 DELAY UNIT

Fig. 30

| | | time → | | |
|---|---|---|---|---|
| Input data(t) | 2, | 8, | 4, | 6, 10 |
| dd(t) | 0, | 2, | 8, | 4, 6 |
| Predicted data(t) | 2, | 6, | -4, | 2, 4 |
| Reconst.data(t) | 2, | 8, | 4, | 6, 10 |
| dd'(t) | 0, | 2, | 8, | 4, 6 |

(NOTE) WHEN Q_step IS "1"

Fig. 31

Haptics_frame

PREDICTION OF HEAD
OF FRAME IS
REFRESHED

| Position_x(t0) | | Position_x(t1) | ■ ■ ■ | Position_x(tn) |
| Position_y(t0) | | Position_y(t1) | ■ ■ ■ | Position_y(tn) |
| Position_z(t0) | | Position_z(t1) | ■ ■ ■ | Position_z(tn) |

UNPREDICTED
VALUE

PREDICTED
RESIDUAL VALUE

PREDICTED
RESIDUAL VALUE

A

| R.acc_yaw(t0) | | R.acc_yaw(t1) | ■ ■ ■ | R.acc_yaw(tn) |
| R.acc_pitch(t0) | | R.acc_pitch(t1) | ■ ■ ■ | R.acc_pitch(tn) |
| R.acc_roll(t0) | | R.acc_roll(t1) | ■ ■ ■ | R.acc_roll(tn) |

UNPREDICTED
VALUE

PREDICTED
RESIDUAL VALUE

PREDICTED
RESIDUAL VALUE

B

| forcec(t0) | | force(t1) | ■ ■ ■ | force(tn) |

UNPREDICTED
VALUE

PREDICTED
RESIDUAL VALUE

PREDICTED
RESIDUAL VALUE

C

Fig. 32

```
( START HAPTICS DATA TRANSMISSION PROCESSING )
                      |
                      v
+-------------------------------------------+
|         DETECT KINESTHETIC DATA           | S101
+-------------------------------------------+
                      |
                      v
+-------------------------------------------+
|       GENERATE MULTIPOINT HAPTICS DATA    | S102
+-------------------------------------------+
                      |
                      v
+-------------------------------------------+
|              GENERATE KT MAP              | S103
+-------------------------------------------+
                      |
                      v
+-------------------------------------------+
|                  CODE                     | S104
+-------------------------------------------+
                      |
                      v
+-------------------------------------------+
|          GENERATE TRANSMISSION DATA       | S105
+-------------------------------------------+
                      |
                      v
+-------------------------------------------+
|                TRANSMIT                   | S106
+-------------------------------------------+
                      |
                      v
                 (   END   )
```

Fig. 33

```
┌─────────────────────────────────────────────────────┐
│  START HAPTICS DATA RECEPTION PROCESSING             │
└─────────────────────────────────────────────────────┘
                          │
                          ▼
┌─────────────────────────────────────────────────┐
│           RECEIVE TRANSMITTED DATA               │ S131
└─────────────────────────────────────────────────┘
                          │
                          ▼
┌─────────────────────────────────────────────────┐
│          DECODE AND REPRODUCE KT MAP             │ S132
└─────────────────────────────────────────────────┘
                          │
                          ▼
┌─────────────────────────────────────────────────┐
│        REPRODUCE MULTIPOINT HAPTICS DATA         │ S133
│                  USING KT MAP                    │
└─────────────────────────────────────────────────┘
                          │
                          ▼
┌─────────────────────────────────────────────────────┐
│ PERFORM RENDERING TO REPRODUCE CONTROL INFORMATION   │ S134
└─────────────────────────────────────────────────────┘
                          │
                          ▼
┌─────────────────────────────────────────────────┐
│            DRIVE HAPTICS INTERFACE               │ S135
└─────────────────────────────────────────────────┘
                          │
                          ▼
                   ┌────────────┐
                   │    END     │
                   └────────────┘
```

Fig. 34

```
        ( START MPD GENERATION )
        (      PROCESSING      )
                   │
                   ▼
   ┌───────────────────────────────┐  S161
   │   GENERATE MPD ON BASIS OF     │
   │   MULTIPOINT HAPTICS DATA      │
   └───────────────────────────────┘
                   │
                   ▼
   ┌───────────────────────────────┐  S162
   │        TRANSMIT MPD            │
   └───────────────────────────────┘
                   │
                   ▼
            (      END      )
```

Fig. 35

```
        ┌──────────────────────────┐
        │   START MPD CONTROL      │
        │      PROCESSING          │
        └──────────────────────────┘
                    │
                    ▼
   ┌────────────────────────────────────┐  S191
   │      REQUEST AND ACQUIRE MPD        │
   └────────────────────────────────────┘
                    │
                    ▼
   ┌────────────────────────────────────┐  S192
   │  SELECT HAPTICS DATA TO BE ACQUIRED ON │
   │       BASIS OF ACQUIRED MPD        │
   └────────────────────────────────────┘
                    │
                    ▼
   ┌────────────────────────────────────┐  S193
   │    REQUEST SELECTED HAPTICS DATA    │
   └────────────────────────────────────┘
                    │
                    ▼
              ┌───────────┐
              │    END    │
              └───────────┘
```

Fig. 36

EP 4 079 459 A1

A

B

Fig. 37

Media Segment

| moof | mdat |
|------|------|
| Track_id = 1<br>Group_id = 1<br>level<br>Subrep_id | Haptic_frame |

DASH MPD

Group_id = 1 Organ_id GPS/Gravitation
XYZ position

level
Subrep_id' s

TRANSMISSION FROM LOCAL SIDE

A

Media Segment

| moof | mdat |
|------|------|
| Track_id = 3<br>Group_id = 11<br>level<br>Subrep_id | Haptic_frame |

DASH MPD

Group_id = 11 Organ_id GPS/Gravitation
XYZ position

level
Subrep_id' s

TRANSMISSION FROM REMOTE SIDE

B

Fig. 38

Media Segment

DASH MPD

Group_id = 1 Organ_id GPS/Gravitation
XYZ position

level
Subrep_id's

Group_id = 2 Organ_id GPS/Gravitation
XYZ position

level
Subrep_id's

moof

Track_id = 1
Group_id = 1
level
Subrep_id

mdat

Haptic_frame

moof

Track_id = 2
Group_id = 2
level
Subrep_id

mdat

Haptic_frame

CASE WHERE THERE ARE TWO HANDS ON LOCAL SIDE

Fig. 39

CONTAINER
CONFIGURATION *level=1* (# of subgroup =1)

Sub group 1

A1 — H. Frame (Position_x, Position_y, Position_z)

A2 — H. Frame (Position_x, Position_y, Position_z)
     H. Frame (R.acc_yaw, R.acc_pitch, R_acc_roll)

A3 — H. Frame (Position_x, Position_y, Position_z)
     H. Frame (R.acc_yaw, R.acc_pitch, R_acc_roll)

A4 — H. Frame (Position_x, Position_y, Position_z)
     H. Frame (R.acc_yaw, R.acc_pitch, R_acc_roll)
     H. Frame (Force)

Fig. 40

EP 4 079 459 A1

CONTAINER
CONFIGURATION *level=6* (# of subgroup =6)

### Sub group 1

| A1 | H. Frame (Position_x, Position_y, Position_z) |

### Sub group 2

| A2 | H. Frame (Position_x, Position_y, Position_z) |
| | H. Frame (R.acc_yaw, R.acc_pitch, R_acc_roll) |
| A3 | H. Frame (Position_x, Position_y, Position_z) |
| | H. Frame (R.acc_yaw, R.acc_pitch, R_acc_roll) |
| B1 | H. Frame (Position_x, Position_y, Position_z) |
| | H. Frame (Force) |

### Sub group 3

| A4 | H. Frame (Position_x, Position_y, Position_z) |
| A5 | H. Frame (Position_x, Position_y, Position_z) |
| A6 | H. Frame (Position_x, Position_y, Position_z) |
| | H. Frame (R.acc_yaw, R.acc_pitch, R_acc_roll) |
| B2 | H. Frame (Position_x, Position_y, Position_z) |
| | H. Frame (Force) |

### Sub group 4

| A7 | H. Frame (Position_x, Position_y, Position_z) |
| A8 | H. Frame (Position_x, Position_y, Position_z) |
| A9 | H. Frame (Position_x, Position_y, Position_z) |
| | H. Frame (R.acc_yaw, R.acc_pitch, R_acc_roll) |
| B3 | H. Frame (Position_x, Position_y, Position_z) |
| | H. Frame (Force) |

### Sub group 5

| A10 | H. Frame (Position_x, Position_y, Position_z) |
| A11 | H. Frame (Position_x, Position_y, Position_z) |
| A12 | H. Frame (Position_x, Position_y, Position_z) |
| | H. Frame (R.acc_yaw, R.acc_pitch, R_acc_roll) |
| B4 | H. Frame (Position_x, Position_y, Position_z) |
| | H. Frame (Force) |

### Sub group 6

| A13 | H. Frame (Position_x, Position_y, Position_z) |
| A14 | H. Frame (Position_x, Position_y, Position_z) |
| A15 | H. Frame (Position_x, Position_y, Position_z) |
| | H. Frame (R.acc_yaw, R.acc_pitch, R_acc_roll) |
| B5 | H. Frame (Position_x, Position_y, Position_z) |
| | H. Frame (Force) |

Fig. 41

EP 4 079 459 A1

CONTAINER
CONFIGURATION *level=2* (# of subgroup =2)

Sub group 1

B 1 | H. Frame (tactile1)
H. Frame (Force1)

Sub group 2

B 2 | H. Frame (tactile2)
H. Frame (Force2)

Fig. 42

Fig. 43

EP 4 079 459 A1

```
Q_table                    // FUNCTIONAL LOGIC OF QUANTIZATION STEP SIZE INFORMATION
{
Length_of_table
Q_def_type
   if(Q_def_type ==1) {   // QUANTIZATION INFORMATION IS PROVIDED AS PARAMETER
       fixed_Q_step_type
           if(fixed_Q_step_type == 1)      step_size            // FIXED STEP VALUE
           else if (fixed_Q_step_type == 0) non_linear_coefficient  // COEFFICIENT VALUE OF NONLINEAR (CURVE OF SECOND ORDER)
           else                             user_defined_Q_step
   }
   else {                  // Q table is defined by stepsize values
       matrix(Q)
   }
}
```

```
Precision_of_positions   REPRESENT PRECISION (OR UNIT) OF VALUE
            000          1mm PRECISION
            001          5mm PRECISION
            010          10mm PRECISION
            011          50mm PRECISION
```

```
/ connection_chain

subpt_grp1:      A1position
subpt_grp2:      A2position, A2rotacceleration, A3position, A3rotacceleration, B1position, B1force
subpt_grp3:      A4position, A5position, A6position, A6rotacceleration, B2position, B2force
subpt_grp4:      A7position, A8position, A9position, A9rotacceleration, B3position, B3force
subpt_grp5:      A10position, A11position, A12position, A12rotacceleration, B4position, B4force
subpt_grp6:      A13position, A14position, A15position, A15rotacceleration, B5position, B5force
```

Fig. 44

Fig. 45

Fig. 46

EP 4 079 459 A1

```
moof
    traf  / tfhd
                        - track_id    (=Organ_id)
          / tfdt
                        - baseMediaDecodeTime
          / trun
                         - sample_count
                         - sample_composition_time_offset
                         - sample_length   (= frame length)

          / sgpd  (Sample Group Description Box)
                         - group_id(= SubRepresentation_id)
                         - grouping_type   = "haptics_media_subrepgroups"

          / hsge  (haptics sample group elements box)
                         - level (=NUMBER OF SUBGROUPS)
                         - subrep_id
                         - sampling_frequency
                         - subpartrep_ordering_type   = "interleaved"
                         - frame_offset
                         - tm_offset
                         - Subpt_grp_offset(tn)
                         - Q_table
                         - Precision_of_positions


          / connection_chain
```

Fig. 47

EP 4 079 459 A1

```
<MPD>
  <Period>
    <AdaptationSet mimeType="haptic/mp4" group="1">
      <SupplementaryDesctiptor schemeIdUri="urn:brdcst:codecType" value= "haptic_enc1"/>
      <SupplementaryDesctiptor schemeIdUri="urn:bicom:haptic3d:posture:poleward" value= "gpscompliant"/>
      <SupplementaryDesctiptor schemeIdUri="urn:bicom:haptic3d:direction:vertical" value= "gravitational"/>
      <SupplementaryDesctiptor schemeIdUri="urn:bicom:haptic3d:topographicposition:x" value= "x_position"/>
      <SupplementaryDesctiptor schemeIdUri="urn:bicom:haptic3d:topographicposition:y" value= "y_position"/>
      <SupplementaryDesctiptor schemeIdUri="urn:bicom:haptic3d:topographicposition:z" value= "z_position"/>
      <Representation id="1" bandwidth="400000">
        <baseURL>haptic_wf1_400.mp4</BaseURL>
        <SupplementaryDesctiptor schemeIdUri="urn:bicom:haptic3d:level" value= "6"/>
        <SupplementaryDesctiptor schemeIdUri="urn:bicom:haptic3d:organ_id" value= "1"/>
        <SupplementaryDesctiptor schemeIdUri="urn:bicom:haptic3d:samplingfreq" value= "1K"/>
        <SupplementaryDesctiptor schemeIdUri="urn:bicom:haptic3d:subpartrep_ordering_type_interleaved" value="1"/>
        <SupplementaryDesctiptor schemeIdUri="urn:bicom:haptic3d:qdeftype" value= "1"/>
        <SupplementaryDesctiptor schemeIdUri="urn:bicom:haptic3d:fixedqsteptype" value= "1"/>
        <SupplementaryDesctiptor schemeIdUri="urn:bicom:haptic3d:stepsize" value= "Q_stepsize1" />
        <SupplementaryDesctiptor schemeIdUri="urn:bicom:haptic3d:precision_of_positions" value= "001"/>
```

~701

```
      </Representation>
      <Representation id="2" bandwidth="200000">
        <baseURL>haptic_wf2_200.mp4</BaseURL>
        <SupplementaryDesctiptor schemeIdUri="urn:bicom:haptic3d:level" value= "6"/>
        <SupplementaryDesctiptor schemeIdUri="urn:bicom:haptic3d:organ_id" value= "1"/>
        <SupplementaryDesctiptor schemeIdUri="urn:bicom:haptic3d:samplingfreq" value= "1K"/>
        <SupplementaryDesctiptor schemeIdUri="urn:bicom:haptic3d:subpartrep_ordering_type_interleaved" value="1"/>
        <SupplementaryDesctiptor schemeIdUri="urn:bicom:haptic3d:qdeftype" value= "1"/>
        <SupplementaryDesctiptor schemeIdUri="urn:bicom:haptic3d:fixedqsteptype" value= "1"/>
        <SupplementaryDesctiptor schemeIdUri="urn:bicom:haptic3d:stepsize" value= "Q_stepsize2"/>
        <SupplementaryDesctiptor schemeIdUri="urn:bicom:haptic3d:precision_of_positions" value= "001"/>
```

~702

```
      </Representation>
    </AdaptationSet>
  </Period>
</MPD>
```

Fig. 48

```
<SubRepresentation id="A1" subgroupSet="A1">
      <SubPartRepresentation id="A1" subpartgroupSet="A1">
            <SupplementaryDesctiptor schemeIdUri="urn:bicom:haptic3d:ptupsp" value= "ptA1"/>
            <SupplementaryDesctiptor schemeIdUri="urn:bicom:haptic3d:ptposition" value= "ptA1position.x, ptA1position.y, ptA1position.z"/>
      </SubPartRepresentation>
</SubRepresentation>
<SubRepresentation id="A2" subgroupSet="A2">
      <SubPartRepresentation id="A2" subpartgroupSet="A2">
            <SupplementaryDesctiptor schemeIdUri="urn:bicom:haptic3d:ptupsp" value= "ptA1"/>
            <SupplementaryDesctiptor schemeIdUri="urn:bicom:haptic3d:ptposition" value= "ptA2position.x, ptA2position.y, ptA2position.z"/>
            <SupplementaryDesctiptor schemeIdUri="urn:bicom:haptic3d:ptrotacc" value= "ptA2rotacc.yaw, ptA2rotacc.pit, ptA2rotacc.rol"/>
      </SubPartRepresentation>
            <SubPartRepresentation id="A3" subpartgroupSet="A3">
            <SupplementaryDesctiptor schemeIdUri="urn:bicom:haptic3d:ptupsp" value= "ptA2"/>
            <SupplementaryDesctiptor schemeIdUri="urn:bicom:haptic3d:ptposition" value= "ptA3position.x, ptA3position.y, ptA3position.z"/>
            <SupplementaryDesctiptor schemeIdUri="urn:bicom:haptic3d:ptrotacc" value= "ptA3rotacc.yaw, ptA3rotacc.pit, ptA3rotacc.rol"/>
      </SubPartRepresentation>
      <SubPartRepresentation id="B1" subpartgroupSet="B1">
            <SupplementaryDesctiptor schemeIdUri="urn:bicom:haptic3d:ptupsp" value= "ptA3"/>
            <SupplementaryDesctiptor schemeIdUri="urn:bicom:haptic3d:ptposition" value= "ptB1position.x, ptB1position.y, ptB1position.z"/>
            <SupplementaryDesctiptor schemeIdUri="urn:bicom:haptic3d:ptforce" value= "ptB1forcedata"/>
      </SubPartRepresentation>
</SubRepresentation>
```

Fig. 49

EP 4 079 459 A1

```xml
<SubRepresentation id="A4" subgroupSet="A4">
        <SubPartRepresentation id="A4" subpartgroupSet="A4">
                <SupplementaryDesctiptor schemeIdUri="urn:bicom:haptic3d:ptupsp" value= "ptA1"/>
                <SupplementaryDesctiptor schemeIdUri="urn:bicom:haptic3d:ptposition" value= "ptA4positiondata"/>
        </SubPartRepresentation>
      <SubPartRepresentation id="A5" subpartgroupSet="A5">
                <SupplementaryDesctiptor schemeIdUri="urn:bicom:haptic3d:ptupsp" value= "ptA4"/>
                <SupplementaryDesctiptor schemeIdUri="urn:bicom:haptic3d:ptposition" value= "ptA5positiondata"/>
      </SubPartRepresentation>
      <SubPartRepresentation id="A6" subpartgroupSet="A6">
                <SupplementaryDesctiptor schemeIdUri="urn:bicom:haptic3d:ptupsp" value= "ptA5"/>
                <SupplementaryDesctiptor schemeIdUri="urn:bicom:haptic3d:ptposition" value= "ptA6positiondata"/>
                <SupplementaryDesctiptor schemeIdUri="urn:bicom:haptic3d:ptrotacc" value= "ptA6rotaccdata"/>
      </SubPartRepresentation>
      <SubPartRepresentation id="B2" subpartgroupSet="B2">
                <SupplementaryDesctiptor schemeIdUri="urn:bicom:haptic3d:ptupsp" value= "ptA6"/>
                <SupplementaryDesctiptor schemeIdUri="urn:bicom:haptic3d:ptposition" value= "ptB2positiondata"/>
                <SupplementaryDesctiptor schemeIdUri="urn:bicom:haptic3d:ptforce" value= "ptB2forcedata"/>
      </SubPartRepresentation>
</SubRepresentation>
<SubRepresentation id="A7" subgroupSet="A7">
        <SubPartRepresentation id="A7" subpartgroupSet="A7">
                <SupplementaryDesctiptor schemeIdUri="urn:bicom:haptic3d:ptupsp" value= "ptA1"/>
                <SupplementaryDesctiptor schemeIdUri="urn:bicom:haptic3d:ptposition" value= "ptA7positiondata"/>
        </SubPartRepresentation>
      <SubPartRepresentation id="A8" subpartgroupSet="A8">
                <SupplementaryDesctiptor schemeIdUri="urn:bicom:haptic3d:ptupsp" value= "ptA7"/>
                <SupplementaryDesctiptor schemeIdUri="urn:bicom:haptic3d:ptposition" value= "ptA8positiondata"/>
      </SubPartRepresentation>
      <SubPartRepresentation id="A9" subpartgroupSet="A9">
                <SupplementaryDesctiptor schemeIdUri="urn:bicom:haptic3d:ptupsp" value= "ptA8"/>
                <SupplementaryDesctiptor schemeIdUri="urn:bicom:haptic3d:ptposition" value= "ptA9positiondata"/>
                <SupplementaryDesctiptor schemeIdUri="urn:bicom:haptic3d:ptrotacc" value= "ptA9rotaccdata"/>
      </SubPartRepresentation>
      <SubPartRepresentation id="B3" subpartgroupSet="B3">
                <SupplementaryDesctiptor schemeIdUri="urn:bicom:haptic3d:ptupsp" value= "ptA9"/>
                <SupplementaryDesctiptor schemeIdUri="urn:bicom:haptic3d:ptposition" value= "ptB3positiondata"/>
                <SupplementaryDesctiptor schemeIdUri="urn:bicom:haptic3d:ptforce" value= "ptB3forcedata"/>
      </SubPartRepresentation>
</SubRepresentation>
```

Fig. 50

```
<SubRepresentation id="A10" subgroupSet="A10">
    <SubPartRepresentation id="A10" subpartgroupSet="A10">
        <SupplementaryDesctiptor schemeIdUri="urn:bicom:haptic3d:ptupsp" value= "ptA1"/>
        <SupplementaryDesctiptor schemeIdUri="urn:bicom:haptic3d:ptposition" value= "ptA10positiondata"/>
    </SubPartRepresentation>
    <SubPartRepresentation id="A11" subpartgroupSet="A11">
        <SupplementaryDesctiptor schemeIdUri="urn:bicom:haptic3d:ptupsp" value= "ptA10"/>
        <SupplementaryDesctiptor schemeIdUri="urn:bicom:haptic3d:ptposition" value= "ptA11positiondata"/>
    </SubPartRepresentation>
    <SubPartRepresentation id="A12" subpartgroupSet="A12">
        <SupplementaryDesctiptor schemeIdUri="urn:bicom:haptic3d:ptupsp" value= "ptA11"/>
        <SupplementaryDesctiptor schemeIdUri="urn:bicom:haptic3d:ptposition" value= "ptA12positiondata"/>
        <SupplementaryDesctiptor schemeIdUri="urn:bicom:haptic3d:ptrotacc" value= "ptA12rotaccdata"/>
    </SubPartRepresentation>
    <SubPartRepresentation id="B4" subpartgroupSet="B4">
        <SupplementaryDesctiptor schemeIdUri="urn:bicom:haptic3d:ptupsp" value= "ptA12"/>
        <SupplementaryDesctiptor schemeIdUri="urn:bicom:haptic3d:ptposition" value= "ptB4positiondata"/>
        <SupplementaryDesctiptor schemeIdUri="urn:bicom:haptic3d:ptforce" value= "ptB4forcedata"/>
    </SubPartRepresentation>
</SubRepresentation>
<SubRepresentation id="A13" subgroupSet="A13">
    <SubPartRepresentation id="A13" subpartgroupSet="A13">
        <SupplementaryDesctiptor schemeIdUri="urn:bicom:haptic3d:ptupsp" value= "ptA1"/>
        <SupplementaryDesctiptor schemeIdUri="urn:bicom:haptic3d:ptposition" value= "ptA13positiondata"/>
    </SubPartRepresentation>
    <SubPartRepresentation id="A14" subpartgroupSet="A14">
        <SupplementaryDesctiptor schemeIdUri="urn:bicom:haptic3d:ptupsp" value= "ptA13"/>
        <SupplementaryDesctiptor schemeIdUri="urn:bicom:haptic3d:ptposition" value= "ptA14positiondata"/>
    </SubPartRepresentation>
    <SubPartRepresentation id="A15" subpartgroupSet="A15">
        <SupplementaryDesctiptor schemeIdUri="urn:bicom:haptic3d:ptupsp" value= "ptA14"/>
        <SupplementaryDesctiptor schemeIdUri="urn:bicom:haptic3d:ptposition" value= "ptA15positiondata"/>
        <SupplementaryDesctiptor schemeIdUri="urn:bicom:haptic3d:ptrotacc" value= "ptA15rotaccdata"/>
    </SubPartRepresentation>
    <SubPartRepresentation id="B5" subpartgroupSet="B5">
        <SupplementaryDesctiptor schemeIdUri="urn:bicom:haptic3d:ptupsp" value= "ptA15"/>
        <SupplementaryDesctiptor schemeIdUri="urn:bicom:haptic3d:ptposition" value= "ptB5positiondata"/>
        <SupplementaryDesctiptor schemeIdUri="urn:bicom:haptic3d:ptforce" value= "ptB5forcedata"/>
    </SubPartRepresentation>
</SubRepresentation>
```

Fig. 51

EP 4 079 459 A1

```
<MPD>
  <Period>
    <AdaptationSet mimeType="haptic/mp4" group="1">
      <SupplementaryDesctiptor schemeIdUri="urn:brdcst:codecType" value= "haptic_enc1"/>
      <SupplementaryDesctiptor schemeIdUri="urn:bicom:haptic3d:posture:poleward" value= "gpscompliant"/>
      <SupplementaryDesctiptor schemeIdUri="urn:bicom:haptic3d:direction:vertical" value= "gravitational"/>
      <SupplementaryDesctiptor schemeIdUri="urn:bicom:haptic3d:topographicposition:x" value= "x_position"/>
      <SupplementaryDesctiptor schemeIdUri="urn:bicom:haptic3d:topographicposition:y" value= "y_position"/>
      <SupplementaryDesctiptor schemeIdUri="urn:bicom:haptic3d:topographicposition:z" value= "z_position"/>
      <Representation id="1" bandwidth="400000">
          <baseURL>haptic_wf1_400.mp4</BaseURL>
          <SupplementaryDesctiptor schemeIdUri="urn:bicom:haptic3d:level" value= "6"/>
          <SupplementaryDesctiptor schemeIdUri="urn:bicom:haptic3d:organ_id" value= "1"/>
          <SupplementaryDesctiptor schemeIdUri="urn:bicom:haptic3d:samplingfreq" value= "1k"/>
          <SupplementaryDesctiptor schemeIdUri="urn:bicom:haptic3d:subpartrep_ordering_type_interleaved" value="1"/>
          <SupplementaryDesctiptor schemeIdUri="urn:bicom:haptic3d:qdeftype" value= "1"/>
          <SupplementaryDesctiptor schemeIdUri="urn:bicom:haptic3d:fixedqsteptype" value= "1"/>
          <SupplementaryDesctiptor schemeIdUri="urn:bicom:haptic3d:stepsize" value= "Q_stepsize"/>
          <SupplementaryDesctiptor schemeIdUri="urn:bicom:haptic3d:precision_of_positions" value= "001"/>
```
<span>┌~711</span>
```
      </Representation>
      <Representation id="2" bandwidth="200000">
          <baseURL>haptic_wf2_200.mp4</BaseURL>
          <SupplementaryDesctiptor schemeIdUri="urn:bicom:haptic3d:level" value= "4"/>
          <SupplementaryDesctiptor schemeIdUri="urn:bicom:haptic3d:organ_id" value= "1"/>
          <SupplementaryDesctiptor schemeIdUri="urn:bicom:haptic3d:samplingfreq" value= "1k"/>
          <SupplementaryDesctiptor schemeIdUri="urn:bicom:haptic3d:subpartrep_ordering_type_interleaved" value="1"/>
          <SupplementaryDesctiptor schemeIdUri="urn:bicom:haptic3d:qdeftype" value= "1"/>
          <SupplementaryDesctiptor schemeIdUri="urn:bicom:haptic3d:fixedqsteptype" value= "1"/>
          <SupplementaryDesctiptor schemeIdUri="urn:bicom:haptic3d:stepsize" value= "Q_stepsize"/>
          <SupplementaryDesctiptor schemeIdUri="urn:bicom:haptic3d:precision_of_positions" value= "001"/>
```
<span>┌~712</span>
```
      </Representation>
    </AdaptationSet>
  </Period>
</MPD>
```

Fig. 52

```
<SubRepresentation id="A1" subgroupSet="1">
    <SubPartRepresentation id="A1" subpartgroupSet="A1">
        <SupplementaryDesctiptor schemeIdUri="urn:bicom:haptic3d:ptupsp" value= "ptA1"/>
        <SupplementaryDesctiptor schemeIdUri="urn:bicom:haptic3d:ptposition" value= "ptA1position.x, ptA1position.y, ptA1position.z"/>
    </SubPartRepresentation>
</SubRepresentation>
<SubRepresentation id="A2" subgroupSet="2">
    <SubPartRepresentation id="A2" subpartgroupSet="A2">
        <SupplementaryDesctiptor schemeIdUri="urn:bicom:haptic3d:ptupsp" value= "ptA1"/>
        <SupplementaryDesctiptor schemeIdUri="urn:bicom:haptic3d:ptposition" value= "ptA2position.x, ptA2position.y, ptA2position.z"/>
        <SupplementaryDesctiptor schemeIdUri="urn:bicom:haptic3d:ptrotacc" value= "ptA2rotacc.yaw, ptA2rotacc.pit, ptA2rotacc.rol"/>
    </SubPartRepresentation>
    <SubPartRepresentation id="A3" subpartgroupSet="A3">
        <SupplementaryDesctiptor schemeIdUri="urn:bicom:haptic3d:ptupsp" value= "ptA2"/>
        <SupplementaryDesctiptor schemeIdUri="urn:bicom:haptic3d:ptposition" value= "ptA3position.x, ptA3position.y, ptA3position.z"/>
        <SupplementaryDesctiptor schemeIdUri="urn:bicom:haptic3d:ptrotacc" value= "ptA3rotacc.yaw, ptA3rotacc.pit, ptA3rotacc.rol"/>
    </SubPartRepresentation>
    <SubPartRepresentation id="B1" subpartgroupSet="B1">
        <SupplementaryDesctiptor schemeIdUri="urn:bicom:haptic3d:ptupsp" value= "ptA3"/>
        <SupplementaryDesctiptor schemeIdUri="urn:bicom:haptic3d:ptposition" value= "ptB1position.x, ptB1position.y, ptB1position.z"/>
        <SupplementaryDesctiptor schemeIdUri="urn:bicom:haptic3d:ptforce" value= "ptB1forcedata"/>
    </SubPartRepresentation>
</SubRepresentation>
```

Fig. 53

EP 4 079 459 A1

```
<SubRepresentation id="A4" subgroupSet="3">
        <SubPartRepresentation id="A4" subpartgroupSet="A4">
                <SupplementaryDesctiptor schemeIdUri="urn:bicom:haptic3d:ptupsp" value="ptA1"/>
                <SupplementaryDesctiptor schemeIdUri="urn:bicom:haptic3d:ptposition" value="ptA4positiondata"/>
        </SubPartRepresentation>
        <SubPartRepresentation id="A5" subpartgroupSet="A5">
                <SupplementaryDesctiptor schemeIdUri="urn:bicom:haptic3d:ptupsp" value="ptA4"/>
                <SupplementaryDesctiptor schemeIdUri="urn:bicom:haptic3d:ptposition" value="ptA5positiondata"/>
        </SubPartRepresentation>
        <SubPartRepresentation id="A6" subpartgroupSet="A6">
                <SupplementaryDesctiptor schemeIdUri="urn:bicom:haptic3d:ptupsp" value="ptA5"/>
                <SupplementaryDesctiptor schemeIdUri="urn:bicom:haptic3d:ptposition" value="ptA6positiondata"/>
                <SupplementaryDesctiptor schemeIdUri="urn:bicom:haptic3d:ptrotacc" value="ptA6rotaccdata"/>
        </SubPartRepresentation>
        <SubPartRepresentation id="B2" subpartgroupSet="B2">
                <SupplementaryDesctiptor schemeIdUri="urn:bicom:haptic3d:ptupsp" value="ptA6"/>
                <SupplementaryDesctiptor schemeIdUri="urn:bicom:haptic3d:ptposition" value="ptB2positiondata"/>
                <SupplementaryDesctiptor schemeIdUri="urn:bicom:haptic3d:ptforce" value="ptB2forcedata"/>
        </SubPartRepresentation>
</SubRepresentation>
<SubRepresentation id="A10" subgroupSet="5">
        <SubPartRepresentation id="A10" subpartgroupSet="A10">
                <SupplementaryDesctiptor schemeIdUri="urn:bicom:haptic3d:ptupsp" value="ptA1"/>
                <SupplementaryDesctiptor schemeIdUri="urn:bicom:haptic3d:ptposition" value="ptA10positiondata"/>
        </SubPartRepresentation>
        <SubPartRepresentation id="A11" subpartgroupSet="A11">
                <SupplementaryDesctiptor schemeIdUri="urn:bicom:haptic3d:ptupsp" value="ptA10"/>
                <SupplementaryDesctiptor schemeIdUri="urn:bicom:haptic3d:ptposition" value="ptA11positiondata"/>
        </SubPartRepresentation>
        <SubPartRepresentation id="A12" subpartgroupSet="A12">
                <SupplementaryDesctiptor schemeIdUri="urn:bicom:haptic3d:ptupsp" value="ptA11"/>
                <SupplementaryDesctiptor schemeIdUri="urn:bicom:haptic3d:ptposition" value="ptA12positiondata"/>
                <SupplementaryDesctiptor schemeIdUri="urn:bicom:haptic3d:ptrotacc" value="ptA12rotaccdata"/>
        </SubPartRepresentation>
        <SubPartRepresentation id="B4" subpartgroupSet="B4">
                <SupplementaryDesctiptor schemeIdUri="urn:bicom:haptic3d:ptupsp" value="ptA12"/>
                <SupplementaryDesctiptor schemeIdUri="urn:bicom:haptic3d:ptposition" value="ptB4positiondata"/>
                <SupplementaryDesctiptor schemeIdUri="urn:bicom:haptic3d:ptforce" value="ptB4forcedata"/>
        </SubPartRepresentation>
</SubRepresentation>
```

Fig. 54

```
<MPD>
    <Period>
        <AdaptationSet mimeType="haptic/mp4" group="1">
            <SupplementaryDesctiptor schemeIdUri="urn:brdcst:codecType" value= "haptic_enc1"/>
            <Representation id="1" bandwidth="400000">
                <baseURL>haptic_wf1_400.mp4</BaseURL>
                <SupplementaryDesctiptor schemeIdUri="urn:bicom:haptic3d:posture:poleward" value= "gpscompliant"/>    (SETTING OF ABSOLUTE COORDINATES)
                <SupplementaryDesctiptor schemeIdUri="urn:bicom:haptic3d:direction:vertical" value= "gravitational"/>   (SETTING OF ABSOLUTE COORDINATES)
                <SupplementaryDesctiptor schemeIdUri="urn:bicom:haptic3d:topographicposition:x" value= "x_position"/>
                <SupplementaryDesctiptor schemeIdUri="urn:bicom:haptic3d:topographicposition:y" value= "y_position"/>
                <SupplementaryDesctiptor schemeIdUri="urn:bicom:haptic3d:topographicposition:z" value= "z_position"/>
                <SupplementaryDesctiptor schemeIdUri="urn:bicom:haptic3d:level" value= "6"/>
                <SupplementaryDesctiptor schemeIdUri="urn:bicom:haptic3d:organ_id" value= "1"/>    (= group_id = 1)
                <SupplementaryDesctiptor schemeIdUri="urn:bicom:haptic3d:qdeftype" value= "1"/>
                <SupplementaryDesctiptor schemeIdUri="urn:bicom:haptic3d:fixedqsteptype" value= "1"/>
                <SupplementaryDesctiptor schemeIdUri="urn:bicom:haptic3d:stepsize" value= "Q_stepsize"/>
                <SupplementaryDesctiptor schemeIdUri="urn:bicom:haptic3d:precision_of_positions" value= "001">
                <SubRepresentation id="101" subgroupSet="1">
                    :
                </SubRepresentation>           // AS MANY SubRepresensation STRUCTURES AS NUMBER OF subtrees ARE PRESENT
            </Representation>
        </AdaptationSet>
        <AdaptationSet mimeType="haptic/mp4" group="2">
            <SupplementaryDesctiptor schemeIdUri="urn:brdcst:codecType" value= "haptic_enc1"/>
            <Representation id="2" bandwidth="400000">
                <baseURL>haptic_wf2_400.mp4</BaseURL>
                <SupplementaryDesctiptor schemeIdUri="urn:bicom:haptic3d:posture:poleward" value= "gpscompliant"/>
                <SupplementaryDesctiptor schemeIdUri="urn:bicom:haptic3d:direction:vertical" value= "gravitational"/>
                <SupplementaryDesctiptor schemeIdUri="urn:bicom:haptic3d:topographicposition:x" value= "x_position"/>
                <SupplementaryDesctiptor schemeIdUri="urn:bicom:haptic3d:topographicposition:y" value= "y_position"/>
                <SupplementaryDesctiptor schemeIdUri="urn:bicom:haptic3d:topographicposition:z" value= "z_position"/>
                <SupplementaryDesctiptor schemeIdUri="urn:bicom:haptic3d:level" value= "5"/>
                <SupplementaryDesctiptor schemeIdUri="urn:bicom:haptic3d:organ_id" value= "2"/>    (= group_id = 2)
                <SupplementaryDesctiptor schemeIdUri="urn:bicom:haptic3d:qdeftype" value= "1"/>
                <SupplementaryDesctiptor schemeIdUri="urn:bicom:haptic3d:fixedqsteptype" value= "1"/>
                <SupplementaryDesctiptor schemeIdUri="urn:bicom:haptic3d:stepsize" value= "Q_stepsize"/>
                <SupplementaryDesctiptor schemeIdUri="urn:bicom:haptic3d:precision_of_positions" value= "001">
                <SubRepresentation id="201" subgroupSet="21">
                    :
                </SubRepresentation>           // AS MANY SubRepresensation STRUCTURES AS NUMBER OF subtrees ARE PRESENT
            </Representation>
        </AdaptationSet>
    </Period>
</MPD>
```

Fig. 55

EP 4 079 459 A1

```
<MPD>
    <Period>
        <AdaptationSet mimeType="haptic/mp4" group="1">
            <SupplementaryDesctiptor schemeIdUri="urn:brdcst:codecType" value= "haptic_enc1"/>
                <Representation id="2" bandwidth="400000">
                    <baseURL>haptic_wf2_400.mp4</BaseURL>
                    <SupplementaryDesctiptor schemeIdUri="urn:bicom:haptic3d:posture:poleward" value= "gpscompliant"/>
                    <SupplementaryDesctiptor schemeIdUri="urn:bicom:haptic3d:direction:vertical" value= "gravitational"/>
                    <SupplementaryDesctiptor schemeIdUri="urn:bicom:haptic3d:topographicposition:x" value= "x_position"/>
                    <SupplementaryDesctiptor schemeIdUri="urn:bicom:haptic3d:topographicposition:y" value= "y_position"/>
                    <SupplementaryDesctiptor schemeIdUri="urn:bicom:haptic3d:topographicposition:z" value= "z_position"/>
                    <SupplementaryDesctiptor schemeIdUri="urn:bicom:haptic3d:level" value= "2"/>
                    <SupplementaryDesctiptor schemeIdUri="urn:bicom:haptic3d:organ_id" value= "1"/>
                    <SupplementaryDesctiptor schemeIdUri="urn:bicom:haptic3d:qdeftype" value= "1"/>
                    <SupplementaryDesctiptor schemeIdUri="urn:bicom:haptic3d:fixedqsteptype" value= "1"/>
                    <SupplementaryDesctiptor schemeIdUri="urn:bicom:haptic3d:stepsize" value= "Q_stepsize" />
                    <SupplementaryDesctiptor schemeIdUri="urn:bicom:haptic3d:precision_of_positions" value= "001">
                    <SubRepresentation id="301" subgroupSet="1">
                        <SubPartRepresentation id="B11" subpartgroupSet="B1">
                            <SupplementaryDesctiptor schemeIdUri="urn:bicom:haptic3d:ptupsp" value= "ptB1"/>
                            <SupplementaryDesctiptor schemeIdUri="urn:bicom:haptic3d:ptposition " value= "ptB1positiondata"/>
                            <SupplementaryDesctiptor schemeIdUri="urn:bicom:haptic3d:ptforce" value= "ptB1forcedata"/>
                            <SupplementaryDesctiptor schemeIdUri="urn:bicom:haptic3d:qrhardness" value= "ptB1queryhardness"/>
                            <SupplementaryDesctiptor schemeIdUri="urn:bicom:haptic3d:qrfriction" value= "ptB1queryfriction"/>
                            <SupplementaryDesctiptor schemeIdUri="urn:bicom:haptic3d:qrtemp" value= "ptB1querytemperature"/>
                        </SubPartRepresentation>
                        <SubPartRepresentation id="B12" subpartgroupSet="B2">
                            <SupplementaryDesctiptor schemeIdUri="urn:bicom:haptic3d:ptupsp" value= "ptB2"/>
                            <SupplementaryDesctiptor schemeIdUri="urn:bicom:haptic3d:ptposition" value= "ptB2positiondata"/>
                            <SupplementaryDesctiptor schemeIdUri="urn:bicom:haptic3d:ptforce" value= "ptB2forcedata"/>
                            <SupplementaryDesctiptor schemeIdUri="urn:bicom:haptic3d:qrhardness" value= "ptB2queryhardness"/>
                            <SupplementaryDesctiptor schemeIdUri="urn:bicom:haptic3d:qrfriction" value= "ptB2queryfriction"/>
                            <SupplementaryDesctiptor schemeIdUri="urn:bicom:haptic3d:qrtemp" value= "ptB2querytemperature"/>
                        </SubPartRepresentation>
                    </SubRepresentation>
                </Representation>
            </AdaptationSet>
        </Period>
</MPD>
```

] INDICATES DATA
⊢ RETURN REQUEST
] TO REMOTE SIDE

] INDICATES DATA
⊢ RETURN REQUEST
] TO REMOTE SIDE

Fig. 56

EP 4 079 459 A1

```xml
<MPD>
    <Period>
        <AdaptationSet mimeType="haptic/mp4" group="11">
            <SupplementaryDesctiptor schemeIdUri="urn:brdcst:codecType" value= "haptic_enc1"/>
            <Representation id="2" bandwidth="400000">
                <baseURL>haptic_wf3_400.mp4</BaseURL>
                <SupplementaryDesctiptor schemeIdUri="urn:bicom:haptic3d:posture:poleward" value= "gpscompliant"/>
                <SupplementaryDesctiptor schemeIdUri="urn:bicom:haptic3d:direction:vertical" value= "gravitational"/>
                <SupplementaryDesctiptor schemeIdUri="urn:bicom:haptic3d:topographicposition:x" value= "x_position"/>
                <SupplementaryDesctiptor schemeIdUri="urn:bicom:haptic3d:topographicposition:y" value= "y_position"/>
                <SupplementaryDesctiptor schemeIdUri="urn:bicom:haptic3d:topographicposition:z" value= "z_position"/>
                <SupplementaryDesctiptor schemeIdUri="urn:bicom:haptic3d:level" value= "2"/>
                <SupplementaryDesctiptor schemeIdUri="urn:bicom:haptic3d:organ_id" value= "11"/>
                <SupplementaryDesctiptor schemeIdUri="urn:bicom:haptic3d:qdeftype" value= "1"/>
                <SupplementaryDesctiptor schemeIdUri="urn:bicom:haptic3d:fixedqsteptype" value= "1"/>
                <SupplementaryDesctiptor schemeIdUri="urn:bicom:haptic3d:stepsize" value= "Q_stepsize"/>
                <SupplementaryDesctiptor schemeIdUri="urn:bicom:haptic3d:precision_of_positions" value= "001">
                <SubRepresentation id="301" subgroupSet="1">
                    <SubPartRepresentation id="B11" subpartgroupSet="B1">
                        <SupplementaryDesctiptor schemeIdUri="urn:bicom:haptic3d:ptupsp" value= "ptB1"/>
                        <SupplementaryDesctiptor schemeIdUri="urn:bicom:haptic3d:ptposition" value= "ptB1positiondata"/>
                        <SupplementaryDesctiptor schemeIdUri="urn:bicom:haptic3d:pthardness" value= "ptB1hardness"/>
                        <SupplementaryDesctiptor schemeIdUri="urn:bicom:haptic3d:ptfriction" value= "ptB1friction"/>
                        <SupplementaryDesctiptor schemeIdUri="urn:bicom:haptic3d:pttemp" value= "ptB1temperature"/>
                    </SubPartRepresentation>
                    <SubPartRepresentation id="B12" subpartgroupSet="B2">
                        <SupplementaryDesctiptor schemeIdUri="urn:bicom:haptic3d:ptupsp" value= "ptB2"/>
                        <SupplementaryDesctiptor schemeIdUri="urn:bicom:haptic3d:ptposition" value= "ptB2positiondata"/>
                        <SupplementaryDesctiptor schemeIdUri="urn:bicom:haptic3d:pthardness" value= "ptB2hardness"/>
                        <SupplementaryDesctiptor schemeIdUri="urn:bicom:haptic3d:ptfriction" value= "ptB2friction"/>
                        <SupplementaryDesctiptor schemeIdUri="urn:bicom:haptic3d:pttemp" value= "ptB2temperature"/>
                    </SubPartRepresentation>
                </SubRepresentation>
            </Representation>
        </AdaptationSet>
    </Period>
</MPD>
```

INDICATES DETAILS OF DATA RETURN FROM REMOTE SIDE

INDICATES DETAILS OF DATA RETURN FROM REMOTE SIDE

Fig. 57

EP 4 079 459 A1

```
<MPD>
  <Period>
    <AdaptationSet mimeType="haptic/mp4" group="1">
      <SupplementaryDesctiptor schemeIdUri="urn:brdcst:codecType" value= "haptic_enc1"/>
      <Representation id="2" bandwidth="400000">
        <baseURL>haptic_wf2_400.mp4</BaseURL>
        <SupplementaryDesctiptor schemeIdUri="urn:bicom:haptic3d:posture:poleward" value= "gpscompliant"/>
        <SupplementaryDesctiptor schemeIdUri="urn:bicom:haptic3d:direction:vertical" value= "gravitational"/>
        <SupplementaryDesctiptor schemeIdUri="urn:bicom:haptic3d:topographicposition:x" value= "x_position"/>
        <SupplementaryDesctiptor schemeIdUri="urn:bicom:haptic3d:topographicposition:y" value= "y_position"/>
        <SupplementaryDesctiptor schemeIdUri="urn:bicom:haptic3d:topographicposition:z" value= "z_position"/>
        <SupplementaryDesctiptor schemeIdUri="urn:bicom:haptic3d:level" value= "2"/>
        <SupplementaryDesctiptor schemeIdUri="urn:bicom:haptic3d:organ_id" value= "1"/>
        <SupplementaryDesctiptor schemeIdUri="urn:bicom:haptic3d:qdeftype" value= "1"/>
        <SupplementaryDesctiptor schemeIdUri="urn:bicom:haptic3d:fixedqsteptype" value= "1"/>
        <SupplementaryDesctiptor schemeIdUri="urn:bicom:haptic3d:stepsize" value= "Q_stepsize" />
        <SupplementaryDesctiptor schemeIdUri="urn:bicom:haptic3d:precision_of_positions" value= "001">
        <SubRepresentation id="301" subgroupSet="1">
          <SubPartRepresentation id="B11" subpartgroupSet="B1">
            <SupplementaryDesctiptor schemeIdUri="urn:bicom:haptic3d:ptupsp" value= "ptB1"/>
            <SupplementaryDesctiptor schemeIdUri="urn:bicom:haptic3d:ptposition " value= "ptB1positiondata"/>
            <SupplementaryDesctiptor schemeIdUri="urn:bicom:haptic3d:ptforce" value= "ptB1forcedata"/>
            <SupplementaryDesctiptor schemeIdUri="urn:bicom:haptic3d:qrvibfreqency" value= "ptB1queryvibfrequency"/>   ⎤ INDICATES DATA
            <SupplementaryDesctiptor schemeIdUri="urn:bicom:haptic3d:qrvibamplitude" value= "ptB1queryvibamplitude"/>  ⎬ RETURN REQUEST
          </SubPartRepresentation>                                                                                     ⎦ TO REMOTE SIDE
          <SubPartRepresentation id="B12" subpartgroupSet="B2">
            <SupplementaryDesctiptor schemeIdUri="urn:bicom:haptic3d:ptupsp" value= "ptB2"/>
            <SupplementaryDesctiptor schemeIdUri="urn:bicom:haptic3d:ptposition" value= "ptB2positiondata"/>
            <SupplementaryDesctiptor schemeIdUri="urn:bicom:haptic3d:ptforce" value= "ptB2forcedata"/>
            <SupplementaryDesctiptor schemeIdUri="urn:bicom:haptic3d:qrvibfreqency" value= "ptB2queryvibfrequency"/>   ⎤ INDICATES DATA
            <SupplementaryDesctiptor schemeIdUri="urn:bicom:haptic3d:qrvibamplitude" value= "ptB2queryvibamplitude"/>  ⎬ RETURN REQUEST
          </SubPartRepresentation>                                                                                     ⎦ TO REMOTE SIDE
        </SubRepresentation>
      </Representation>
    </AdaptationSet>
  </Period>
</MPD>
```

Fig. 58

EP 4 079 459 A1

```
<MPD>
    <Period>
        <AdaptationSet mimeType="haptic/mp4" group="11">
            <SupplementaryDesctiptor schemeIdUri="urn:brdcst:codecType" value= "haptic_enc1"/>
            <Representation id="2" bandwidth="400000">
                <baseURL>haptic_wf3_400.mp4</BaseURL>
                <SupplementaryDesctiptor schemeIdUri="urn:bicom:haptic3d:posture:poleward" value= "gpscompliant"/>
                <SupplementaryDesctiptor schemeIdUri="urn:bicom:haptic3d:direction:vertical" value= "gravitational"/>
                <SupplementaryDesctiptor schemeIdUri="urn:bicom:haptic3d:topographicposition:x" value= "x_position"/>
                <SupplementaryDesctiptor schemeIdUri="urn:bicom:haptic3d:topographicposition:y" value= "y_position"/>
                <SupplementaryDesctiptor schemeIdUri="urn:bicom:haptic3d:topographicposition:z" value= "z_position"/>
                <SupplementaryDesctiptor schemeIdUri="urn:bicom:haptic3d:level" value= "2"/>
                <SupplementaryDesctiptor schemeIdUri="urn:bicom:haptic3d:organ_id" value= "11"/>
                <SupplementaryDesctiptor schemeIdUri="urn:bicom:haptic3d:qdeftype" value= "1"/>
                <SupplementaryDesctiptor schemeIdUri="urn:bicom:haptic3d:fixedqsteptype" value= "1"/>
                <SupplementaryDesctiptor schemeIdUri="urn:bicom:haptic3d:stepsize" value= "Q_stepsize"/>
                <SupplementaryDesctiptor schemeIdUri="urn:bicom:haptic3d:precision_of_positions" value= "001">
                <SubRepresentation id="301" subgroupSet="1">
                    <SubPartRepresentation id="B11" subpartgroupSet="B1">
                        <SupplementaryDesctiptor schemeIdUri="urn:bicom:haptic3d:ptupsp" value= "ptB1"/>
                        <SupplementaryDesctiptor schemeIdUri="urn:bicom:haptic3d:ptposition" value= "ptB1positiondata"/>
                        <SupplementaryDesctiptor schemeIdUri="urn:bicom:haptic3d:vibfreqency" value= "ptB1vibfrequency"/>
                        <SupplementaryDesctiptor schemeIdUri="urn:bicom:haptic3d:vibamplitude" value= "ptB1vibamplitude"/>
                    </SubPartRepresentation>
                    <SubPartRepresentation id="B12" subpartgroupSet="B2">
                        <SupplementaryDesctiptor schemeIdUri="urn:bicom:haptic3d:ptupsp" value= "ptB2"/>
                        <SupplementaryDesctiptor schemeIdUri="urn:bicom:haptic3d:ptposition" value= "ptB2positiondata"/>
                        <SupplementaryDesctiptor schemeIdUri="urn:bicom:haptic3d:vibfreqency" value= "ptB1vibfrequency"/>
                        <SupplementaryDesctiptor schemeIdUri="urn:bicom:haptic3d:vibamplitude" value= "ptB1vibamplitude"/>
                    </SubPartRepresentation>
                </SubRepresentation>
            </Representation>
        </AdaptationSet>
    </Period>
</MPD>
```

] RETURN FEEDBACK AS FREQUENCY OR AMPLITUDE VALUE

] RETURN FEEDBACK AS FREQUENCY OR AMPLITUDE VALUE

Fig. 59

```
"urn:bicom:haptic3d:posture:poleward" value= "gpscompliant"         SETTING OF ABSOLUTE COORDINATES  INDICATES WHETHER GPS STANDARD COORDINATES ARE USED
"urn:bicom:haptic3d:direction:vertical" value= "gravitational"       SETTING OF ABSOLUTE COORDINATES  INDICATE DEVIATION IN VERTICAL (GRAVITY) DIRECTION
"urn:bicom:haptic3d:topographicposition:x" value= "x_position"       x POSITION OF FULCRUM OF DEVICE IN ABSOLUTE COORDINATES (SHORT FLOATING POINT NUMBER)
"urn:bicom:haptic3d:topographicposition:y" value= "y_position"       y POSITION OF FULCRUM OF DEVICE IN ABSOLUTE COORDINATES (SHORT FLOATING POINT NUMBER)
"urn:bicom:haptic3d:topographicposition:z" value= "z_position"       z POSITION OF FULCRUM OF DEVICE IN ABSOLUTE COORDINATES (SHORT FLOATING POINT NUMBER)
"urn:bicom:haptic3d:level"                                           INDICATES NUMBER OF subgroupSets
"urn:bicom:haptic3d:organ_id"                                        GROUP IDENTIFICATION INFORMATION (group_id) ALLOCATED PER HAPTICS DEVICE
"urn:bicom:haptic3d:samplingfreq" value= "1k"                        SAMPLING FREQUENCY
"urn:bicom:haptic3d:subpartrep_ordering_type_interleaved" value="1"  INDICATES WHETHER JOINT POINTS IN GROUP ARE INTERLEAVED AT SAME TIME
"urn:bicom:haptic3d:qdeftype" value= "1"                             INDICATES THAT QUANTIZATION INFORMATION DEPENDS ON PARAMETER
"urn:bicom:haptic3d:fixedqsteptype" value= "1"                       QUANTIZATION INDICATES FIXED STEP SIZE
"urn:bicom:haptic3d:stepsize" value ="Q_stepsize"                    VALUE OF QUANTIZATION STEP SIZE
"urn:bicom:haptic3d:precision_of_positions" value= "001"             PRECISION OF POSITION INFORMATION VALUE (UNIT)
                                                                     000   1mm  PRECISION
                                                                     001   5mm  PRECISION
                                                                     010   10mm PRECISION
                                                                     011   50mm PRECISION
SubRepresentation id                                                 BRANCH GROUP ON subtree OF PART (JOINT POINT) IS INDICATED BY IDENTIFICATION INFORMATION ASSIGNED TO subgroupSet
SubPartRepresentation id                                             INDICATES IDENTIFICATION IN GROUP OF PARTS (JOINT POINTS) (=Art_id)
"urn:bicom:haptic3d:ptupsp"                                          INDICATES IDENTIFICATION INFORMATION OF UPPER PART TO WHICH PART (JOINT POINT) IS CONNECTED
"urn:bicom:haptic3d:ptposition" value= "ptA2position.x, ptA2position.y,
                                         ptA2position.z"             INDICATES PRECISION AT WHICH (Position.x, Position.y, Position.z)
                                                                        ARE SEQUENTIALLY DESIGNATED BY INITIAL VALUE OF POSITION INFORMATION OF PART (JOINT POINT)
"urn:bicom:haptic3d:ptrotacc" value= "ptA2rotacc.yaw, ptA2rotacc.pit,
                                       ptA2rotacc.rol"               INDICATES PRECISION AT WHICH (Racc.yaw, Racc.pitch, Racc.roll)
                                                                        ARE SEQUENTIALLY DESIGNATED BY INITIAL VALUE OF ROTATION INFORMATION OF PART (JOINT POINT)
"urn:bicom:haptic3d:ptforce" value= "ptB4forcedata"                 FORCE INFORMATION ASSIGNED TO PART (JOINT POINT) IN UNIT OF N (NEWTON)
                                                                     POSITIVE VALUE INDICATES DIRECTION IN WHICH PLAYER BECOMES FAR AWAY FROM JOINT POINT (PRESSING), AND NEGATIVE VALUE INDICATES DIRECTION IN WHICH PLAYER APPROACHES JOINT POINT (PULLING)
```

83

Fig. 60

```
"urn:bicom:haptic3d:qrhardness" value= "ptB1queryhardness"        REQUEST FOR FEEDBACK OF NUMERICAL VALUE INDICATING HARDNESS    "ptB1queryhardness" is indicated by 1
"urn:bicom:haptic3d:qrfriction" value= "ptB1queryfriction"        REQUEST FOR FEEDBACK OF NUMERICAL VALUE INDICATING COEFFICIENT OF FRICTION   "ptB1queryfriction" is indicated by 1
"urn:bicom:haptic3d:qrtemp" value= "ptB1querytemperature"         REQUEST FOR FEEDBACK OF NUMERICAL VALUE INDICATING TEMPERATURE  "ptB1querytemperature" is indicated by 1
"urn:bicom:haptic3d:qrvibfreqency" value= "ptB1queryvibfrequency" REQUEST FOR FEEDBACK OF VIBRATION FREQUENCY   "ptB1queryvibfrequency" is indicated by 1
"urn:bicom:haptic3d:qrvibamplitude" value= "ptB1queryrvibamplitude"  REQUEST FOR FEEDBACK OF AMPLITUDE OF VIBRATION   "ptB1queryvibamplitude" is indicated by 1

"urn:bicom:haptic3d:pthardness" value= "ptB1hardness"             NUMERICAL VALUE INDICATING HARDNESS
"urn:bicom:haptic3d:ptfriction" value= "ptB1friction"            COEFFICIENT OF FRICTION
"urn:bicom:haptic3d:pttemp" value= "ptB1temperature"            INDICATES TEMPERATURE IN ° C
"urn:bicom:haptic3d:vibfrequency" value= "ptB1vibfrequency"      INDICATES VIBRATION FREQUENCY
"urn:bicom:haptic3d:vibamplitude" value= "ptB1vibamplitude"      INDICATES AMPLITUDE OF VIBRATION
```

Fig. 61

Fig. 62

EP 4 079 459 A1

| Packet Byte | 7 | 6 | 5 | 4 | 3 | 2 | 1 | 0 |
|---|---|---|---|---|---|---|---|---|
| PB0 | Checksum | | | | | | | |
| PB1 | 24bits IEEE Registration Identifier (0x000C03) (least significant byte first) | | | | | | | |
| PB2 | | | | | | | | |
| PB3 | HDMI_data_format | | | Data_type | | | reserved | reserved |
| PB4 | KT_map_length | | | | | | | |
| PB5 | Upper most word of Topographic_position_X | | | | | | | |
| PB6 | Upper 2nd word of Topographic_position_X | | | | | | | |
| PB7 | Lower 2nd word of Topographic_position_X | | | | | | | |
| PB8 | Lower most word of Topographic_position_X | | | | | | | |
| PB9 | Upper most word of Topographic_position_Y | | | | | | | |
| PB10 | Upper 2nd word of Topographic_position_Y | | | | | | | |
| PB11 | Lower 2nd word of Topographic_position_Y | | | | | | | |
| PB12 | Lower most word of Topographic_position_Y | | | | | | | |
| PB13 | Upper most word of Topographic_position_Z | | | | | | | |
| PB14 | Upper 2nd word of Topographic_position_Z | | | | | | | |
| PB15 | Lower 2nd word of Topographic_position_Z | | | | | | | |
| PB16 | Lower most word of Topographic_position_Z | | | | | | | |
| PB17 | Upper word of posture_poleward | | | | | | | |
| PB18 | Lower word of posture_poleward | | | | | | | |
| PB19 | Upper word of vertical_direction | | | | | | | |
| PB20 | Lower word of vertical_direction | | | | | | | |

Fig. 63

EP 4 079 459 A1

| Packet Byte | 7 | 6 | 5 | 4 | 3 | 2 | 1 | 0 |
|---|---|---|---|---|---|---|---|---|
| PB21 | Number_of_groups '1' | | | | | | | |
| PB22 | Organ_id | | | | | | | |
| PB23 | level '6' | | | | Order_type '00' (=interleaved) | | | |
| PB24 | Precision_of_position '001' | | | | Data_size '000' (=8bits) | | Sampling_freq | |
| PB25 | Number_of_Articulation_points_in_subgroup1 '1' | | | | Number_of_Articulation_points_in_subgroup2 '3' | | | |
| PB26 | Number_of_Articulation_points_in_subgroup3 '4' | | | | Number_of_Articulation_points_in_subgroup4 '4' | | | |
| PB27 | Number_of_Articulation_points_in_subgroup5 '4' | | | | Number_of_Articulation_points_in_subgroup6 '4' | | | |
| PB28 | Subgroup_id '1' | | | | Art_id 'A1' | | | |
| PB29 | upsp 'A1' | | | | Elements_combination_in_artpoint '0000' | | | |
| PB30 | Subgroup_id '2' | | | | Art_id 'A2' | | | |
| PB31 | upsp 'A1' | | | | Elements_combination_in_artpoint '0001' | | | |
| PB32 | Subgroup_id '2' | | | | Art_id 'A3' | | | |
| PB33 | upsp 'A2' | | | | Elements_combination_in_artpoint '0001' | | | |
| PB34 | Subgroup_id '2' | | | | Art_id 'B1' | | | |
| PB35 | upsp 'A3' | | | | Elements_combination_in_artpoint '0010' | | | |
| | | | | | | | | |
| | | | | | | | | |
| | | | | | | | | |
| | | | | | | | | |
| | | | | | | | | |
| | | | | | | | | |

WHEN THERE ARE TWO OR MORE GROUPS, ELEMENTS OF GROUP 2 ARE REFLECTED AFTER GROUP 1

HERE, EACH DATA ELEMENT IS REPRESENTED IN 8 BITS FOR EFFICIENT REPRESENTATION

HEREINAFTER, SUBGROUPS SUBSEQUENT TO subgroup3 ARE REFLECTED IN SAME MANNER

Fig. 64

EP 4 079 459 A1

| HDMI_data_format (3bits) | '111' | INDICATE non-video |
|---|---|---|
| Data_type (3bits) | '100' | HAPTIC DATA |
| KT_map_length (8bits) | | INDICATES SIZE OF KT MAP (BYTE UNIT) |
| Number_of_groups (8bits) | | INDICATES NUMBER OF GROUPS |
| Organ_id (8bits) | | GROUP IDENTIFICATION INFORMATION |
| Level (4bits) | | INDICATES NUMBER OF SUBGROUPS |
| Order_type (2bits) | | INDICATES KIND OF ARRANGEMENT OF DATA |
| | '00' | interleaved |
| Precision_of_position (3bits) | | INDICATES PRECISION (UNIT) OF POSITION DATA |
| | '000' | 1 mm IN UNIT |
| | '001' | 5 mm IN UNIT |
| Data_size (3bits) | | INDICATES DATA REPRESENTATION |
| | '000' | 8bits per samle |
| | '001' | 16bits per sample |
| | '010' | 32bits per sample |
| Sampling_freq (2bits) | | INDICATES SAMPLING FREQUENCY |
| | '00' | 1KHz |
| | '01' | 4KHz |
| number_of_articulation_points_in_subgroup (4bits) | | NUMBER OF JOINT POINTS IN SUBGROUP, WHICH IS LOOPED BY LEVEL VALUE |
| Elements_combination_in_artpoint (4bits) | | CONSTITUENT ELEMENTS OF ARTICULATION POINT, WHICH IS LOOPED BY NUMBER OF ARTICULATION POINTS |
| | '0000' | ONLY POSITION |
| | '0001' | position, rotation |
| | '0010' | position, force |
| | '0011' | position, rotation, force |
| | '0100' | position, force, stiffness |
| | '0101' | position, friction |
| | '0110' | position, temperature |
| | '0111' | position, friction, temperature |

Fig. 65

EP 4 079 459 A1

| Packet Byte | 7 | 6 | 5 | 4 | 3 | 2 | 1 | 0 |
|---|---|---|---|---|---|---|---|---|
| PB_N | Upper word of Data_element_total_length | | | | | | | |
| PB_N+1 | Lower word of Data_element_total_length | | | | | | | |
| PB_N+2 | A1 position X | | | | | | | |
| PB_N+3 | A1 position Y | | | | | | | |
| PB_N+4 | A1 position Z | | | | | | | |
| PB_N+5 | A2 position X | | | | | | | |
| PB_N+6 | A2 position Y | | | | | | | |
| PB_N+7 | A2 position Z | | | | | | | |
| PB_N+8 | A2 rot_acc_yaw | | | | | | | |
| PB_N+9 | A2 rot_acc_pitch | | | | | | | |
| PB_N+10 | A2 rot_acc_roll | | | | | | | |
| PB_N+11 | A3 position X | | | | | | | |
| PB_N+12 | A3 position Y | | | | | | | |
| PB_N+13 | A3 position Z | | | | | | | |
| PB_N+14 | A3 rot_acc_yaw | | | | | | | |
| PB_N+15 | A3 rot_acc_pitch | | | | | | | |
| PB_N+16 | A3 rot_acc_roll | | | | | | | |
| PB_N+17 | B1 position X | | | | | | | |
| PB_N+18 | B1 position Y | | | | | | | |
| PB_N+19 | B1 position Z | | | | | | | |
| PB_N+20 | B1 force | | | | | | | |
| PB_N+21 | | | | | | | | |
| PB_N+22 | | | | | | | | |

HEREINAFTER, SUBGROUPS SUBSEQUENT TO subgroup3 ARE REFLECTED IN SAME MANNER

Fig. 66

EP 4 079 459 A1

| International application No. |
| --- |
| PCT/JP2020/044985 |

**A. CLASSIFICATION OF SUBJECT MATTER**
Int. Cl. B25J3/00(2006.01)i, B25J13/02(2006.01)i, H04Q9/00(2006.01)i,
G06F3/01(2006.01)i
FI: G06F3/01 560, H04Q9/00 301B, B25J13/02, B25J3/00 A
According to International Patent Classification (IPC) or to both national classification and IPC

**B. FIELDS SEARCHED**

Minimum documentation searched (classification system followed by classification symbols)
Int. Cl. B25J3/00, B25J13/02, H04Q9/00, G06F3/01

Documentation searched other than minimum documentation to the extent that such documents are included in the fields searched
Published examined utility model applications of Japan       1922-1996
Published unexamined utility model applications of Japan     1971-2021
Registered utility model specifications of Japan             1996-2021
Published registered utility model applications of Japan     1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2019-063951 A (OKAMURA KK) 25 April 2019, paragraphs [0013]-[0039], fig. 1-4 | 1-20 |
| Y | JP 2019-198939 A (TELEXISTENCE INC.) 21 November 2019, paragraphs [0015]-[0021], fig. 1, 2 | 1-20 |
| A | WO 2019/224994 A1 (MELTIN MMI CO., LTD.) 28 November 2019, entire text, all drawings | 1-20 |
| A | JP 2005-014166 A (JAPAN SCIENCE AND TECHNOLOGY AGENCY) 20 January 2005, entire text, all drawings | 1-20 |
| A | JP 06-134687 A (MITSUBISHI HEAVY INDUSTRIES, LTD.) 17 May 1994, entire text, all drawings | 1-20 |

☐ Further documents are listed in the continuation of Box C.　☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21.01.2021 | 02.02.2021 |

| Name and mailing address of the ISA/ Japan Patent Office 3-4-3, Kasumigaseki, Chiyoda-ku, Tokyo 100-8915, Japan | Authorized officer |
| --- | --- |
| | Telephone No. |

Form PCT/ISA/210 (second sheet) (January 2015)

**INTERNATIONAL SEARCH REPORT**
Information on patent family members

| International application No. |
|---|
| PCT/JP2020/044985 |

| Patent Documents referred to in the Report | Publication Date | Patent Family | Publication Date |
|---|---|---|---|
| JP 2019-063951 A | 25.04.2019 | (Family: none) | |
| JP 2019-198939 A | 21.11.2019 | (Family: none) | |
| WO 2019/224994 A1 | 28.11.2019 | (Family: none) | |
| JP 2005-014166 A | 20.01.2005 | (Family: none) | |
| JP 06-134687 A | 17.05.1994 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Definition and Representation of Haptic-Tactile Essence For Broadcast Production Applications. *SMPTE ST2100-1,* 2017

- **P. HINTERSEER ; S. HIRCHE ; S. CHAUDHURI ; E. STEINBACH ; M. BUSS.** Perception-based data reduction and transmission of haptic data in telepresence and teleaction systems. *IEEE Transactions on Signal Processing*